(19) Europäisches Patentamt European Patent Office Office européen des brevets

(11) **EP 4 542 909 A1**

(12) **EUROPEAN PATENT APPLICATION**
published in accordance with Art. 153(4) EPC

(43) Date of publication:
**23.04.2025 Bulletin 2025/17**

(21) Application number: **23838751.8**

(22) Date of filing: **30.06.2023**

(51) International Patent Classification (IPC):
**H04L 5/00** (2006.01)

(52) Cooperative Patent Classification (CPC):
**H04L 5/00; H04W 56/00**

(86) International application number:
**PCT/CN2023/104587**

(87) International publication number:
**WO 2024/012259 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.07.2022 CN 202210834563**

(71) Applicant: **Huawei Technologies Co., Ltd.**
**Shenzhen, Guangdong 518129 (CN)**

(72) Inventors:
• **ZHOU, Zhengchun**
**Chengdu, Sichuan 611756 (CN)**
• **YE, Zhifan**
**Chengdu, Sichuan 611756 (CN)**
• **LIU, Chenchen**
**Shenzhen, Guangdong 518129 (CN)**
• **QIAN, Bin**
**Shenzhen, Guangdong 518129 (CN)**
• **TANG, Xiaohu**
**Chengdu, Sichuan 611756 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57) Embodiments of this application are applied to a wireless local area network system that supports 802.11 series protocols, for example, a next-generation Wi-Fi protocol of IEEE 802.11ax, such as 802.11be, Wi-Fi 7, or EHT, or for another example, a next-generation protocol of 802.11be or Wi-Fi 8, and may be further applied to an ultra-wideband UWB-based wireless personal area network system or a sensing (sensing) system. Embodiments of this application provide a communication method and apparatus. The method includes: generating a synchronization header field based on a sequence set, where the sequence set includes at least one of the following sequences: a sequence with a length of 127, a sequence with a length of 31, a sequence with a length of 91, or a sequence with a length of 64; and sending the synchronization header field.

400

| Transmit-end device | | | Receive-end device |
| --- | --- | --- | --- |

S410: Generate a synchronization header field based on a sequence set

S420: Synchronization header field

S430: Perform correlation detection based on the sequence set and the synchronization header field

FIG. 4

**EP 4 542 909 A1**

**Description**

This application claims priority to Chinese Patent Application No. 202210834563.5, filed with the China National Intellectual Property Administration on July 14, 2022 and entitled "COMMUNICATION METHOD AND APPARATUS", which is incorporated herein by reference in its entirety.

**TECHNICAL FIELD**

Embodiments of this application relate to the communication field, and more specifically, to a communication method and apparatus.

**BACKGROUND**

An ultra-wideband (ultra-wideband, UWB) technology is a wireless carrier communication technology in which data is transmitted through a nanosecond-level non-sinusoidal narrow pulse. In the UWB technology, data is transmitted through a narrow pulse, and radiation spectrum density is low. Therefore, the UWB technology has advantages such as a high multi-path resolution capacity, low power consumption, and high confidentiality. Communication by using the UWB technology has become one of popular physical layer technologies in a short-range and high-speed wireless network.

In the UWB technology, data is transmitted through sending and receiving of a nanosecond-level ultra-narrow pulse or an ultra-narrow pulse whose pulse time is less than a nanosecond. Therefore, synchronization between a receive end and a transmit end is critical in the UWB technology. Synchronization between the receive end and the transmit end is implemented by using a synchronization header field, and the synchronization header field is generated based on a sequence. Therefore, a characteristic of the sequence affects synchronization between the receive end and the transmit end, and further affects communication performance of a system.

**SUMMARY**

Embodiments of this application provide a communication method and apparatus, to improve communication performance of a system by using a sequence with better performance.

According to a first aspect, a communication method is provided. The method may be performed by a communication device, or may be performed by a component (for example, a chip or a circuit) of a communication device. This is not limited. For ease of description, an example in which the method is performed by a transmit-end device is used below for description.

The method includes: generating a synchronization header field based on a sequence set, where the sequence set includes at least one of the following sequences: a sequence with a length of 127, a sequence with a length of 31, a sequence with a length of 91, or a sequence with a length of 64; and sending the synchronization header field.

According to the foregoing technical solution, the sequence set may include sequences with different lengths, to meet requirements in different scenarios. To be specific, the transmit-end device may select, according to a requirement, sequences with different lengths to generate a synchronization header field, and send the synchronization header field. This can improve transmission performance, communication performance, and the like of a system. Correspondingly, after receiving the synchronization header field, a receive-end device may perform correlation detection based on the sequence set and the synchronization header field, to implement synchronization between the receive-end device and the transmit-end device.

With reference to the first aspect, in some implementations of the first aspect, the sequence set includes the sequence with a length of 127, and the sequence with a length of 127 includes at least one of a sequence $\vec{C}_1$ to a sequence $\vec{C}_8$, where

$\overline{C}_1$ = {0, 0, 1, 0, 0, -1, -1, -1, 0, 0, -1, 0, -1, -1, 0, 0, 0, -1, 0, 1, 0, 0, 0, 1, -1, 0, 0, 0, 1, 0, -1, 0, -1, -1, 0, 0, 0, 0, 0, -1, 0, 1, -1, -1, 0, 0, 0, 0, -1, 0, 0, -1, 0, 0, -1, 1, 1, 1, 1, -1, 1, -1, 1, 1, -1, 0, 1, 0, -1, 0, 1, 1, 1, 0, -1, 0, 0, 1, 1, 0, 0, 0, -1, -1,0, -1, 1, -1, 1, 0, 1, 0, 0, -1, -1, 0, 0, -1, 0, -1, 1, 0, 1, 0, 0, 0, 0, -1, 0, 0, -1, 1, -1, 0, 0, 0, -1, 0, 1, 1, -1, -1, 1, 0, 0, 0, 1};

$\overline{C}_2$, = {-1, 0, 0, 0, 0, -1, -1, -1, 0, 0, 0, 1, 0, 1, 0, 0, 1, -1, 0, 0, 0, 0, 0, 0, 1, -1, 0, 1, 0, 1, -1, -1, 0, -1, 0, 0, 1, 0, 1, 0, -1, 0, 1, -1, 0, -1, 1, -1, 0, 0, -1, 0, 0, 0, 0, 1, 0, 0, 0, 1, 0, 0, -1, 0, 0, 1, 1, -1, 1, 0, 1, 0, -1, 0, 0, 0, 0, 0, -1, 0, 1, 1, 1, -1, 0, 0, -1, 1, 1, 0, -1, 1, -1, -1, -1, -1, -1, 0, -1, -1, 0, 0, -1, 0, -1, 1, 0, 0, 0, 1, -1, 0, 0, -1, -1, 0, 1, 1, 0, -1, 0, 0, 0, -1, 1, 1, -1};

$\overline{C}_3$, = {-1, 0, 1, -1, -1, 0, 0, -1, 1, -1, 0, 0, 0, -1, 1, 0, 1, 1, 0, 0, -1, -1, 0, 0, 0, 0, 0, 1, 0, 0, 0, -1, 1, -1, 1, -1, 0, 1, 0, 0, 1, 1, 0, -1, 0, 0, 0, 1, 0, -1, -1, -1, 1, 0, 1, -1, 0, 1, -1, -1, 0, -1, 1, -1, -1, -1, -1, -1, 0, 0, 0, -1, 0, 1, 0, -1, -1, 0, 0, 0, 1, 0, 0, -1, -1, 1, -1, 0, 0, 1, 0, 1, 0, 0, 1, 0, 0, -1, 0, -1, -1, 0, -1, 0, 1, 0, -1, 0, 0, 0, 0, 0, 1, 1, 0, 0, 1, 0, 0, 0, 0, -1, 1, 1, 0};

$\overline{C}_4$, = {1, -1, 1, 0, 0, -1, 0, -1, 0, -1, 1, 1, 0, 0, 1, 1, 0, 1, 0, 0, 0, -1, 0, 0, -1, -1, 1, 1, 0, 0, 0, 1, 0, 1, 0, 0, 0, 0, -1, 1, 0, 0, 0, 0, 0, -1, 0, 0, 0, 0, 0, -1, 1, 1, -1, 1, -1, -1, 0, 1, 0, -1, 0, -1, 0, 0, -1, 1, 0, 0, -1, -1, -1, 0, 1, -1, -1, 0, 1, 0, 0, -1, 0, 1, -1, 0, 0, 0, -1, -1, 0, -1, -1, -1, 1, --> 0, 1, 1, 0, -1, 0, -1, 1, 0, 1, 1, 0, 0, 1, 0, 0, -1, 0, 0, 0, 1, -1, -1, 0, 0, 0, 0, -1, 0, -1, -1};

$\overline{C}_5$ = {1, 0, 0, 0, 0, -1, 0, 0, 0, 1, 0, 0, 1, 1, 1, 0, -1, 1, -1, -1, 0, -1, 0, 0, 0, 1, -1, 0, 0, -1, -1, 0, 1, 0, 0, 1, -1, 0, 0, 0, 1, -1, 1, 0, 0, -1, 0, 1, 0, 1, 0, 1, -1, -1, 0, 1, 0, -1, 0, 0, 1, 0, 0, -1, 0, -1, 1, 1, 1, -1, 1, -1, 0, 0, -1, -1, 1, -1, -1, 0, -1, -1, 0, -1, -1, -1, 0, 0, 0, 0, 0, 0, 1, 0, -1, 0, 0, 0, 0, 1, -1, 0, -1, -1, 0, 0, 1, 0, 0, 0, 0, 0, 1, 1, -1, -1, 0, 0, 0, -1, 0, -1, 1, 0, -1, 0, 1};

$\overline{C}_6$, = {-1, 0, 0, 1, -1, -1, -1, -1, -1, 1, 0, 1, -1, 0, -1, 0, 1, 0, 0, 0, 0, 0, -1, 1, 0, 1, -1, -1, 1, 1, 0, 0, 0, 0, 0, -1, 0, -1, 1, 0, 0, 0, 0, 1, 0, 0, 0, 0, -1, 1, 1, 0, 1, 0, 0, 0, 1, -1, 0, 0, 0, 1, 0, 0, 1, -1, -1, 0, 0, -1, 0, -1, 0, 0, 1, 1, 0, -1, 0, 0, 1, 0, -1, 1, -1, -1, 0, -1, 0, -1, -1, -1, 0, -1, -1, 1, 0, 0, 0, 1, 1,-1, 1, 0, 0, -1, -1, 0, 0, 1, 0, 0, 1, 0, 0, 0, -1, 0, 1, 0, -1, 0, -1, -1, 0, 1};

$\overline{C}_7$ = {-1, -1, 0, 1, -1, 0, 0, -1, 1, 0, 0, 0, 0, 0, 0, 1, 0, 0, 0, 1, 1, 1, 1, -1, 0, -1, 0, 0, -1, 1, 0, -1, 0, 0, 0, 1, 0, 1, 1, -1, -1, 0, 1, -1, 0, 1, 1, -1, 0, -1, 1, -1, -1, -1, -1, -1, 0, 0, 0, 0, 1, 0, -1, 0, -1, 1, 0, 0, 0, -1, 0, 0, -1, -1, -1, 1, 0, 0, 1, 0, -1, 0, 0, -1, 0, 0, -1, 0, 1, -1, 0, -1, 0, -1, 0, 1, 0, 0, 0, 0, 0, 1, 1, 0, 0, -1, 0, 0, 0, 0, 1, -1, 1, 0, 1, 0, 1, -1, -1, 0, 0, 1, -1, -1, 0, 0, 0}; and

$\overline{C}_8$, = {-1, -1, 0, 0, 1, 1, 0, 1, -1, 0, 1, 0, -1, 1, -1, -1, -1, 0, 0, 0, 0, -1, 0, -1, 0, -1, -1, 0, 0, 0, -1, 0, 0, -1, -1, 1, -1, 0, 0, 0, 0, 1, 0, 0, -1, 1, 0, 1, 0, -1, -1, 0, -1, 0, 1, 1, -1, 0, 0, -1, 0, -1, 0, 0, 0, 0, 1, 0, 0, -1, 0, 1, -1, 0, 1, 1, 0, 0, 1, -1, 0, 0, -1, -1, -1, 0, 0, 0, -1, 1, 0, 0, 1, 0, 1, 1, -1, 0, 0, 1, 0, -1, -1, 0, 0, 0, -1, 1, 0, 1, 0, -1, 0, -1, 0, 0, 1, 0, 0, 1, 0, 1, -1, 0, 0, 1, 1}.

For example, a minimum value of periodic peak sidelobe ratios of the sequence $\overrightarrow{C}_1$ to the sequence $\overrightarrow{C}_8$, at a preset carrier frequency offset is greater than a first preset value.

The preset carrier frequency offset may be 40 ppm. The first preset value may be a minimum value of a periodic peak sidelobe ratio of an Ipatov sequence with a length of 127 at the preset carrier frequency offset, or the first preset value may be a value greater than the minimum value of the periodic peak sidelobe ratio of the Ipatov sequence with a length of 127 at the preset carrier frequency offset.

According to the foregoing technical solution, because the minimum value of the periodic peak sidelobe ratios of the sequence $\overrightarrow{C}_1$ to the sequence $\overrightarrow{C}_8$ at the preset carrier frequency offset is greater than the first preset value, anti-frequency-offset characteristics of the sequence $\overrightarrow{C}_1$ to the sequence $\overrightarrow{C}_8$ are good. Therefore, when the transmit-end device generates a synchronization header field based on one of the sequence $\overrightarrow{C}_1$ to the sequence $\overrightarrow{C}_8$, and sends the synchronization header field, transmission performance and communication performance of the system can be improved. For example, even if a large frequency offset occurs between carriers, after receiving the synchronization header field generated based on one of the sequence $\overrightarrow{C}_1$ to the sequence $\overrightarrow{C}_8$, the receive-end device may also perform correlation detection on the sequence among the sequence $\overrightarrow{C}_1$ to the sequence $\overrightarrow{C}_8$, and the synchronization header field, to implement synchronization between the receive-end device and the transmit-end device.

With reference to the first aspect, in some implementations of the first aspect, the sequence set includes the sequence with a length of 31, and the sequence with a length of 31 includes at least one of a sequence $\overrightarrow{C}_9$ and a sequence $\overrightarrow{C}_{10}$, where

$\overline{C}_9$ = {0, -1, 0, 0, 0, 0, 0, 0, 1, 0, 0, 1, -1, 0, -1, 0, 1, -1, 1, 1, 1, 1, -1, 1, 1, 1, 1, 0, -1, 0, 0, 0};

and

$\overline{C}_{10}$ = {-1, 0, 1, 0, 0, 1, 0, -1, 1, -1, 0, -1, 1, 1, -1, -1, -1, -1, 0, -1, 0, 0, 0, 0, 0, 1, 0, 0, -1, 0, 0}.

For example, aperiodic peak sidelobe ratios of the sequence $\overrightarrow{C}_9$ and the sequence $\overrightarrow{C}_{10}$ at the preset carrier frequency offset are greater than a second preset value.

The second preset value may be a maximum value of an aperiodic peak sidelobe ratio of an Ipatov sequence with a length of 31 at the preset carrier frequency offset, or the second preset value may be a value greater than the maximum value of the aperiodic peak sidelobe ratio of the Ipatov sequence with a length of 31 at the preset carrier frequency offset.

According to the foregoing technical solution, because the aperiodic peak sidelobe ratios of the sequence $\vec{C}_9$ and the sequence $\vec{C}_{10}$ at the preset carrier frequency offset are greater than the second preset value, anti-Doppler characteristics of the sequence $\vec{C}_9$ and the sequence $\vec{C}_{10}$ are good. Therefore, when the transmit-end device generates a synchronization header field based on one of the sequence $\vec{C}_9$ and the sequence $\vec{C}_{10}$ and sends the synchronization header field, transmission performance and communication performance of the system can be improved. For example, even if a large frequency offset occurs between carriers, after receiving the synchronization header field generated based on the sequence $\vec{C}_9$ or the sequence $\vec{C}_{10}$, the receive-end device may also perform correlation detection on the sequence $\vec{C}_9$ or the sequence $\vec{C}_{10}$ and the synchronization header field, to implement synchronization between the receive-end device and the transmit-end device.

With reference to the first aspect, in some implementations of the first aspect, the sequence set includes the sequence with a length of 91, and the sequence with a length of 91 **includes** at least one of a sequence $\vec{C}_{11}$ and a sequence $\vec{C}_{12}$, where

$\vec{C}_{11}$ = {-1, -1, 1, -1, 1, -1, 1, 0, -1, 0, 0, -1, 1, 1, -1, 1, 1, 1, 0, -1, 1, 1, -1, 0, 0, -1, -1, 1, 1, -1, -1, 1, 1, -1, 1, -1, -1, -1, 1, 1, -1, 1, 1, 1, 1, -1, -1, -1, 1, -1, -1, 1, -1, 1, -1, -1, 1, -1, 0, 1, 1, 1, 1, -1, 1, -1, 1, 1, -1, -1, -1, 1, 1, 1, 1, 1, -1, 0, 1, 1, 1, 0, -1, 1, 0, 1, -1, -1};

and

$\overline{C}_{12}$ = {-1, -1, -1, 1, -1, -1, 0, -1, 1, -1, 1, 1, -1, -1, 1, -1, -1, 1, -1, 1, 0, -1, -1, 1, -1, -1, 0, 1, -1, -1, 1, 0, -1, -1, -1, -1, 1, 0, 1, 1, 1, 1, -1, -1, -1, 0, -1, -1, 1, -1, -1, 1, -1, 1, -1, 1, 1, 1, -1, 0, -1, 1, 1, 1, -1, -1, 1, 1, 1, 1, 0, 1, -1, 1, 0, 1, 1, 1, -1, -1, 1, -1, -1, -1, -1, 0, -1, -1, -1, 1, -1}.

For example, aperiodic peak sidelobe ratios of the sequence $\vec{C}_{11}$ and the sequence $\vec{C}_{12}$ at the preset carrier frequency offset are greater than a third preset value.

The third preset value may be a maximum value of an aperiodic peak sidelobe ratio of an Ipatov sequence with a length of 91 at the preset carrier frequency offset, or the third preset value may be a value greater than the maximum value of the aperiodic peak sidelobe ratio of the Ipatov sequence with a length of 91 at the preset carrier frequency offset.

According to the foregoing technical solution, because the aperiodic peak sidelobe ratios of the sequence $\vec{C}_{11}$ and the sequence $\vec{C}_{12}$ at the preset carrier frequency offset are greater than the third preset value, anti-Doppler characteristics of the sequence $\vec{C}_{11}$ and the sequence $\vec{C}_{12}$ are good. Therefore, when the transmit-end device generates a synchronization header field based on one of the sequence $\vec{C}_{11}$ and the sequence $\vec{C}_{12}$ and sends the synchronization header field, transmission performance and communication performance of the system can be improved. For example, even if a large frequency offset occurs between carriers, after receiving the synchronization header field generated based on the sequence $\vec{C}_{11}$ or the sequence $\vec{C}_{12}$, the receive-end device may also perform correlation detection on the sequence $\vec{C}_{11}$ or the sequence $\vec{C}_{12}$ and the synchronization header field, to implement synchronization between the receive-end device and the transmit-end device.

With reference to the first aspect, in some implementations of the first aspect, the sequence set includes a sequence $\vec{C}_{13}$ with a length of 127, and $\vec{C}_{13}$ = {0, 0, 0, 0, 0, -1, -1, 0, 0, -1, -1, -1, -1, 0, 0, 1, 0, 1, 1, -1, -1, 0, 0, 0, -1, 0, 0, 0, 0, 0, 0, 0, 1, 0, -1, 0, 0, 1, 0, 0, 0, -1, -1, 1, 0, 1, -1, 0, 0, 1, -1, 1, -1, -1, 1, 1, 1, 0, 1, 0, -1, 1, 0, 0, 1, 0, 0, 0, 0, 0, 1, 0, 1, -1, 1, -1, 1, 0, 0, 0, 1, 0, 0, 0, -1, 1, -1, -1, 0, 1, 1, 0, 0, -1, 0, -1, -1, 0, -1, -1, 1, 0, -1, 0, 0, 0, 1, 0, 1, 1, 1, 0, -1, 1, 1, 1, -1, 0, 0, -1, 0, -1, 0, 0, -1, 0, 0}.

For example, an aperiodic peak sidelobe ratio of the sequence $\vec{C}_{13}$ at the preset carrier frequency offset is greater than a fourth preset value.

The fourth preset value may be a maximum value of an aperiodic peak sidelobe ratio of an Ipatov sequence with a length of 127 at the preset carrier frequency offset, or the fourth preset value may be a value greater than the maximum value of the aperiodic peak sidelobe ratio of the Ipatov sequence with a length of 127 at the preset carrier frequency offset.

According to the foregoing technical solution, because the aperiodic peak sidelobe ratio of the sequence $\vec{C}_{13}$ at the preset carrier frequency offset is greater than the fourth preset value, an anti-Doppler characteristic of the sequence $\vec{C}_{13}$ is good. Therefore, when the transmit-end device generates a synchronization header field based on the sequence $\vec{C}_{13}$ and sends the synchronization header field, transmission performance and communication performance of the system can be improved. For example, even if a large frequency offset occurs between carriers, after receiving the synchronization header field generated based on the sequence $\vec{C}_{13}$, the receive-end device may also perform correlation detection on the sequence $\vec{C}_{13}$ and the synchronization header field, to implement synchronization between the receive-end device and the transmit-end device.

With reference to the first aspect, in some implementations of the first aspect, the sequence set includes the sequence with a length of 31, the sequence with a length of 91, and the sequence with a length of 127, the sequence with a length of 31 includes the sequence $\vec{C}_9$ and the sequence $\vec{C}_{10}$, the sequence with a length of 91 includes the sequence $\vec{C}_{11}$ and the sequence $\vec{C}_{12}$, and the sequence with a length of 127 includes the sequence $\vec{C}_{13}$.

With reference to the first aspect, in some implementations of the first aspect, the sequence set includes a sequence $\vec{C}_{14}$ with a length of 64, and $\vec{C}_{14}$ = {1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1}.

For example, a length of a zero correlation zone of the sequence $\vec{C}_{14}$ is greater than or equal to a fifth preset value.

According to the foregoing technical solution, because the length of the zero correlation zone of the sequence $\vec{C}_{14}$ is greater than or equal to the fifth preset value, the sequence $\vec{C}_{14}$ has a good local correlation characteristic and anti-frequency-offset characteristic. Therefore, when the transmit-end device generates a synchronization header field based on the sequence $\vec{C}_{14}$ and sends the synchronization header field, transmission performance and communication performance of the system can be improved. For example, the receive-end device implements synchronization between the receive-end device and the transmit-end device based on the sequence $\vec{C}_{14}$ and the synchronization header field generated based on the sequence $\vec{C}_{14}$, and a false alarm problem caused by a device is avoided.

In addition, because the sequence $\vec{C}_{14}$ is a binary sequence, structures of the transmit-end device and the receive-end device can be further simplified.

It should be noted that the sequence set may include one or more of the sequence $\vec{C}_1$ to the sequence $\vec{C}_{14}$. This is not limited in embodiments of this application.

With reference to the first aspect, in some implementations of the first aspect, the sending the synchronization header field includes: sending a physical layer protocol data unit (physical protocol data unit, PPDU) based on UWB, where the PPDU includes the synchronization header field.

For example, the PPDU is a PPDU used for ranging or a PPDU used for sensing.

According to the foregoing technical solution, a sequence included in the sequence set has at least one of the following characteristics: a good anti-frequency-offset characteristic, a good anti-Doppler characteristic, a good aperiodic autocorrelation characteristic, or a large length of a zero correlation zone. Therefore, if the synchronization header field generated based on the sequence set is included in the PPDU and the PPDU is a PPDU used for ranging or sensing, performance of ranging or sensing performed based on the PPDU is not affected by a change in a transmission environment of the PPDU. For example, if a sequence used to generate the synchronization header field has a good anti-frequency-offset characteristic, even in a transmission environment with a large carrier offset, performance of ranging or sensing performed based on the PPDU is not greatly affected by the carrier frequency offset. For another example, if a sequence used to generate the header field has a zero correlation zone with a large length, the PPDU including the synchronization header field has a longer detection distance and a larger delay tolerance range, to ensure performance of ranging or sensing performed based on the PPDU and avoid a false alarm problem caused by a device.

According to a second aspect, a communication method is provided. The method may be performed by a communication device, or may be performed by a component (for example, a chip or a circuit) of a communication device. This is not limited. For ease of description, an example in which the method is performed by a receive-end device is used below for description.

The method includes: receiving a synchronization header field; and performing correlation detection based on a sequence set and the synchronization header field, where the sequence set includes at least one of the following sequences: a sequence with a length of 127, a sequence with a length of 31, a sequence with a length of 91, or a sequence with a length of 64.

For beneficial effect of any one of the second aspect or possible implementations of the second aspect, refer to the first aspect.

With reference to the second aspect, in some implementations of the second aspect, the sequence set includes the sequence with a length of 127, and the sequence with a length of 127 includes at least one of a sequence $\vec{C}_1$ to a sequence $\vec{C}_8$, where

$\overline{C}_1$ = {0, 0, 1, 0, 0, -1, -1, -1, 0, 0, -1, 0, -1, -1, 0, 0, 0, -1, 0, 1, 0, 0, 0, 1, -1, 0, 0, 0, 1, 0, -1, 0, -1, -1, 0, 0, 0, 0, 0, -1, 0, 1, -1, -1, 0, 0, 0, 0, -1, 0, 0, -1, 0, 0, -1, 1, 1, 1, 1, -1, 1, -1, 1, 1, -1, 0, 1, 0, -1, 0, 1, 1, 1, 0, -1, 0, 0, 1, 1, 0, 0, 0, -1, -1, 0, -1, 1, -1, 1, 0, 1, 0, 0, -1, -1, 0, 0, -1, 0, -1, 1, 0, 1, 0, 0, 0, 0, -1, 0, 0, -1, 1, -1, 0, 0, 0, -1, 0, 1, 1, -1, -1, 1, 0, 0, 0, 1};

$\overline{C}_8$, = {-1, 0, 0, 0, 0, -1, -1, -1, 0, 0, 0, 1, 0, 1, 0, 0, 1, -1, 0, 0, 0, 0, 0, 0, 1, -1, 0, 1, 0, 1, -1, -1, 0, -1, 0, 0, 1, 0, 1, 0, -1, 0, 1, -1, 0, -1, 1, -1, 0, 0, -1, 0, 0, 0, 0, 1, 0, 0, 0, 1, 0, 0, -1, 0, 0, 1, 1, -1, 1, 0, 1, 0, -1, 0, 0, 0, 0, 0, -1, 0, 1, 1, 1, -1, 0, 0, -1, 1, 1, 0, -1, 1, -1, -1, -1, -1, -1, 0, -1, -1, 0, 0, -1, 0, -1, 1, 0, 0, 0, 1, -1, 0, 0, -1, -1, 0, 1, 1, 0, -1, 0, 0, 0, -1, 1, 1, -1};

$\overline{C}_8$, = {-1, 0, 1, -1, -1, 0, 0, -1, 1, -1, 0, 0, 0, -1, 1, 0, 1, 1, 0, 0, -1, -1, 0, 0, 0, 0, 0, 1, 0, 0, 0, -1, 1, -1, 1, -1, 0, 1, 0, 0, 1, 1, 0, -1, 0, 0, 0, 1, 0, -1, -1, -1, 1, 0, 1, -1, 0, 1, -1, -1, 0, -1, 1, -1, -1, -1, -1, -1, 0, 0, 0, -1, 0, 1, 0, -1, -1, 0, 0, 0, 1, 0, 0, -1, -1, 1, -1, 0, 0, 1, 0, 1, 0, 0, 1, 0, 0, -1, 0, -1, -1, 0, -1, 0, 1, 0, -1, 0, 0, 0, 0, 0, 1, 1, 0, 0, 1, 0, 0, 0, 0, -1, 1, 1, 0};

$\overline{C}_8$, = {1, -1, 1, 0, 0, -1, 0, -1, 0, -1, 1, 1, 0, 0, 1, 1, 0, 1, 0, 0, 0, -1, 0, 0, -1, -1, 1, 1, 0, 0, 0, 1, 0, 1, 0, 0, 0, 0, -1, 1, 0, 0, 0, 0, 0, -1, 0, 0, 0, 0, 0, -1, 1, 1, -1, 1, -1, -1, 0, 1, 0, -1, 0, -1, 0, 0, -1, 1, 0, 0, -1, -1, -1, 0, 1, -1, -1, 0, 1, 0, 0, -1, 0, 1, -1, 0, 0, 0, -1, -1, 0, -1, -1, -1, 1, 0, 1, 1, 0, -1, 0, -1, 1, 0, 1, 1, 0, 0, 1, 0, 0, -1, 0, 0, 0, 1, -1, -1, 0, 0, 0, 0, -1, 0, -1, -1};

$\overline{C}_5$ = {1, 0, 0, 0, 0, -1, 0, 0, 0, 1, 0, 0, 1, 1, 1, 0, -1, 1, -1, -1, 0, -1, 0, 0, 0, 1, -1, 0, 0, -1, -1, 0, 1, 0, 0, 1, -1, 0, 0, 0, 1, -1, 1, 0, 0, -1, 0, 1, 0, 1, 0, 1, -1, -1, 0, 1, 0, -1, 0, 0, 1, 0, 0, -1, 0, -1, 1, 1, 1, -1, 1, -1, 0, 0, -1, -1, 1, -1, -1, 0, -1, -1, 0, -1, -1, -1, 0, 0, 0, 0, 0, 1, 0, -1, 0, 0, 0, 0, 1, -1, 0, -1, -1, 0, 0, 1, 0, 0, 0, 0, 0, 1, 1, -1, -1, 0, 0, 0, -1, 0, -1, 1, 0, -1, 0, 1};

$\overline{C}_8$, = {-1, 0, 0, 1, -1, -1, -1, -1, -1, 1, 0, 1, -1, 0, -1, 0, 1, 0, 0, 0, 0, 0, 0, -1, 1, 0, 1, -1, -1, 1, 1, 0, 0, 0, 0, 0, -1, 0, -1, 1, 0, 0, 0, 0, 1, 0, 0, 0, 0, -1, 1, 1, 0, 1, 0, 0, 0, 1, -1, 0, 0, 0, 1, 0, 0, 1, -1, -1, 0, 0, -1, 0, -1, 0, 0, 1, 1, 0, -1, 0, 0, 1, 0, -1, 1, -1, -1, 0, -1, 0, -1, -1, -1, 0, -1, --> -1, 1, 0, 0, 0, 1, 1, -1, 1, 0, 0, -1, -1, 0, 0, 1, 0, 0, 1, 0, 0, 0, -1, 0, 1, 0, -1, 0, -1, -1, 0, 1};

$\overline{C}_7$ = {-1, -1, 0, 1, -1, 0, 0, -1, 1, 0, 0, 0, 0, 0, 0, 1, 0, 0, 0, 1, 1, 1, 1, -1, 0, -1, 0, 0, -1, 1, 0, -1, 0, 0, 0, 1, 0, 1, 1, -1, -1, 0, 1, -1, 0, 1, 1, -1, 0, -1, 1, -1, -1, -1, -1, -1, 0, 0, 0, 0, 1, 0, -1, 0, -1, 1, 0, 0, 0, -1, 0, 0, -1, -1, -1, 1, 0, 0, 1, 0, -1, 0, 0, -1, 0, 0, -1, 0, 1, -1, 0, -1, 0, -1, 0, 1, 0, 0, 0, 0, 0, 1, 1, 0, 0, -1, 0, 0, 0, 0, 1, -1, 1, 0, 1, 0, 1, -1, -1, 0, 0, 1, -1, -1, 0, 0, 0};

and

$\overline{C}_8$, = {-1, -1, 0, 0, 1, 1, 0, 1, -1, 0, 1, 0, -1, 1, -1, -1, -1, 0, 0, 0, 0, -1, 0, -1, 0, -1, -1, 0, 0, 0, -1, 0, 0, -1, -1, 1, -1, 0, 0, 0, 0, 1, 0, 0, -1, 1, 0, 1, 0, -1, -1, 0, -1, 0, 1, 1, -1, 0, 0, -1, 0, -1, 0, 0, 0, 0, 1, 0, 0, -1, 0, 1, -1, 0, 1, 1, 0, 0, 1, -1, 0, 0, -1, -1, -1, 0, 0, 0, -1, 1, 0, 0, 1, 0, 1, 1, -1, 0, 0, 1, 0, -1, -1, 0, 0, 0, -1, 1, 0, 1, 0, -1, 0, -1, 0, 0, 1, 0, 0, 1, 0, 1, -1, 0, 0, 1, 1}.

For example, a minimum value of periodic peak sidelobe ratios of the sequence $\vec{C}_1$ to the sequence $\vec{C}_8$, at a preset carrier frequency offset is greater than a first preset value.

With reference to the second aspect, in some implementations of the second aspect, the sequence set includes the sequence with a length of 31, and the sequence with a length of 31 includes at least one of a sequence $\vec{C}_9$ and a sequence $\vec{C}_{10}$, where

$\overline{C}_9$ = {0, -1, 0, 0, 0, 0, 0, 0, 1, 0, 0, 1, -1, 0, -1, 0, 1, -1, 1, 1, 1, -1, 1, 1, 1, 1, 0, -1, 0, 0, 0}; and

$\overline{C}_{10}$ = {-1, 0, 1, 0, 0, 1, 0, -1, 1, -1, 0, -1, 1, 1, -1, -1, -1, -1, 0, -1, 0, 0, 0, 0, 0, 1, 0, 0, -1, 0, 0}.

For example, aperiodic peak sidelobe ratios of the sequence $\vec{C}_9$ and the sequence $\vec{C}_{10}$ at the preset carrier frequency offset are greater than a second preset value.

With reference to the second aspect, in some implementations of the second aspect, the sequence set includes the sequence with a length of 91, and the sequence with a length of 91 includes at least one of a sequence $\vec{C}_{11}$ and a sequence $\vec{C}_{12}$, where

$\overline{C}_{11}$ = {-1, -1, 1, -1, 1, -1, 1, 0, -1, 0, 0, -1, 1, 1, -1, 1, 1, 1, 1, 0, -1, 1, 1, -1, 0, 0, -1, -1, 1, 1, -1, -1, 1, 1, -1, 1, -1, -1, -1, 1, 1, -1, 1, 1, 1, 1, -1, -1, -1, 1, -1, -1, 1, -1, 1, -1, -1, 1, -1, 0, 1, 1, 1, 1, -1, 1, -1, 1, 1, 1, -1, -1, -1, 1, 1, 1, 1, 1, 1, -1, 0, 1, 1, 1, 0, -1, 1, 0, 1, -1, -1};

and

$\overline{C}_{12}$ = {-1, -1, -1, 1, -1, -1, 0, -1, 1, -1, 1, 1, -1, -1, 1, -1, -1, 1, -1, 1, 0, -1, -1, 1, -1, -1, 0, 1, -1, -1, 1, 0, -1, -1, -1, -1, 1, 0, 1, 1, 1, 1, -1, -1, -1, 0, -1, -1, 1, -1, -1, 1, -1, 1, -1, 1, 1, 1, -1, 0, -1, 1, 1, 1, -1, -1, 1, 1, 1, 1, 0, 1, -1, 1, 0, 1, 1, 1, -1, -1, 1, -1, -1, -1, -1, 0, -1, -1, -1, 1, 1}.

For example, aperiodic peak sidelobe ratios of the sequence $\vec{C}_{11}$ and the sequence $\vec{C}_{12}$ at the preset carrier frequency offset are greater than a third preset value.

With reference to the second aspect, in some implementations of the second aspect, the sequence set includes a sequence $\vec{C}_{13}$ with a length of 127, and $\vec{C}_{13}$ = {0, 0, 0, 0, 0, -1, -1, 0, 0, -1, -1, -1, -1, 0, 0, 1, 0, 1, 1, -1, -1, 0, 0, 0, -1, 0, 0, 0, 0, 0, 0, 0, 1, 0, -1, 0, 0, 1, 0, 0, 0, -1, -1, 1, 0, 1, -1, 0, 0, 1, -1, 1, -1, -1, 1, 1, 1, 0, 1, 0, -1, 1, 0, 0, 1, 0, 0, 0, 0, 0, 1, 0, 1, -1, 1, -1, 1, 0, 0, 0, 1, 0, 0, 0, -1, 1, -1, -1, 0, 1, 1, 0, 0, -1, 0, -1, -1, 0, -1, -1, 1, 0, -1, 0, 0, 0, 1, 0, 1, 1, 1, 0, -1, 1, 1, 1, -1, 0, 0, -1, 0, -1, 0, 0, -1, 0, 0}.

For example, an aperiodic peak sidelobe ratio of the sequence $\vec{C}_{13}$ at the preset carrier frequency offset is greater than a fourth preset value.

With reference to the second aspect, in some implementations of the second aspect, the sequence set includes the sequence with a length of 31, the sequence with a length of 91, and the sequence with a length of 127, the sequence with a length of 31 includes the sequence $\vec{C}_9$ and the sequence $\vec{C}_{10}$, the sequence with a length of 91 includes the sequence $\vec{C}_{11}$ and the sequence $\vec{C}_{12}$, and the sequence with a length of 127 includes the sequence $\vec{C}_{13}$.

With reference to the second aspect, in some implementations of the second aspect, the sequence set includes a sequence $\vec{C}_{14}$ with a length of 64, and $\vec{C}_{14}$ = {1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1}.

For example, a length of a zero correlation zone of the sequence $\vec{C}_{14}$ is greater than or equal to a fifth preset value.

It should be noted that the sequence set may include one or more of the sequence $\vec{C}_1$ to the sequence $\vec{C}_{14}$. This is not limited in embodiments of this application.

With reference to the second aspect, in some implementations of the second aspect, the receiving a synchronization header field includes: receiving a PPDU based on UWB, where the PPDU includes the synchronization header field.

According to a third aspect, a communication method is provided. The method may be performed by a communication device, or may be performed by a component (for example, a chip or a circuit) of a communication device. This is not limited. For ease of description, an example in which the method is performed by a transmit-end device is used below for description.

The method includes: generating a synchronization header field based on a first sequence in a first sequence set, where each sequence in the first sequence set is obtained by shifting and/or sampling a sequence in a second sequence set, and the first sequence set and the second sequence set meet one or more of the following relationships: a minimum value of M periodic peak sidelobe ratios of the first sequence set at a preset carrier frequency offset is greater than a minimum value of N periodic peak sidelobe ratios of the second sequence set at the preset carrier frequency offset, and an average value of the M periodic peak sidelobe ratios is greater than an average value of the N periodic peak sidelobe ratios, where the M periodic peak sidelobe ratios are in a one-to-one correspondence with M sequences included in the first sequence set, and the N periodic peak sidelobe ratios are in a one-to-one correspondence with N sequences included in the second sequence set; and sending a PPDU, where the PPDU includes the synchronization header field.

According to the foregoing technical solution, because the first sequence set and the second sequence set meet one or more of the foregoing relationships, a sequence in the first sequence set has a better anti-frequency-offset characteristic than a sequence in the second sequence set, and even if a large frequency offset occurs between carriers, a periodic peak sidelobe ratio of the first sequence in the first sequence set is also high. Therefore, after the transmit-end device generates the synchronization header field based on the first sequence and sends the PPDU including the synchronization header field, a probability that a receive-end device performs false detection on the PPDU is low, so that system performance can be improved. For example, when the PPDU is a PPDU used for ranging or sensing, performance of ranging or sensing performed by the receive-end device based on the PPDU is not greatly affected by a carrier frequency offset.

With reference to the third aspect, in some implementations of the third aspect, the first sequence set and the second sequence set further meet one or more of the following relationships: A maximum value of crosscorrelation values of the first sequence set is less than a maximum value of crosscorrelation values of the second sequence set, and an average value of the crosscorrelation values of the first sequence set is less than an average value of the crosscorrelation values of the second sequence set.

According to the foregoing technical solution, if the first sequence set and the second sequence set further meet one or more of the foregoing relationships, a sequence in the first sequence set has better anti-interference performance than a sequence in the second sequence set. When the transmit-end device generates the synchronization header field based on the first sequence in the first sequence set and generates another synchronization header field based on a second sequence in the first sequence set, and when the transmit-end device simultaneously sends, in one channel, a first PPDU including the synchronization header field generated based on the first sequence and a second PPDU including a second synchronization header field generated based on the second sequence, a crosscorrelation value between the second sequence and the first sequence is small. Therefore, interference between the first PPDU and the second PPDU is small, so that transmission performance can be improved.

With reference to the third aspect, in some implementations of the third aspect, the first sequence set is the same as a third sequence set, or the first sequence set is a subset of the third sequence set, each sequence in the third sequence set is obtained by shifting and/or sampling a sequence in the second sequence set, and the third sequence set and the second sequence set meet one or more of the following relationships: A minimum value of L periodic peak sidelobe ratios of the third sequence set at the preset carrier frequency offset is greater than the minimum value of the N periodic peak sidelobe ratios, and an average value of the L periodic peak sidelobe ratios is greater than the average value of the N periodic peak sidelobe ratios, where the L periodic peak sidelobe ratios are in a one-to-one correspondence with L sequences included in the third sequence set.

With reference to the third aspect, in some implementations of the third aspect, the first sequence set is obtained by searching the third sequence set through dynamic programming and/or pruning.

With reference to the third aspect, in some implementations of the third aspect, the first sequence set includes four sequences or eight sequences.

According to a fourth aspect, a communication method is provided. The method may be performed by a communication device, or may be performed by a component (for example, a chip or a circuit) of a communication device. This is not limited. For ease of description, an example in which the method is performed by a receive-end device is used below for description.

The method may include: receiving a PPDU, where the PPDU includes a synchronization header field; and performing correlation detection based on a first sequence in a first sequence set and the synchronization header field, where each sequence in the first sequence set is obtained by shifting and/or sampling a sequence in a second sequence set, and the first sequence set and the second sequence set meet one or more of the following relationships: a minimum value of M periodic peak sidelobe ratios of the first sequence set at a preset carrier frequency offset is greater than a minimum value of N periodic peak sidelobe ratios of the second sequence set at the preset carrier frequency offset, and an average value of the M periodic peak sidelobe ratios is greater than an average value of the N periodic peak sidelobe ratios, where the M periodic peak sidelobe ratios are in a one-to-one correspondence with M sequences included in the first sequence set, and the N periodic peak sidelobe ratios are in a one-to-one correspondence with N sequences included in the second sequence set.

For beneficial effect of any one of the fourth aspect or possible implementations of the fourth aspect, refer to the third aspect.

With reference to the fourth aspect, in some implementations of the fourth aspect, the first sequence set and the second sequence set further meet one or more of the following relationships: A maximum value of crosscorrelation values of the first sequence set is less than a maximum value of crosscorrelation values of the second sequence set, and an average value of the crosscorrelation values of the first sequence set is less than an average value of the crosscorrelation values of the second sequence set.

With reference to the fourth aspect, in some implementations of the fourth aspect, the first sequence set is the same as a third sequence set, or the first sequence set is a subset of the third sequence set, each sequence in the third sequence set is obtained by shifting and/or sampling a sequence in the second sequence set, and the third sequence set and the second sequence set meet the following relationships: A minimum value of L periodic peak sidelobe ratios of the third sequence set at the preset carrier frequency offset is greater than the minimum value of the N periodic peak sidelobe ratios, and an average value of the L periodic peak sidelobe ratios is greater than the average value of the N periodic peak sidelobe ratios, where the L periodic peak sidelobe ratios are in a one-to-one correspondence with L sequences included in the third sequence set.

With reference to the fourth aspect, in some implementations of the fourth aspect, the first sequence set is obtained by searching the third sequence set through dynamic programming and/or pruning.

With reference to the fourth aspect, in some implementations of the fourth aspect, the first sequence set includes four sequences or eight sequences.

According to a fifth aspect, a communication method is provided. The method may be performed by a communication device, or may be performed by a component (for example, a chip or a circuit) of a communication device. This is not limited. For ease of description, an example in which the method is performed by a transmit-end device is used below for description.

The method may include: generating a synchronization header field based on a first sequence in a first sequence set, where the first sequence set and a second sequence set meet one or more of the following relationships: A minimum value of M aperiodic peak sidelobe ratios of the first sequence set at a preset carrier frequency offset is greater than a minimum value of N aperiodic peak sidelobe ratios of the second sequence set at the preset carrier frequency offset, and an average value of the M aperiodic peak sidelobe ratios is greater than an average value of the N aperiodic peak sidelobe ratios, where the M aperiodic peak sidelobe ratios are in a one-to-one correspondence with M sequences included in the first sequence set, and the N aperiodic peak sidelobe ratios are in a one-to-one correspondence with N sequences included in the second sequence set; and sending a PPDU, where the PPDU includes the synchronization header field.

According to the foregoing technical solution, because the first sequence set and the second sequence set meet one or more of the foregoing relationships, a sequence in the first sequence set has a better anti-Doppler characteristic than a sequence in the second sequence set, and even if a large frequency offset occurs between carriers, an aperiodic peak sidelobe ratio of the first sequence in the first sequence set is also high. Therefore, after the transmit-end device generates the synchronization header field based on the first sequence and sends the PPDU including the synchronization header field, a probability that a receive-end device performs false detection on the PPDU is low, so that system performance can be improved. For example, when the PPDU is a PPDU used for ranging or sensing, performance of ranging or sensing performed by the receive-end device based on the PPDU is not greatly affected by a carrier frequency offset.

With reference to the fifth aspect, in some implementations of the fifth aspect, the first sequence set is obtained through searching by using a genetic algorithm and/or a coordinate descent algorithm.

For example, the coordinate descent algorithm includes bit flipping, and/or a mutation in the genetic algorithm includes bit flipping.

According to a sixth aspect, a communication method is provided. The method may be performed by a communication device, or may be performed by a component (for example, a chip or a circuit) of a communication device. This is not limited. For ease of description, an example in which the method is performed by a receive-end device is used below for description.

The method may include: receiving a PPDU, where the PPDU includes a synchronization header field; and performing correlation detection based on a first sequence in a first sequence set and the synchronization header field, where the first sequence set and a second sequence set meet one or more of the following relationships: a minimum value of M aperiodic peak sidelobe ratios of the first sequence set at a preset carrier frequency offset is greater than a minimum value of N aperiodic peak sidelobe ratios of the second sequence set at the preset carrier frequency offset, and an average value of the M aperiodic peak sidelobe ratios is greater than an average value of the N aperiodic peak sidelobe ratios, where the M aperiodic peak sidelobe ratios are in a one-to-one correspondence with M sequences included in the first sequence set, and the N aperiodic peak sidelobe ratios are in a one-to-one correspondence with N sequences included in the second sequence set.

For beneficial effect of any one of the sixth aspect or possible implementations of the sixth aspect, refer to the fifth aspect.

With reference to the sixth aspect, in some implementations of the sixth aspect, the first sequence set is obtained through searching by using a genetic algorithm and/or a coordinate descent algorithm.

For example, the coordinate descent algorithm includes bit flipping, and/or a mutation in the genetic algorithm includes bit flipping.

According to a seventh aspect, a communication method is provided. The method may be performed by a communication device, or may be performed by a component (for example, a chip or a circuit) of a communication device. This is not limited. For ease of description, an example in which the method is performed by a transmit-end device is used below for description.

The method may include: generating a synchronization header field based on a first sequence, where the first sequence is a sequence with a largest zero correlation zone in a sequence set G that meets the following formula:

$$G = \left\{ f + \frac{q}{2} \sum_{\alpha=1}^{k} d_\alpha x_{\pi_\alpha(m_\alpha)}, d_\alpha \in Z_2 \right\} \qquad f = \frac{q}{2} \sum_{\alpha=1}^{k} \sum_{\beta=1}^{m_{\alpha-1}} x_{\pi_\alpha(\beta)} x_{\pi_\alpha(\beta+1)} + \sum_{i=1}^{m} c_i x_i + c_0$$

, where , $q$ is an even number, $m$ is an integer, $m \geq 2$, $k \leq m$-1, $l_1, l_2, \cdots, l_k$ are obtained by dividing a set $\{ 1, 2, ..., m\}$, $\pi_a$ is a bijection from $\{1, 2, \cdots, m_\alpha\}$ to $l_\alpha$, $m_\alpha = |l_\alpha| \geq 1, \alpha = 2, \cdots, k$, $m_1 = |l_1| \geq 2$, $c_i \in Z_q$, $i = 0, 1, \cdots m$-1, $c_m \in \left\{ 0, \frac{q}{2} \right\}$, and $\pi_\alpha(1) = m - \alpha + 1, \alpha = 1, 2, \cdots, k$; and sending a PPDU, where the PPDU includes the synchronization header field.

According to the foregoing technical solution, because the first sequence is a sequence having a zero correlation zone with a largest length in the sequence set, the first sequence has a better local correlation characteristic and anti-frequency-offset characteristic. This can improve system transmission performance, ensure that a receive-end device implements synchronization between the receive-end device and the transmit-end device based on the first sequence and the synchronization header field, and avoid a false alarm problem caused by a device.

According to an eighth aspect, a communication method is provided. The method may be performed by a communication device, or may be performed by a component (for example, a chip or a circuit) of a communication device. This is not limited. For ease of description, an example in which the method is performed by a receive-end device is used below for description.

The method may include: receiving a synchronization header field; performing correlation detection based on a first sequence and the synchronization header field, where the first sequence is a sequence with a largest zero correlation

$$G = \left\{ f + \frac{q}{2} \sum_{\alpha=1}^{k} d_\alpha x_{\pi_\alpha(m_\alpha)}, d_\alpha \in Z_2 \right\}$$

zone in a sequence set G that meets the following formula: , where

$$f = \frac{q}{2} \sum_{\alpha=1}^{k} \sum_{\beta=1}^{m_{\alpha-1}} x_{\pi_\alpha(\beta)} x_{\pi_\alpha(\beta+1)} + \sum_{i=1}^{m} c_i x_i + c_0$$

, $q$ is an even number, $m$ is an integer, $m \geq 2$, $k \leq m\text{-}1$, $l_1, l_2, \cdots, l_k$ are obtained by dividing a set $\{1, 2, ..., m\}$, $\pi_a$ is a bijection from $\{1, 2, \cdots, m_\alpha\}$ to $l_\alpha$, $m_\alpha = |l_\alpha| \geq 1, \alpha=2,\cdots,k$, $m_1=|l_1|\geq 2$, $c_i \in Z_q$, $i = $

$$c_m \in \left\{ 0, \frac{q}{2} \right\}$$

$0,1,\cdots1,m\text{-}1$, , and $\pi_\alpha(1)=m\text{-}\alpha+1,\alpha=1, 2,\cdots,k$ ; and sending a PPDU, where the PPDU includes the synchronization header field.

For beneficial effect of the eighth aspect, refer to the seventh aspect.

According to a ninth aspect, a communication method is provided. The method may be performed by a communication device, or may be performed by a component (for example, a chip or a circuit) of a communication device. This is not limited. For ease of description, an example in which the method is performed by a transmit-end device is used below for description.

The method includes: generating a synchronization header field based on a first sequence in a first sequence set, where a minimum value of M periodic peak sidelobe ratios of the first sequence set at a preset carrier frequency offset is greater than a preset value, and the M periodic peak sidelobe ratios are in a one-to-one correspondence with M sequences included in the first sequence set; and sending the synchronization header field.

According to the foregoing technical solution, because a minimum value of periodic peak sidelobe ratios of the first sequence set at the preset carrier frequency offset is greater than the preset value, anti-frequency-offset characteristics of sequences in the first sequence set are good. Therefore, when the transmit-end device generates the synchronization header field based on the first sequence and sends the synchronization header field, transmission performance and communication performance of a system can be improved. For example, even if a large frequency offset occurs between carriers, after receiving the synchronization header field generated based on the first sequence, a receive-end device may also perform correlation detection on the first sequence and the synchronization header field, to implement synchronization between the receive-end device and the transmit-end device.

According to a tenth aspect, a communication method is provided. The method may be performed by a communication device, or may be performed by a component (for example, a chip or a circuit) of a communication device. This is not limited. For ease of description, an example in which the method is performed by a receive-end device is used below for description.

The method includes: receiving a synchronization header field; performing correlation detection based on a first sequence in a first sequence set and the synchronization header field, where a minimum value of M periodic peak sidelobe ratios of the first sequence set at a preset carrier frequency offset is greater than a preset value, and the M periodic peak sidelobe ratios are in a one-to-one correspondence with M sequences included in the first sequence set; and sending the synchronization header field.

For beneficial effect of the tenth aspect, refer to the ninth aspect.

According to an eleventh aspect, a communication method is provided. The method may be performed by a communication device, or may be performed by a component (for example, a chip or a circuit) of a communication device. This is not limited. For ease of description, an example in which the method is performed by a transmit-end device is used below for description.

The method includes: generating a synchronization header field based on a first sequence in a first sequence set, where a minimum value of M aperiodic peak sidelobe ratios of the first sequence set at a preset carrier frequency offset is greater than a preset value, and the M aperiodic peak sidelobe ratios are in a one-to-one correspondence with M sequences included in the first sequence set; and sending the synchronization header field.

According to the foregoing technical solution, because a minimum value of aperiodic peak sidelobe ratios of the first sequence set at the preset carrier frequency offset is greater than the preset value, anti-Doppler characteristics of sequences in the first sequence set are good. Therefore, when the transmit-end device generates the synchronization header field based on the first sequence and sends the synchronization header field, transmission performance and communication performance of a system can be improved. For example, even if a large frequency offset occurs between carriers, after receiving the synchronization header field generated based on the first sequence, a receive-end device may also perform correlation detection on the first sequence and the synchronization header field, to implement synchronization between the receive-end device and the transmit-end device.

According to a twelfth aspect, a communication method is provided. The method may be performed by a communication device, or may be performed by a component (for example, a chip or a circuit) of a communication device. This is not limited. For ease of description, an example in which the method is performed by a receive-end device is used below for description.

The method includes: receiving a synchronization header field; performing correlation detection based on a first sequence in a first sequence set and the synchronization header field, where a minimum value of M aperiodic peak sidelobe ratios of the first sequence set at a preset carrier frequency offset is greater than a preset value, and the M aperiodic peak sidelobe ratios are in a one-to-one correspondence with M sequences included in the first sequence set; and sending the synchronization header field.

For beneficial effect of the twelfth aspect, refer to the eleventh aspect.

According to a thirteenth aspect, an apparatus is provided. The apparatus is configured to perform the method according to any one of the first aspect to the twelfth aspect. Specifically, the apparatus may include a unit and/or a module configured to perform any one of the first aspect or the implementations of the first aspect, or include a unit and/or a module configured to perform the method according to any one of the second aspect or the implementations of the second aspect, or include a unit and/or a module configured to perform the method according to any one of the third aspect or the implementations of the third aspect, or include a unit and/or a module configured to perform the method according to any one of the fourth aspect or the implementations of the fourth aspect, or include a unit and/or a module configured to perform the method according to any one of the fifth aspect or the implementations of the fifth aspect, or include a unit and/or a module configured to perform the method according to any one of the sixth aspect or the implementations of the sixth aspect, or include a unit and/or a module configured to perform the method according to the seventh aspect, or include a unit and/or a module configured to perform the method according to the eighth aspect, or include a unit and/or a module configured to perform the method according to the ninth aspect, or include a unit and/or a module configured to perform the method according to the tenth aspect, or include a unit and/or a module configured to perform the method according to the eleventh aspect, or include a unit and/or a module configured to perform the method according to the twelfth aspect, for example, a processing unit and/or a transceiver unit.

In an implementation, the apparatus is a device (for example, a transmit-end device or a receive-end device). When the apparatus is a device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a device (for example, a transmit-end device or a receive-end device). When the apparatus is a chip, a chip system, or a circuit used in a device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a fourteenth aspect, an apparatus is provided. The apparatus includes: a memory, configured to store a program; and at least one processor, configured to execute a computer program or instructions stored in the memory, to perform the method according to any one of the first aspect to the twelfth aspect.

In an implementation, the apparatus is a device (for example, a transmit-end device or a receive-end device).

In another implementation, the apparatus is a chip, a chip system, or a circuit used in a device (for example, a transmit-end device or a receive-end device).

According to a fifteenth aspect, this application provides a processor, configured to perform the methods according to the foregoing aspects.

Sending, obtaining/receiving, and other operations related to the processor may be understood as output, receiving/input, and other operations performed by the processor, or sending and receiving operations performed by a radio frequency circuit and an antenna, unless otherwise specified or the operations conflict with actual functions or internal logic of the operations in related descriptions. This is not limited in this application.

According to a sixteenth aspect, a computer-readable storage medium is provided. The computer-readable medium stores program code to be executed by a device. When the program code is run on a computer, the method according to any one of the first aspect to the twelfth aspect is performed.

According to a seventeenth aspect, a computer program product including instructions is provided. When the computer program product is run on a computer, the computer is enabled to perform the method according to any one of the first aspect to the twelfth aspect.

According to an eighteenth aspect, a chip is provided. The chip includes a processor and a communication interface. The processor reads, through the communication interface, instructions stored in a memory, to perform the method according to any one of the first aspect to the twelfth aspect.

Optionally, in an implementation, the chip further includes a memory. The memory stores a computer program or instructions. The processor is configured to execute the computer program or instructions stored in the memory. When the computer program or instructions are executed, the processor is configured to perform the method according to any one of the first aspect to the twelfth aspect.

According to a nineteenth aspect, a communication system is provided, including the transmit-end device and the receive-end device in the foregoing descriptions.

**BRIEF DESCRIPTION OF DRAWINGS**

FIG. 1 is a diagram of two application scenarios according to this application;

FIG. 2 is a diagram of a structure of a PPDU to which embodiments of this application are applicable;

FIG. 3 is a diagram of a periodic autocorrelation function of an Ipatov sequence with a length of 31;

FIG. 4 is a schematic flowchart of a communication method according to an embodiment of this application;

FIG. 5 is a diagram of a periodic autocorrelation function of a sequence with a length of 64 according to an embodiment of this application;

FIG. 6 is a schematic flowchart of a communication method according to an embodiment of this application;

FIG. 7 is a schematic flowchart of a communication method according to an embodiment of this application;

FIG. 8 is a diagram of an apparatus 2000 according to an embodiment of this application;

FIG. 9 is a diagram of an apparatus 3000 according to an embodiment of this application; and

FIG. 10 is a diagram of a chip system 4000 according to an embodiment of this application.

**DESCRIPTION OF EMBODIMENTS**

The following describes technical solutions in embodiments of this application with reference to accompanying drawings.

The technical solutions provided in this application may be applied to a wireless personal area network (wireless personal area network, WPAN). Currently, the WPAN uses Institute of Electrical and Electronics Engineers (institute of electrical and electronics engineers, IEEE) 802.15 series standards. The WPAN may be used for communication between digital auxiliary devices within a small range, such as a telephone, a computer, and an auxiliary device, and an operation range of the WPAN is usually within 10 meters (m). For example, technologies that support the wireless personal area network include but are not limited to Bluetooth (Bluetooth), ZigBee (ZigBee), ultra-wideband (ultra-wideband, UWB), an infrared connection technology of the Infrared Data Association (infrared data association, IrDA), home radio frequency (HomeRF), and the like. From a perspective of network composition, the WPAN may be located at a bottom layer of an entire network architecture and is used for a wireless connection between devices within a small range, namely, a point-to-point short-range connection. The WPAN may be considered as a short-range wireless communication network. Based on different application scenarios, WPANs may be classified into a high rate (high rate, HR)-WPAN and a low rate (low rate, LR)-WPAN. The HR-WPAN may be used to support various high-rate multimedia applications, including high-quality audio and video delivery, multi-megabyte music and image document transmission, and the like. The LR-WPAN may be used for common services in daily life.

In the WPAN, devices may be classified into a full-function device (full-function device, FFD) and a reduced-function device (reduced-function device, RFD) based on communication capabilities of the devices. The RFD is mainly used for simple control applications such as a light switch or a passive infrared sensor. The RFD transmits a small amount of data, occupies a small amount of transmission resources and communication resources, and has low costs. FFDs may communicate with each other, and an FFD and an RFD may also communicate with each other. Usually, RFDs do not directly communicate with each other, but communicate with an FFD or forward data to the outside through an FFD. An FFD associated with an RFD may also be referred to as a coordinator (coordinator) of the RFD. The coordinator may also be referred to as a personal area network (personal area network, PAN) coordinator, a central control node, or the like. The PAN coordinator is a main control node of the entire network, and each ad hoc network has one PAN coordinator that is mainly configured to perform member identity management, link information management, and packet forwarding functions. Optionally, the device in embodiments of this application may be a device that supports a plurality of WPAN standards, such as 802.15.4a, 802.15.4z, a currently discussed version, or a later version.

In embodiments of this application, the device may be a tag, a communication server, a router, a switch, a bridge, a computer, a mobile phone, a smart home appliance, a vehicle-mounted communication device, a wearable device, or the like. The wearable device may also be referred to as an intelligent wearable device, and is a general term for wearable devices, such as glasses, gloves, watches, clothes, and shoes, that are developed by applying wearable technologies to intelligent designs of daily wear. The wearable device is a portable device that is directly worn on a body or integrated into clothes or an accessory of a user. The wearable device is not merely a hardware device, but further implements a powerful function through software support, data exchange, and cloud-based interaction. In a broad sense, intelligent wearable devices include full-featured and large-sized devices that can implement complete or partial functions without relying on smartphones, for example, smartwatches or smart glasses, and devices that focus only on one type of application function and need to be used together with other devices such as smartphones, for example, various smart bands or smart jewelry used for monitoring physical signs.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for performing a method provided in embodiments of this application is not particularly limited in embodiments of this application, provided that the entity can run a program that records code of the method provided in embodiments of this application to perform communication according to the method provided in embodiments of this application. For example, the method provided in embodiments of this application may be performed by an FFD, or an RFD, or a functional module that is in an FFD or an RFD and that can invoke the program and execute the program.

The foregoing descriptions of the WPAN are merely examples for description, and do not limit the protection scope of embodiments of this application.

This application is applied to a wireless local area network system that supports 802.11 series protocols, for example, a next-generation wireless fidelity (wireless fidelity, Wi-Fi) protocol of IEEE 802.11ax, such as 802.11be, Wi-Fi 7, or extremely high throughput (extremely high throughput, EHT), or for another example, a next-generation protocol of 802.11be, Wi-Fi 8, or Wi-Fi artificial intelligence (artificial intelligence, AI), and may be further applied to a UWB-based wireless personal area network system or a sensing (sensing) system. It should be noted that the following describes embodiments of this application by using an example in which this application is applied to a UWB-based wireless personal area network system.

It can be understood that embodiments of this application may be further applied to other communication systems, for example, a 6th generation (6th generation, 6G) mobile communication system, a 5th generation (5th generation, 5G) or new radio (new radio, NR) system, a long term evolution (long term evolution, LTE) system, a frequency division duplex (frequency division duplex, FDD) system, or a time division duplex (time division duplex, TDD) system. Embodiments of this application may be further applied to future communication systems. Embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems. The foregoing communication systems to which this application is applicable are merely examples for description, and communication systems to which this application is applicable are not limited thereto. This is uniformly described herein, and details are not described below again.

In embodiments of this application, a transmit end and/or a receive end may be a station (station, STA) in a wireless local area network (wireless local area network, WLAN). For example, the station may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, or a computer supporting a Wi-Fi communication function. Optionally, the station may support the 802.11be standard. The station may also support a plurality of WLAN standards of the 802.11 family, such as 802.11be, 802.11ax, 802.11ac, 802.11n, 802.11g, 802.11b, and 802.11a.

In addition, the transmit end and/or the receive end in embodiments of this application may alternatively be an access point (access point, AP) in a WLAN. The access point may be an access point for a terminal device (for example, a mobile phone) to access a wired (or wireless) network, and is mainly deployed in a home, a building, or a campus, with a typical coverage radius ranging from tens of meters to hundreds of meters, or certainly, may be deployed outdoors. The access point is equivalent to a bridge connecting a wired network and a wireless network, and is mainly intended to connect wireless network clients together, and then connect the wireless network to Ethernet. Specifically, the access point may be a terminal device (for example, a mobile phone) or a network device (for example, a router) with a Wi-Fi chip. The access point may be a device supporting the 802.11be standard. The access point may alternatively be a device supporting a plurality of WLAN standards of the 802.11 family, such as 802.11be, 802.11ax, 802.11ac, 802.11n, 802.11g, 802.11b, and 802.11a.

The access point and the station may alternatively be devices applied to an internet of vehicles, internet of things nodes, sensors, or the like in an internet of things (Internet of Things, IoT), smart cameras, smart remote controls, or smart water or electricity meters in a smart home, sensors in a smart city, or the like.

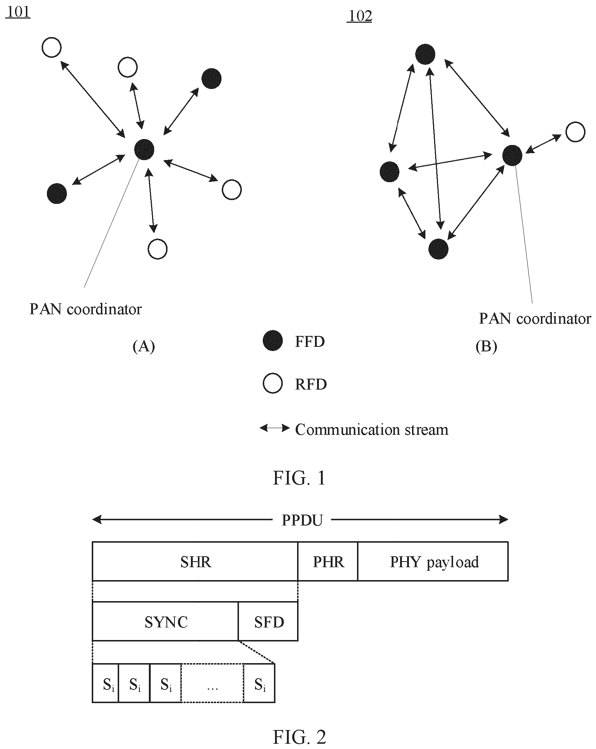

First, an application scenario to which this application is applicable is briefly described below with reference to FIG. 1.

FIG. 1 is a diagram of two application scenarios according to this application. A system 101 shown in (A) in FIG. 1 is a communication system with a star topology (star topology), and a system 102 shown in (B) in FIG. 1 is a communication system with a peer-to-peer topology (peer-to-peer topology).

As shown in (A) in FIG. 1, the system 101 may include a plurality of FFDs and a plurality of RFDs, and the plurality of FFDs and the plurality of RFDs may form a communication system with a star topology. One of the plurality of FFDs is a PAN coordinator. In the communication system with the star topology, the PAN coordinator may perform data transmission with one or more other devices. To be specific, a one-to-many or many-to-one data transmission architecture may be established between a plurality of devices.

As shown in (B) in FIG. 1, the system 102 may include a plurality of FFDs and one RFD, and the plurality of FFDs and the RFD may form a communication system with a peer-to-peer topology. One of the plurality of FFDs is a PAN coordinator. In the communication system with the peer-to-peer topology, a many-to-many data transmission architecture may be established between a plurality of different devices.

It should be understood that (A) in FIG. 1 and (B) in FIG. 1 are merely simplified diagrams as examples for ease of understanding, and do not constitute a limitation on an application scenario of this application. For example, the system 101 and/or the system 102 may further include other FFDs and/or RFDs.

In a UWB technology, data may be transmitted through a nanosecond-level non-sinusoidal narrow pulse, and the UWB technology occupies a quite wide spectrum range. In the UWB technology, data is transmitted through a narrow pulse, and radiation spectrum density is quite low. Therefore, the UWB technology has advantages such as a strong multi-path resolution capability, low power consumption, and high confidentiality. Currently, the UWB technology has been written into IEEE 802 series wireless standards, and the UWB technology-based WPAN standard IEEE 802.15.4a and its evolution version IEEE 802.15.4z have been released. Currently, formulation of the next-generation WPAN standard 802.15.4ab of the UWB technology has been put on the agenda.

In the UWB technology, data is transmitted through sending and receiving of a nanosecond-level ultra-narrow pulse or an ultra-narrow pulse whose pulse time is less than a nanosecond. Therefore, synchronization between a receive-end device and a transmit-end device is critical in the UWB technology. Synchronization between the receive-end device and the transmit-end device may be understood as follows: A physical layer protocol data unit (physical layer protocol data unit, PPDU) is sent in a form of a pulse signal, and a receive end receives a plurality of pulse signals, and determines a specific pulse signal, among the plurality of pulse signals, from which a PPDU to be received by the receive end starts. Currently, synchronization between the receive-end device and the transmit-end device is mainly implemented based on a synchronization header (synchronization header, SHR) in the PPDU. Specifically, the receive end may perform correlation detection on the synchronization header, to determine, from the plurality of received pulse signals, a specific pulse signal from which the PPDU to be received by the receiver starts.

FIG. 2 is a diagram of a structure of a PPDU to which embodiments of this application are applicable.

As shown in FIG. 2, the PPDU includes an SHR, a physical header (physical header, PHR), and a physical layer (physical layer, PHY) payload field (payload field). The SHR may be used by a receive end to perform PPDU detection and synchronization. For example, the receive end may detect, based on the SHR, whether a transmit end has sent a PPDU, and a starting position of the PPDU. The PHR may carry physical layer indication information, and the indication information may be used to help the receive end correctly demodulate data. For example, the indication information may include modulation and coding information, a PPDU length, and a receiver of the PPDU. The PHY payload field carries transmitted data.

FIG. 2 further shows a structure of the SHR. As shown in FIG. 2, the SHR may include a synchronization (synchronization, SYNC) field and a start-of-frame delimiter (start-of-frame delimiter, SFD) field. The SYNC field may include a plurality of repeated basic symbols $S_i$. The basic symbols $S_i$ are generated based on a preamble sequence. The preamble sequence may be a ternary sequence including three values: {-1, 0, 1}; and is also referred to as an Ipatov sequence. Currently, three lengths of preamble sequences are defined in the 802.15 standard: 31, 91, and 127. Table 1, Table 2, and Table 3 show some Ipatov sequences with lengths of 31, 91, and 127 respectively.

**Table 1 Some Ipatov sequences with a length of 31**

| Code index (code index) | Code sequence (code sequence) | Channel number (channel number) |
|---|---|---|
| 1 | {-1, 0, 0, 0, 0, 1, 0, -1, 0, 1, 1, 1, 0, 1, -1, 0, 0, 0, 1, -1, 1, 1, 1, 0, 0, -1, 1, 0, -1, 0, 0} | 0, 1, 8, and 12 |
| 2 | {0, 1, 0, 1, -1, 0, 1, 0, 1, 0, 0, 0, -1, 1, 1, 0, -1, 1, - 1, -1, -1, 0, 0, 1, 0, 0, 1, 1, 0, 0, 0} | 0, 1, 8, and 12 |
| 3 | {-1, 1, 0, 1, 1, 0, 0, 0, -1, 1, -1, 1 1, 0, 0, 1, 1, 0, 1, 0, 0, -1, 0, 0, 0, 0, -1, 0, 1, 0, -11 | 2, 5, 9, and 13 |

(continued)

| Code index (code index) | Code sequence (code sequence) | Channel number (channel number) |
|---|---|---|
| 4 | {0, 0, 0, 0, 1, -1, 0, 0, -1, 0, 0, -1, 1, 1, 1, 1, 0, 1, - 1, 1, 0, 0, 0, 1, 0, -1, 0, 1, 1, 0, -11 | 2, 5, 9, and 13 |
| 5 | {-1, 0, 1, -1, 0, 0, 1, 1, 1, -1, 1, 0, 0, 0, -1, 1, 0, 1, 1, 1, 0, -1, 0, 1, 0, 0, 0, 0, -1, 0, 0} | 3, 6, 10, and 14 |
| 6 | {1, 1, 0, 0, 1, 0, 0, -1, -1, -1, 1, -1, 0, 1, 1, -1, 0, 0, 0, 1, 0, 1, 0, -1, 1, 0, 1, 0, 0, 0, 0} | 3, 6, 10, and 14 |

**Table 2 Some Ipatov sequences with a length of 91**

| Code index | Code sequence | Channel number |
|---|---|---|
| 25 | {-1, 0, 1, 1, 1, 1, -1, -1, 1, -1, -1, 1, -1, 1, 1, 1, 1, -1, 1, -1, -1, -1, 1, 1, - 1, - 1, 1, 1, 1, 1, 1, 1, 1, - 1, 1, 1, - 1, 1, 0, 0, 1, - 1, - 1, 1, 0, - 1, - 1, 1, 0, 1, 1, 1, 1, 1, -1, -1, 1, 1, 1, -1, -1, 0, -1, -1, 0, 1, -1, 1, -1, -1, -1, -1, 0, -1, 1, -1, 1, -1, 1, 0, 1, -1, -1, 1, 1, -1, 1, -1, 1, 1, 1, 0} | 0 to 15 |
| 26 | {1, 1, 0, 1, -1, 1, -1, -1, -1, 1, 1, 1, 1, 1, -1, 1, -1, 1, 1, -1, -1, 1, -1, -1, 1, 1, -1, -1, -1, 1, -1, 0, 1, 1, 1, 0, -1, 1, 1, 1, 1, -1, 1, 0, 1, 0, -1, -1, 0, 1, -1, 1, 1, -1, 1, 1, 1, 1, 1, 1, -1, -1, 1, -1, 1, 1, 0, 0, 1, 1, 1, -1,-1, 0, 1, -1, -1, -1, -1, -1, 1, -1, 0, 1, -1, 1, -1, 1, -1, -1, -1} | 0 to 15 |

**Table 3 Some Ipatov sequences with a length of 127**

| Code index | Code sequence | Channel number |
|---|---|---|
| 9 | {1, 0, 0, 1, 0, 0, 0, -1, 0, -1, -1, 0, 0, -1, -1, 1, 0, 1, 0, 1, 0, 0, -1, 1, -1, 1, 1, 0, 1, 0, 0, 0, 0, 1, 1, -1, 0, 0, 0, 1, 0, 0, -1, 0, 0, -1, -1, 0, -1, 1, 0, 1, 0, -1, -1, 0, -1, 1, 1, 1, 0, 1, 1, 0, 0, 0, 1, -1, 0, 1, 0, 0, -1, 0, 1, 1, -1, 0, 1, 1, 1, 0, 0, -1, 1, 0, 0, 1, 0, 1, 0, -1, 0, 1, 1, -1, 1, -1, -1, 1, 0, 0, 0, 0, 0, 0, 1, 0, 0, 0, 0, 0, -1, 1, 0, 0, 0, 0, -1, 0, -1, 0, 0, 0, -1, -1, 1} | 0 to 3, 5, 6, 8 to 10, and 12 to 14 |
| 10 | {1, 1, 0, 0, 1, 0, -1, 1, 0, 0, 1, 0, 0, 1, 0, 0, 0, 0, 0, 0, -1, 0, 0, 0, -1, 0, 0, -1, -1, 0, 0, 0, -1, 0, 1, -1, 1, 0, -1, 0, 1, -1, 0, -1, 1, 0, 0, 0, 0, 0, 1, -1, 0, 0, 1, 1, 0, - 1, 0, 1, 0, 0, - 1, - 1, 1, 0, 0, 1, 1, - 1, 1, 0, 1, - 1, 0, 1, 0, 0, 0, 0, - 1, 0, - 1, 0, - 1, 0, - 1, 1, 1, - 1, 1, 0, 1, 0, 0, 1, 0, 1, 0, 0, 0, - 1, 1, 0, 1, 1, 1, 0, 0, 0, -1, -1, -1, -1, 1, 1, 1, 0, 0, 0, 0, 1, 1, 1, 0, -1, -1} | 0 to 3, 5, 6, 8 to 10, and 12 to 14 |
| 11 | {-1, 1, -1, 0, 0, 0, 0, 1, 0, 0, -1, -1, 0, 0, 0, 0, 0, -1, 0, 1, 0, 1, 0, 1,-1,0, 1, 0, 0, 1, 0, 0, 1, 0, - 1, 0, 0, - 1, 1, 1, 1, 0, 0, 1, 0, 0, 0, - 1, 1, 0, 1, 0, -1, 0, 0, 0, 0, 1, 1, 1, 1, 1,-1, 1, 0, 1, - 1, - 1, 0, 1, - 1, 1, 0, 1, 1, - 1, - 1, 0, - 1, 0, 0, 0, 1, 0, -1, 1, 0, 0, 1, 0, 1, -1, -1, -1, -1, 0, 0, 0, -1, 0, 0, 0, 0, 0, 0, -1, 1, 0, 0, 1, -1, 0, 1, 1, 0, 0, 0, 1, 1, -1, 0, 0, 1, 1, -1, 0, -1, 0} | 0 to 3, 5, 6, 8 to 10, and 12 to 14 |
| 12 | {-1, 1, 0, 1, 1, 0, 0, 0, 0, 0, 0, -1, 0, 1, 0, -1, 1, 0, -1, -1, -1, 1, -1, 1, 1, 0, 0, -1, 1, 0, 1, 1, 0, 1, 0, 1, 0, 1, 0, 0, 0, -1, 0, 0, -1, 0, 0, -1, 1, 0, 0, 1, -1, 1, 1, 0, 0, 0, -1, 1, -1,0, -1, 1, 1, 0, -1, 0, 1, 1, 1, 1, 0, -1, 0, 0, -1, 0, 1, 1, 0, 0, 1, 0, 1, 0, 0, 1, 1, -1, 0, 0, 1, 0, 0, 0, 1, -1, 0, 0, 0, -1,0, -1, -1, 1, 0, 0, 0, 0, -1, 0, 0, 0, 0, -1, -1, 0, 1, 0, 0, 0, 0, 0, 1, -1, -1} | 0 to 3, 5, 6, 8 to 10, and 12 to 14 |

It can be understood that, during representation of a sequence, a symbol "+" may be used to represent 1, and a symbol "-" may be used to represent -1. For example, "1" in Table 1 to Table 3 may be replaced with the symbol "+", and "-1" in Table 1 to Table 3 may be replaced with the symbol "+".

An Ipatov sequence has a good autocorrelation characteristic, and may be referred to as a perfect sequence.

For ease of understanding the technical solutions in embodiments of this application, some terms or concepts that may be used in embodiments of this application are first briefly described.

(1) Periodic autocorrelation function

It is assumed that a length of a sequence $\vec{a}$ is L, and the sequence is as follows: $\vec{a} = [a_0, a_1, a_2, \cdots, a_{L-1}]$. A periodic autocorrelation function $R_{\vec{a}}(\tau)$ of the sequence $\vec{a}$ may meet a formula 1.

$$R_{\vec{a}}(\tau)=\sum_{l=0}^{L-1}a_l\times a_{l+\tau}^{H}$$

Formula 1

$\tau\in[0, L-1]$. When $l+\tau\geq L$, $a_{l+\tau}=a_{l+\tau-L}$ . $a_{l+\tau}^{H}$ is a conjugate of $a_{l+\tau}$.

A maximum sidelobe $R_{A\,max}$ of the periodic autocorrelation function of the sequence $\vec{a}$ is a maximum value of $|R_{\vec{a}}(\tau)|$ in the case of $\tau\neq0$. Usually, in a sequence design, a value of $R_{A\,max}$ is expected to be as small as possible. When the periodic autocorrelation function $R_{\vec{a}}(\tau)$ of the sequence $\vec{a}$ meets a formula 2, the sequence $\vec{a}$ may be referred to as a perfect sequence.

$$R_{\vec{a}}(\tau)=\begin{cases}E, & \tau=0\\0, & \tau\neq0\end{cases}$$

Formula 2

E is total energy of the sequence. It can be learned from the formula 2 that, for the sequence $\vec{a}$, if $\tau\neq0$, $R_{\vec{a}}(\tau)=0$; or if $\tau=0$, $R_{\vec{a}}(\tau)=E$.

A periodic autocorrelation function $R_{\vec{a}}(\tau,f)$ of the sequence $\vec{a}$ at a carrier frequency offset may meet a formula 3.

$$R_{\vec{a}}(\tau,f)=\sum_{l=0}^{L-1}a_l\times a_{l+\tau}^{H}e^{j2\pi f\tau}$$

Formula 3

$j$ is an imaginary unit, and $f$ is a frequency offset value. For example, when the carrier frequency offset is 40 ppm and a carrier bandwidth is 8 MHz, $f$ = 320 Hz.

(2) Periodic crosscorrelation (periodic cross correlation) function

It is assumed that a length of a sequence $\vec{b}$ is also L, and the sequence is as follows: $\vec{b}=[b_0,b_1,b_2,\cdots,b_{L-1}]$ . A periodic crosscorrelation function $R_{\vec{a},\vec{b}}(\tau)$ between a sequence $\vec{a}$ and the sequence $\vec{b}$ may meet a formula 4.

$$R_{\vec{a},\vec{b}}(\tau)=\sum_{l=0}^{L-1}a_l\times b_{l+\tau}^{H}$$

Formula 4

When $l+\tau\geq L$, $b_{l+\tau}=b_{l+\tau-L}$. $R_{Cmax}$ indicates a maximum value of an amplitude $|R_{a,\vec{b}}(\tau)|$ of the periodic crosscorrelation function between the sequence $\vec{a}$ and the sequence $\vec{b}$. $R_{Cmax}$ may also be referred to as a maximum sidelobe of the periodic crosscorrelation function between the sequence $\vec{a}$ and the sequence $\vec{b}$ Usually, in a sequence design, a value of $R_{Cmax}$ between any two sequences in a sequence set is expected to be as small as possible. For example, for the sequence $\vec{a}$ and the sequence $\vec{b}$, a smaller value of $R_{Cmax}$ indicates a smaller crosscorrelation value between the sequence $\vec{a}$ and the sequence $\vec{b}$, and also indicates smaller interference between the sequence $\vec{a}$ and the sequence $\vec{b}$.

For a sequence set including M sequences with a length of L, a maximum sidelobe $R_{A\,max}$ of a periodic autocorrelation function of a sequence in the sequence set and a maximum sidelobe $R_{Cmax}$ of a periodic crosscorrelation function between sequences in the sequence set need to meet an inequality (inequality) (to be specific, a Sarwate's inequality), for example, as shown in a formula 5.

$$\frac{R_{C\max}^2}{L} + \frac{L-1}{L(M-1)}\frac{R_{A\max}^2}{L} \geq 1$$

<div align="right">Formula 5</div>

Table 4 shows crosscorrelation values, defined in the 802.15 standard, between Ipatov sequences with a length of 127. As described above, a smaller crosscorrelation value between two sequences indicates smaller interference between the two sequences. However, it can be learned from Table 4 that a maximum crosscorrelation value between Ipatov sequences with a length of 127 is 16. This indicates great interference between two sequences whose sequence IDs are 9 and 16. When a transmit end uses both the sequences whose sequence IDs are 9 and 16 for transmission in one channel, great interference may occur, and consequently, sending fails.

**Table 4 Crosscorrelation value between Ipatov sequences with a length of 127**

| Sequence ID | 9 | 10 | 11 | 12 | 13 | 14 | 15 | 16 |
|---|---|---|---|---|---|---|---|---|
| 9 | 0 | 8 | 8 | 8 | 12 | 12 | 12 | 16 |
| 10 | 8 | 0 | 8 | 8 | 12 | 12 | 12 | 12 |
| 11 | 8 | 8 | 0 | 8 | 12 | 12 | 8 | 12 |
| 12 | 8 | 8 | 8 | 0 | 12 | 12 | 12 | 12 |
| 13 | 12 | 12 | 12 | 12 | 0 | 12 | 8 | 8 |
| 14 | 12 | 12 | 12 | 12 | 12 | 0 | 12 | 8 |
| 15 | 12 | 12 | 8 | 12 | 8 | 12 | 0 | 14 |
| 16 | 16 | 12 | 12 | 12 | 8 | 8 | 14 | 0 |

(3) Aperiodic autocorrelation function

It is assumed that a length of a sequence $\vec{a}$ is $L$, and the sequence is as follows: $\vec{a} = [a_0, a_1, a_2, \cdots, a_{L-1}]$. An aperiodic autocorrelation function $Q_{\vec{a}}(\lambda)$ of the sequence $\vec{a}$ may meet a formula 6.

$$Q_{\vec{a}}(\lambda) = \sum_{l=0}^{L-\lambda-1} a_l \times a_{l+\lambda}^H$$

<div align="right">Formula 6</div>

$\lambda \in [0, L\text{-}1]$, and $l + \lambda \leq L\text{-}1$. $a_{l+\lambda}^H$ is a conjugate of $a_{l+\lambda}$.
An aperiodic autocorrelation function $Q_{\vec{a}}(\tau, f)$ of the sequence $\vec{a}$ at a carrier frequency offset may meet a formula 7.

$$Q_{\vec{a}}(\lambda, f) = \sum_{l=0}^{L-\lambda-1} a_l \times a_{l+\lambda}^H e^{j2\pi f\lambda}$$

<div align="right">Formula 7</div>

(4) Ipatov sequence

The Ipatov sequence is defined in the following two manners:

(a) It is assumed that $\{x_t\}$ is an m sequence whose periodicity meets the following condition: $L = 2^k\text{-}1$ ($k$ is an odd number). It is assumed that $\{y_t\}$ is a d sampling sequence of $\{x_t\}$. If gcd($k,c$)=1, and $d = 2^c\text{+}1$, or $d = 2^{2c}\text{-}2^c\text{+}1$, a cross correlation function value between $\{x_t\}$ and $\{y_t\}$ is $\{\text{-}1+2^{(k+1)/2}, \text{-}1, \text{-}1\text{-}2^{(k+1)/2}\}$.
A ternary sequence is defined as follows:

$$D_\tau = \begin{cases} 1, & \text{if } \theta(x,y)(\tau) = -1 + 2^{(k+1)/2} \\ 0, & \text{if } \theta(x,y)(\tau) = -1 \\ -1, & \text{if } \theta(x,y)(\tau) = -1 - 2^{(k+1)/2} \end{cases}$$

<div align="right">Formula 8</div>

$\theta(x,y)$ indicates a crosscorrelation function between sequences $\{x_t\}$ and $\{y_t\}$. In this case, $(D_0, D_1, ..., D_{L-1},)$ is a complete ternary sequence.

(b) It is assumed that a is a primitive element of a finite field $GF(q^k)$. $GF(q^k)$ indicates a finite field in which a quantity of elements is $q^k$, GF indicates a Galois field (Galois Field, GF), $q$ is a power of an odd number, and $k$ is an odd number. It is assumed that $L = \dfrac{q^k - 1}{q - 1}$. In this case, $C = (c_0, c_1, \cdots, c_{L-1})$ is defined as follows:

$$c_i = \begin{cases} 0, & \text{if } b_i = 0 \\ (-1)^i \cdot (-1)^\mu, & \text{if } b_i = \alpha^{\mu L} \end{cases}$$

<div align="right">Formula 9</div>

$b_i = Tr(\alpha^i)$, and $Tr()$ is a trace function over a finite field $GF(q)$.

(5) Periodic peak sidelobe ratio

The periodic peak sidelobe ratio is a ratio of a mainlobe (to be specific, a periodic autocorrelation value of a sequence in a case in which a delay is 0) to a maximum sidelobe (to be specific, a maximum value of a periodic autocorrelation value of a sequence in a case in which a delay is not 0) during a periodic autocorrelation operation on a sequence, for example, as shown in a formula 10.

$$PSL_{\text{periodic}} = \frac{R_{\vec{a}}(0)}{R_{A\max}}$$

<div align="right">Formula 10</div>

$R_{\vec{a}}(0)$ is a periodic autocorrelation value of a sequence $\vec{a}$ in a case in which a delay is 0. $R_{A\max}$ is a maximum value of $|R_{\vec{a}}(\tau)|$ in the case of $\tau \neq 0$.

Similarly, a periodic peak sidelobe ratio of the sequence $\vec{a}$ at a carrier frequency offset may be expressed as follows:

$$PSL_{\text{periodic,f}} = \frac{R_{\vec{a}}(0, f)}{R_{A\max,f}}$$

<div align="right">Formula 11</div>

$R_{\vec{a}}(0, f)$ is a periodic autocorrelation value of a sequence $\vec{a}$ in a case in which a carrier offset is $f$ and a delay is 0. $R_{A\max,f}$ is a maximum value of $|R_{\vec{a}}(\tau, f)|$ in a case in which a carrier offset is $f$ and $\tau \neq 0$.

Table 5 shows periodic peak sidelobe ratios, defined in the 802.15 standard, of Ipatov sequences at a carrier frequency offset of 40 ppm. As described above, a larger periodic peak sidelobe ratio of a sequence at a specific carrier frequency offset indicates a better anti-frequency-offset characteristic of the sequence. However, it can be learned from Table 5 that periodic peak sidelobe ratios of sequences at a carrier frequency offset of 40 ppm in the standard vary, and correlation functions of some sequences severely deteriorate under impact of the carrier frequency offset. For example, a periodic peak sidelobe of the 7th sequence at 40 ppm is only 9.8 dB. Compared with performance of a sequence with a same length in the standard, performance of the 7th sequence is degraded by 2 dB to 5 dB. When a transmit end uses the 7th sequence for transmission, transmission performance may be severely affected.

**Table 5 Periodic peak sidelobe ratios, defined in the 802.15 standard, of Ipatov sequences at a carrier frequency offset of 40 ppm**

| Sequence ID | 1 | 2 | 3 | 4 | 5 | 6 | 7 | 8 |
|---|---|---|---|---|---|---|---|---|
| Periodic peak sidelobe ratio (unit: dB) | 12.78 | 12.92 | 11.75 | 14.76 | 12.78 | 12.92 | 9.80 | 13.71 |
| Sequence ID | 9 | 10 | 11 | 12 | 13 | 14 | 15 | 16 |
| Periodic peak sidelobe ratio (unit: dB) | 17.03 | 17.19 | 16.25 | 14.37 | 16.31 | 16.95 | 17.79 | 16.99 |
| Sequence ID | 17 | 18 | 19 | 20 | 21 | 22 | 23 | 24 |
| Periodic peak sidelobe ratio (unit: dB) | 17.03 | 17.19 | 16.25 | 14.37 | 16.31 | 16.95 | 17.79 | 16.99 |
| Sequence ID | 25 | 26 | 27 | 28 | 29 | 30 | 31 | 32 |
| Periodic peak sidelobe ratio (unit: dB) | 16.33 | 16.19 | 15.78 | 16.92 | 16.17 | 16.61 | 15.62 | 16.66 |

(6) Aperiodic peak sidelobe ratio

The Aperiodic peak sidelobe ratio is a ratio of a mainlobe (to be specific, an aperiodic autocorrelation value of a sequence in a case in which a delay is 0) to a maximum sidelobe (to be specific, a maximum value of an aperiodic autocorrelation value of a sequence in a case in which a delay is not 0) during an aperiodic autocorrelation operation on a sequence, for example, as shown in a formula 12.

$$PSL_{\text{aperiodic}} = \frac{Q_{\vec{a}}(0)}{Q_{A\max}}$$

<div align="right">Formula 12</div>

$Q_{\vec{a}}(0)$ is an aperiodic autocorrelation value of a sequence $\vec{a}$ in a case in which a delay is 0. $Q_{A\max}$ is a maximum value of $|Q_{\vec{a}}(\tau)|$ in the case of $\tau \neq 0$.

Similarly, a periodic peak sidelobe ratio of the sequence $\vec{a}$ at a carrier frequency offset may be expressed as follows:

$$PSL_{\text{aperiodic,f}} = \frac{Q_{\vec{a}}(0,f)}{Q_{A\max,f}}$$

<div align="right">Formula 13</div>

$Q_{\vec{a}}(0,f)$ is an aperiodic autocorrelation value of a sequence $\overline{a}$ in a case in which a carrier offset is $f$ and a delay is 0. $Q_{A\max,f}$ is a maximum value of $|Q_{\vec{a}}(\tau,f)|$ in a case in which a carrier offset is $f$ and $\tau \neq 0$ .

Table 6 shows aperiodic peak sidelobe ratios, defined in the 802.15 standard, of Ipatov sequences without a carrier frequency offset and at a carrier frequency offset of 40 ppm. As described above, a larger periodic peak sidelobe ratio of a sequence at a specific carrier frequency offset indicates a better anti-Doppler characteristic of the sequence. However, it can be learned from Table 6 that aperiodic peak sidelobe ratios of sequences at a carrier frequency offset of 40 ppm in the standard vary, and are much lower than aperiodic peak sidelobe ratios without a carrier frequency offset. This indicates that anti-Doppler characteristics of the sequences in the standard are not sufficiently good.

**Table 6 Aperiodic peak sidelobe ratios, defined in the 802.15 standard, of Ipatov sequences**

| Sequence ID | 1 | 2 | 3 | 4 | 5 | 6 | 7 | 8 |
|---|---|---|---|---|---|---|---|---|
| Carrier frequency offset = 0 | 18.06 | 18.06 | 14.54 | 18.06 | 18.06 | 18.06 | 18.06 | 18.06 |
| Carrier frequency offset = 40 ppm | 14.98 | 14.99 | 13.44 | 15.56 | 14.98 | 14.99 | 11.60 | 13.71 |
| Sequence ID | 9 | 10 | 11 | 12 | 13 | 14 | 15 | 16 |
| Carrier frequency offset = 0 | 22.14 | 22.14 | 20.56 | 19.22 | 20.56 | 20.56 | 22.14 | 20.56 |
| Carrier frequency offset = 40 ppm | 19.71 | 18.22 | 18.23 | 17.56 | 17.32 | 16.98 | 19.00 | 19.23 |

(continued)

| Sequence ID | 17 | 18 | 19 | 20 | 21 | 22 | 23 | 24 |
|---|---|---|---|---|---|---|---|---|
| Carrier frequency offset = 0 | 22.14 | 22.14 | 20.56 | 19.22 | 20.56 | 20.56 | 22.14 | 20.56 |
| Carrier frequency offset = 40 ppm | 19.71 | 18.22 | 18.23 | 17.56 | 17.32 | 16.98 | 19.00 | 19.23 |
| Sequence ID | 25 | 26 | 27 | 28 | 29 | 30 | 31 | 32 |
| Carrier frequency offset = 0 | 18.17 | 20.11 | 20.11 | 21.27 | 22.61 | 20.11 | 19.09 | 19.09 |
| Carrier frequency offset = 40 ppm | 16.38 | 17.92 | 16.54 | 16.86 | 18.76 | 17.87 | 17.52 | 16.98 |

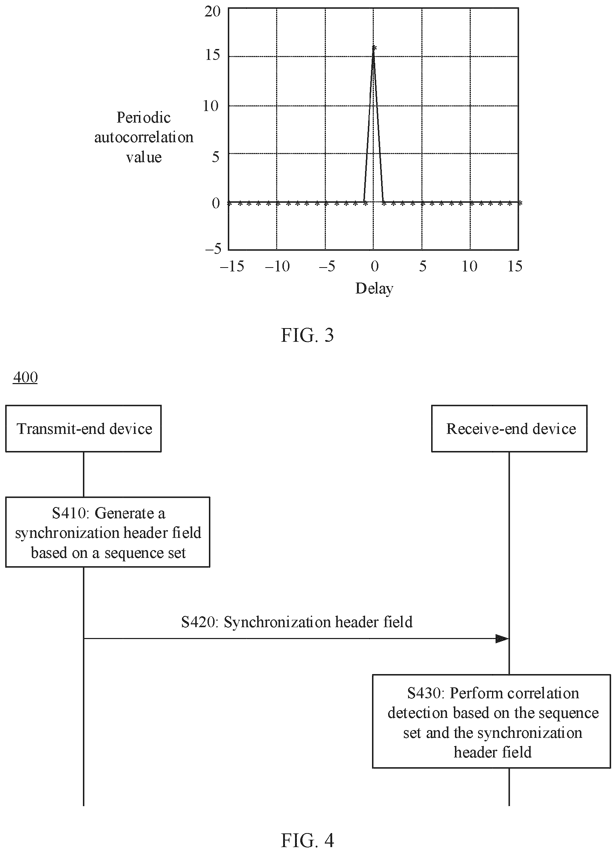

FIG. 3 is a diagram of a periodic autocorrelation function of an Ipatov sequence with a length of 31.

In FIG. 3, a horizontal coordinate indicates a delay, and a vertical coordinate indicates a periodic autocorrelation value of a sequence. It can be learned from FIG. 3 that a periodic autocorrelation value of an Ipatov sequence with a length of 31 is 0 at all positions other than an origin. Therefore, it can be learned that the Ipatov sequence meets the formula 2. Therefore, the Ipatov sequence may be referred to as a perfect sequence. Based on an autocorrelation characteristic of the Ipatov sequence, a receive end may perform correlation (correlation) on a received signal by using a same sequence, and implement synchronization based on a correlation peak position and other information. For example, the receive end detects a correlation result between a predefined sequence and the received signal. When a periodic peak value appears in the correlation result, a synchronization header of a PPDU is received, and the receive end may determine a starting position of the PPDU based on a position of the peak value. The receive end may determine, based on a PHR field, a length of the PPDU and whether data in the PPDU is data transmitted by a transmit end to the receive end. If the data in the PPDU is data transmitted to the receive end, the receive end may further parse a physical layer payload field in the PPDU to obtain data sent by the transmit end. If the data in the PPDU is not data transmitted to the receive end, the receive end may not need to parse the physical layer payload field in the PPDU.

Embodiments of this application provide a communication method. A transmit-end device generates a synchronization header field by using a sequence set, where the sequence set includes a sequence with a better characteristic. This can improve transmission performance and communication performance of a system.

FIG. 4 is a schematic flowchart of a communication method 400 according to an embodiment of this application. The method 400 may include the following steps.

S410: A transmit-end device generates a synchronization header field based on a sequence set.

For example, the transmit-end device generates the synchronization header field based on any sequence in the sequence set.

The sequence set includes at least one of the following sequences: a sequence with a length of 127, a sequence with a length of 31, a sequence with a length of 91, or a sequence with a length of 64.

For example, the sequence set includes the sequence with a length of 127. The sequence with a length of 127 includes at least one of a sequence $\vec{C}_1$ to a sequence $\vec{C}_8$. The sequence $\vec{C}_1$ to the sequence $\vec{C}_8$, are shown in Table 7.

**Table 7 Sequence with a length of 127**

| Sequence name | Sequence |
|---|---|
| $\vec{C}_1$ | {0, 0, 1, 0, 0, -1, -1, -1, 0, 0, -1, 0, -1, -1, 0, 0, 0, -1, 0, 1, 0, 0, 0, 1, -1, 0, 0, 0, 1, 0, -1, 0, -1, -1, 0, 0, 0, 0, 0, -1, 0, 1, -1, -1, 0, 0, 0, 0, -1, 0, 0, -1, 0, 0, -1, 1, 1, 1, 1, -1, 1, -1, 1, 1, -1, 0, 1, 0, -1, 0, 1, 1, 1, 0, -1, 0, 0, 1, 1, 0, 0, 0, -1, -1, 0, -1, 1, -1, 1, 0, 1, 0, 0, -1, -1, 0, 0, -1, 0, -1, 1, 0, 1, 0, 0, 0, 0, -1, 0, 0, -1, 1, -1, 0, 0, 0, -1, 0, 1, 1, -1, -1, 1, 0, 0, 0, 1} |
| $\vec{C}_2$ | {-1, 0, 0, 0, 0, -1, -1, -1, 0, 0, 0, 1, 0, 1, 0, 0, 1, -1, 0, 0, 0, 0, 0, 0, 1, -1, 0, 1, 0, 1, -1, -1, 0, -1, 0, 0, 1, 0, 1, 0, -1, 0, 1, -1, 0, -1, 1, -1, 0, 0, -1, 0, 0, 0, 0, 1, 0, 0, 0, 1, 0, 0, -1, 0, 0, 1, 1, -1, 1, 0, 1, 0, -1, 0, 0, 0, 0, 0, -1, 0, 1, 1, 1, -1, 0, 0, -1, 1, 1, 0, -1, 1, -1, -1, -1, -1, -1, 0, -1, -1, 0, 0, -1, 0, -1, 1, 0, 0, 0, 1, -1, 0, 0, -1, -1, 0, 1, 1, 0, -1, 0, 0, 0, -1, 1, 1, -1} |
| $\vec{C}_3$ | {-1, 0, 1, -1, -1, 0, 0, -1, 1, -1, 0, 0, 0, -1, 1, 0, 1, 1, 0, 0, -1, -1, 0, 0, 0, 0, 0, 1, 0, 0, 0, -1, 1, -1, 1, -1, 0, 1, 0, 0, 1, 1, 0, -1, 0, 0, 0, 1, 0, -1, -1, -1, 1, 0, 1, -1, 0, 1, -1, -1, 0, -1, 1, -1, -1, -1, -1, -1, 0, 0, 0, 0, -1, 0, 1, 0, -1, -1, 0, 0, 1, 0, 0, -1, -1, 1, -1, 0, 0, 1, 0, 1, 0, 0, 1, 0, 0, -1, 0, -1, -1, 0, -1, 0, 1, 0, -1, 0, 0, 0, 0, 0, 1, 1, 0, 0, 1, 0, 0, 0, 0, -1, 1, 1, 0} |
| $\vec{C}_4$ | {1, -1, 1, 0, 0, -1, 0, -1, 0, -1, 1, 1, 0, 0, 1, 1, 0, 1, 0, 0, 0, -1, 0, 0, -1, -1, 1, 1, 0, 0, 0, 1, 0, 1, 0, 0, 0, 0, -1, 1, 0, 0, 0, 0, 0, -1, 0, 0, 0, 0, 0, 0, -1, 1, 1, -1, 1, -1, -1, 0, 1, 0, -1, 0, -1, 0, 0, -1, 1, 0, 0, -1, -1, -1, 0, 1, -1, -1, 0, 1, |

(continued)

| Sequence name | Sequence |
|---|---|
| | 0, 0, -1, 0, 1, -1, 0, 0, 0, -1, -1, 0, -1, -1, -1, 1, 0, 1, 1, 0, -1, 0, -1, 1, 0, 1, 1, 0, 0, 1, 0, 0, -1, 0, 0, 0, 1, -1, -1, 0, 0, 0, 0, -1, 0, -1, -1 |
| $\vec{C}_5$ | {1, 0, 0, 0, 0, -1, 0, 0, 0, 1, 0, 0, 1, 1, 1,0,-1, 1,-1,-1,0,-1,0,0,0, 1, -1, 0, 0, -1, -1, 0, 1, 0, 0, 1,-1,0,0,0, 1,-1, 1, 0, 0, -1, 0, 1, 0, 1, 0, 1, -1, -1, 0, 1, 0, -1, 0, 0, 1, 0, 0, -1, 0, -1, 1, 1, 1, -1, 1, -1, 0, 0, -1, -1, 1, -1, -1, 0, -1, -1, 0, -1, -1, -1, 0, 0, 0, 0, 0, 0, 1, 0, -1, 0, 0, 0, 0, 1, -1, 0, -1, -1, 0, 0, 1, 0, 0, 0, 0, 0, 1, 1, -1, -1, 0, 0, 0, -1, 0, -1, 1, 0, -1, 0, 1} |
| $\vec{C}_6$ | {-1, 0, 0, 1, -1, -1, -1, -1, -1, 1, 0, 1, -1, 0, -1, 0, 1, 0, 0, 0, 0, 0, -1, 1, 0, 1, - 1, - 1, 1, 1, 0, 0, 0, 0, 0, - 1, 0, - 1, 1, 0, 0, 0, 0, 1, 0, 0, 0, 0, - 1, 1, 1, 1, 0, 1, 0, 0, 0, 1, -1, 0, 0, 0, 1, 0, 0, 1, -1, -1, 0, 0, -1, 0, -1, 0, 0, 1, 1, 0, -1, 0, 0, 1, 0, -1, 1, -1, -1, 0, -1, 0, -1, -1, -1, 0, -1, -1, 1, 0, 0, 0, 1, 1, -1, 1, 0, 0, -1, -1, 0, 0, 1, 0, 0, 1, 0, 0, 0, -1, 0, 1, 0, -1, 0, -1, -1, 0, 1} |
| $\vec{C}_7$ | {-1, -1, 0, 1, -1, 0, 0, -1, 1, 0, 0, 0, 0, 0, 0, 1, 0, 0, 0, 1, 1, 1, 1, -1, 0, -1, 0, 0, -1, 1, 0, -1, 0, 0, 0, 1, 0, 1, 1, -1, -1, 0, 1, -1, 0, 1, 1, -1, 0, -1, 1, -1, -1, -1, -1, -1, 0, 0, 0, 0, 1, 0, -1, 0, -1, 1, 0, 0, 0, -1, 0, 0, -1, -1, -1, 1, 0, 0, 1, 0, -1, 0, 0, -1, 0, 0, -1, 0, 1, -1, 0, -1, 0, -1, 0, 1, 0, 0, 0, 0, 0, 1, 1, 0, 0, -1, 0, 0, 0, 0, 1, -1, 1, 0, 1, 0, 1, -1, -1, 0, 0, 1, -1, -1, 0, 0, 0} |
| $\vec{C}_8$ | {-1, -1, 0, 0, 1, 1, 0, 1, -1, 0, 1, 0, -1, 1, -1, -1, -1, 0, 0, 0, 0, -1, 0, -1, 0, -1, -1, 0, 0, 0, -1, 0, 0, -1, -1, 1, -1, 0, 0, 0, 0, 1, 0, 0, -1, 1, 0, 1, 0, -1, -1, 0, -1, 0, 1, 1, -1, 0, 0, -1, 0, -1, 0, 0, 0, 0, 1, 0, 0, -1, 0, 1, -1, 0, 1, 1, 0, 0, 1, -1, 0, 0, -1, -1, -1, 0, 0, 0, -1, 1, 0, 0, 1, 0, 1, 1, -1, 0, 0, 1, 0, -1, -1, 0, 0, 0, -1, 1, 0, 1, 0, -1, 0, -1, 0, 0, 1, 0, 0, 1, 0, 1, -1, 0, 0, 1, 1} |

For example, an element "1" in the sequences shown in Table 7 may be replaced with a symbol "+", and an element "-1" in the sequences may be replaced with a symbol "-". In other words, the sequences shown in Table 7 may be represented in a form shown in Table 8.

**Table 8 Sequence with a length of 127**

| Sequence name | Sequence |
|---|---|
| $\vec{C}_1$ | {0 0 + 0 0 - - - 0 0 - 0 - - 0 0 0 - 0 + 0 0 0 + - 0 0 0 + 0 - 0 - - 0 0 0 0 0 - 0 + - - 0 0 0 0 - 0 0 - 0 0 - + + + + - + - + + - 0 + 0 - 0 + + + 0 - 0 0 + + 0 0 0 - - 0 - + - + 0 + 0 0 - - 0 0 - 0 - + 0 + 0 0 0 0 - 0 0 - + - 0 0 0 - 0 + + - - + 0 0 0 +} |
| $\vec{C}_2$ | {- 0 0 0 0 - - - 0 0 0 + 0 + 0 0 + - 0 0 0 0 0 0 + - 0 + 0 + - - 0 - 0 0 + 0 + 0 - 0 + - 0 - + - 0 0 - 0 0 0 0 + 0 0 0 + 0 0 - 0 0 + + - + 0 + 0 - 0 0 0 0 0 - 0 + + + - 0 0 - + + 0 - + - - - - 0 - - 0 0 - 0 - + 0 0 0 + - 0 0 - - 0 + + 0 - 0 0 0 - + + -} |
| $\vec{C}_3$ | {- 0 + - - 0 0 - + - 0 0 0 - + 0 + + 0 0 - - 0 0 0 0 0 0 + 0 0 0 - + - + - 0 + 0 0 + + 0 - 0 0 0 + 0 - - - + 0 + - 0 + - - 0 - + - - - - 0 0 0 0 - 0 + 0 - - 0 0 0 + 0 0 - - + - 0 0 + 0 + 0 0 + 0 0 - 0 - - 0 - 0 + 0 - 0 0 0 0 0 + + 0 0 + 0 0 0 0 - + + 0} |
| $\vec{C}_4$ | {+ - + 0 0 - 0 - 0 - + + 0 0 + + 0 + 0 0 0 - 0 0 - - + + 0 0 0 + 0 + 0 0 0 0 - + 0 0 0 0 0 - 0 0 0 0 0 0 - + + - + - - 0 + 0 - 0 - 0 0 - + 0 0 - - - 0 + - - 0 + 0 0 - 0 + - 0 0 0 - - 0 - - - + 0 + + 0 - 0 - + 0 + + 0 0 + 0 0 - 0 0 0 + - - 0 0 0 0 - 0 - -} |
| $\vec{C}_5$ | {+ 0 0 0 0 - 0 0 0 + 0 0 + + + 0 - + - - 0 - 0 0 0 + - 0 0 - - 0 + 0 0 + - 0 0 0 + - + 0 0 - 0 + 0 + 0 + - - 0 + 0 - 0 0 + 0 0 - 0 - + + + - + - 0 0 - - + - - 0 - - 0 - - - 0 0 0 0 0 0 + 0 - 0 0 0 0 + - 0 - - 0 0 + 0 0 0 0 0 + + - - 0 0 0 - 0 - + 0 - 0 + }| |
| $\vec{C}_6$ | {- 0 0 + - - - - + 0 + - 0 - 0 + 0 0 0 0 0 0 - + 0 + - - + + 0 0 0 0 0 - 0 - + 0 0 0 0 + 0 0 0 0 - + + 0 + 0 0 0 + - 0 0 0 + 0 0 + - - 0 0 - 0 - 0 0 + + 0 - 0 0 + 0 - + - - 0 - 0 - - - 0 - - + 0 0 0 + + - + 0 0 - - 0 0 + 0 0 + 0 0 0 - 0 + 0 - 0 - - 0 +} |
| $\vec{C}_7$ | {- - 0 + - 0 0 - + 0 0 0 0 0 0 + 0 0 0 + + + + - 0 - 0 0 - + 0 - 0 0 0 + 0 + + - - 0 + - 0 + + - 0 - + - - - - - - 0 0 0 0 1 0 - 0 - + 0 0 0 - 0 0 - - - + 0 0 + 0 - 0 0 - 0 0 - 0 + - 0 - 0 - 0 + 0 0 0 0 0 + + 0 0 - 0 0 0 0 + - + 0 + 0 + - - 0 0 + - - 0 0 0} |
| $\vec{C}_8$ | {- 0 0 + + 0 + - 0 + 0 - + - - - - 0 0 0 0 - 0 - 0 - - 0 0 0 - 0 0 - - + - 0 0 0 0 + 0 0 - + 0 + 0 - - 0 - 0 + + - 00 - 0 - 0 0 0 0 + 0 0 - 0 + - 0 + + 0 0 + - 0 0 - - - 0 0 0 - + 0 0 + 0 + + - 0 0 + 0 - - 0 0 0 - + 0 + 0 - 0 - 0 0 + 0 0 + 0 + - 0 0 + +} |

For example, a minimum value of periodic peak sidelobe ratios of the sequence $\vec{C}_1$ to the sequence $\vec{C}_8$, at a preset carrier frequency offset is greater than a first preset value. The preset carrier frequency offset may be 40 ppm. The first preset value may be a minimum value of a periodic peak sidelobe ratio of an Ipatov sequence with a length of 127 at the preset carrier frequency offset, or the first preset value may be a value greater than the minimum value of the periodic peak sidelobe ratio of the Ipatov sequence with a length of 127 at the preset carrier frequency offset. It should be noted that the preset carrier frequency offset and the first preset value are not limited in this embodiment of this application.

Table 9 shows periodic peak sidelobe ratios of the sequence $\vec{C}_1$ to the sequence $\vec{C}_8$, at a carrier frequency offset of 40 ppm, and shows periodic peak sidelobe ratios, defined in the 802.15 standard, of Ipatov sequences with a length of 127 at a carrier frequency offset of 40 ppm. It can be learned from Table 9 that a minimum value of the periodic peak sidelobe ratios of the sequence $\vec{C}_1$ to the sequence $\vec{C}_8$, at a carrier frequency offset of 40 ppm is 16.35 dB, and a minimum value of the periodic peak sidelobe ratios, defined in the 802.15 standard, of the Ipatov sequences with a length of 127 at a carrier frequency offset of 40 ppm is only 14.37 dB. To be specific, the first preset value may be 14.37 dB.

**Table 9 Periodic peak sidelobe ratios of sequences at a carrier frequency offset of 40 ppm**

| Sequence ID | 9 | 10 | 11 | 12 | 13 | 14 | 15 | 16 |
|---|---|---|---|---|---|---|---|---|
| Periodic peak sidelobe ratio (unit: dB) | 17.03 | 17.19 | 16.25 | 14.37 | 16.31 | 16.95 | 17.79 | 16.99 |
| Sequence ID | $C_1$ | $C_2$ | $C_3$ | $C_4$ | $C_5$ | $C_6$ | $C_7$ | $C_8$ |
| Periodic peak sidelobe ratio (unit: dB) | 16.93 | 17.40 | 16.99 | 16.88 | 16.55 | 17.38 | 16.69 | 16.35 |

According to the foregoing technical solution, because the minimum value of the periodic peak sidelobe ratios of the sequence $\vec{C}_1$ to the sequence $\vec{C}_8$, at the preset carrier frequency offset is greater than the first preset value, anti-frequency-offset characteristics of the sequence $\vec{C}_1$ to the sequence $\vec{C}_5$ are good. Therefore, when the transmit-end device generates a synchronization header field based on one of the sequence $\vec{C}_1$ to the sequence $\vec{C}_8$, and sends the synchronization header field, transmission performance and communication performance of the system can be improved. For example, even if a large frequency offset occurs between carriers, after receiving the synchronization header field generated based on one of the sequence $\vec{C}_1$ to the sequence $\vec{C}_8$, a receive-end device may also perform correlation detection on the sequence among the sequence $\vec{C}_1$ to the sequence $\vec{C}_8$, and the synchronization header field, to implement synchronization between the receive-end device and the transmit-end device.

For example, when the sequence set includes a plurality of sequences among the sequence $\vec{C}_1$ to the sequence $\vec{C}_8$, a maximum value of crosscorrelation values between the plurality of sequences among the sequence $\vec{C}_1$ to the sequence $\vec{C}_8$ is less than a ninth preset value. The ninth preset value may be a maximum value of crosscorrelation values between the Ipatov sequences with a length of 127, namely, 16 in Table 4. Alternatively, the ninth preset value may be a value less than the maximum value of the crosscorrelation values between the Ipatov sequences with a length of 127. This is not limited in this embodiment of this application.

For example, the sequence set includes the sequence $\vec{C}_1$ to the sequence $\vec{C}_8$. Table 10 shows crosscorrelation values between the sequence $\vec{C}_1$ to the sequence $\vec{C}_8$, where $C_1$ to $C_8$ are identifiers (identifier, ID) of the sequence $\vec{C}_1$ to the sequence $\vec{C}_8$. It can be learned through comparison between Table 10 and Table 4 that a maximum value of crosscorrelation values of the sequence set provided in this embodiment of this application is 12, and is less than the maximum value of the crosscorrelation values between the Ipatov sequences with a length of 127. In other words, the sequence set provided in this embodiment of this application has better crosscorrelation.

**Table 10 Crosscorrelation values of the sequence set**

| Sequence ID | $C_1$ | $C_2$ | $C_3$ | $C_4$ | $C_5$ | $C_6$ | $C_7$ | $C_8$ |
|---|---|---|---|---|---|---|---|---|
| $C_1$ | 0 | 8 | 8 | 8 | 12 | 12 | 12 | 12 |
| $C_2$ | 8 | 0 | 8 | 8 | 12 | 12 | 8 | 8 |
| $C_3$ | 8 | 8 | 0 | 8 | 12 | 12 | 8 | 8 |
| $C_4$ | 8 | 8 | 8 | 0 | 12 | 12 | 8 | 8 |
| $C_5$ | 12 | 12 | 12 | 12 | 0 | 8 | 8 | 12 |
| $C_6$ | 12 | 12 | 12 | 12 | 8 | 0 | 8 | 12 |
| $C_7$ | 8 | 8 | 8 | 8 | 8 | 8 | 0 | 8 |
| Cs | 12 | 12 | 12 | 12 | 8 | 12 | 8 | 0 |

According to the foregoing technical solution, because the sequence $\vec{C}_1$ to the sequence $\vec{C}_8$, have better crosscorrelation, when the transmit-end device generates a plurality of synchronization header fields based on a plurality of sequences among the sequence $\vec{C}_1$ to the sequence $\vec{C}_8$, and sends the plurality of synchronization header fields in one channel, interference between different sequences can be reduced, and system transmission performance can be improved.

For example, the sequence set includes the sequence with a length of 31. The sequence with a length of 31 includes at least one of a sequence $\vec{C}_9$ and a sequence $\vec{C}_{10}$. The sequence $\vec{C}_9$ and the sequence $\vec{C}_{10}$ are shown in Table 11.

**Table 11 Sequence with a length of 31, sequence with a length of 91, and sequence with** a length of 127

| Sequence name | Sequence |
|---|---|
| $\vec{C}_9$ | {0, -1, 0, 0, 0, 0, 0, 0, 1, 0, 0, 1, -1, 0, -1, 0, 1, -1, 1, 1, 1, -1, 1, 1, 1, 1, 0, -1, 0, 0, 0} |
| $\vec{C}_{10}$ | {-1, 0, 1, 0, 0, 1, 0, -1, 1, -1, 0, -1, 1, 1, -1, -1, -1, -1, 0, -1, 0, 0, 0, 0, 0, 1, 0, 0, -1, 0, 0} |
| $\vec{C}_{11}$ | {-1, -1, 1, -1, 1, -1, 1, 0, -1, 0, 0, -1, 1, 1, -1, 1, 1, 1, 1, 0, -1, 1, 1, -1, 0, 0, -1, -1, 1, 1, -1, -1, 1, 1, -1, 1, -1, -1, -1, 1, 1, -1, 1, 1, 1, 1, -1, -1, -1, 1, -1, -1, 1, -1, 1, -1, -1, 1, -1, 0, 1, 1, 1, 1, -1, 1, -1, 1, 1, 1, -1, -1, -1, 1, 1, 1, 1, 1, 1, -1, 0, 1, 1, 1, 0, -1, 1, 0, 1, -1, -1} |
| $\vec{C}_{12}$ | {-1, -1, -1, 1, -1, -1, 0, -1, 1, -1, 1, 1, -1, -1, 1, -1, -1, 1, -1, 1, 0, -1, -1, 1, -1, -1, 0, 1, -1, -1, 1, 0, -1, -1, -1, -1, 1, 0, 1, 1, 1, 1, -1, -1, -1, 0, -1, -1, 1, -1, -1, 1, -1, 1, -1, 1, 1, 1, -1, 0, -1, 1, 1, 1, -1, -1, 1, 1, 1, 1, 0, 1, -1, 1, 0, 1, 1, 1, -1, -1, 1, -1, -1, -1, -1, 0, -1, -1, -1, 1, -1} |
| $\vec{C}_{13}$ | {0, 0, 0, 0, 0, -1, -1, 0, 0, -1, -1, -1, -1, 0, 0, 1, 0, 1, 1, -1, -1, 0, 0, 0, -1, 0, 0, 0, 0, 0, 0, 0, 1, 0, -1, 0, 0, 1, 0, 0, 0, -1, -1, 1, 0, 1, -1, 0, 0, 1, -1, 1, -1, -1, 1, 1, 1, 0, 1, 0, -1, 1, 0, 0, 1, 0, 0, 0, 0, 0, 1, 0, 1, -1, 1, -1, 1, 0, 0, 0, 1, 0, 0, 0, -1, 1, -1, -1, 0, 1, 1, 0, 0, -1, 0, -1, -1, 0, -1, -1, 1, 0, -1, 0, 0, 0, 1, 0, 1, 1, 1, 0, -1, 1, 1, 1, -1, 0, 0, -1, 0, -1, 0, 0, -1, 0, 0} |

For example, an element "1" in the sequences shown in Table 11 may be replaced with a symbol "+", and an element "-1" in the sequences may be replaced with a symbol "-". In other words, the sequences shown in Table 11 may be represented in a form shown in Table 12.

**Table 12 Sequence with a length of 31, sequence with a length of 91, and sequence with** a **length of 127**

| Sequence name | Sequence |
|---|---|
| $\vec{C}_9$ | {0 - 0 0 0 0 0 0 + 0 0 + - 0 - 0 + - + + + - + + + + 0 - 0 0 0} |
| $\vec{C}_{10}$ | {- 0 + 0 0 + 0 - + - 0 - + + - - - - 0 - 0 0 0 0 0 + 0 0 - 0 0} |
| $\vec{C}_{11}$ | {- - + - + - + 0 - 0 0 - + + - + + + + 0 - + + - 0 0 - - - + + - + + + + - - - + - - + - + - - + - 0 + + + + - + - + + + - - - + + + + + + - 0 + + + 0 - + 0 + - -} |
| $\vec{C}_{12}$ | {- - - + - - 0 - + - + + - - + - - + - + 0 - - + - - 0 + - - + 0 - - - - + 0 + + + + - - - 0 - - + - - + - + - + + + - 0 - + + + - - + + + + 0 + - + 0 + + + - - + - - - - 0 - - - + -} |
| $\vec{C}_{13}$ | {0 0 0 0 0 - - 0 0 - - - - 0 0 + 0 + + - - 0 0 0 - 0 0 0 0 0 0 0 + 0 - 0 0 + 0 0 0 - - + 0 + - 0 0 + - + - - + + + 0 + 0 - + 0 0 + 0 0 0 0 0 + 0 + - + - + 0 0 0 + 0 0 0 - + - - 0 + + 0 0 - 0 - - 0 - - + 0 - 0 0 0 + 0 + + + 0 - + + +-0 0 - 0 - 0 0 - 0 0} |

For example, aperiodic peak sidelobe ratios of the sequence $\vec{C}_9$ and the sequence $\vec{C}_{10}$ at the preset carrier frequency offset are greater than a second preset value. The second preset value may be a maximum value of an aperiodic peak sidelobe ratio of an Ipatov sequence with a length of 31 at the preset carrier frequency offset, or the second preset value may be a value greater than the maximum value of the aperiodic peak sidelobe ratio of the Ipatov sequence with a length of 31 at the preset carrier frequency offset. The second preset value is not limited in this embodiment of this application.

For example, aperiodic peak sidelobe ratios of the sequence $\vec{C}_9$ and the sequence $\vec{C}_{10}$ without a carrier frequency offset are greater than or equal to a sixth preset value. The sixth preset value may be a maximum value of an aperiodic peak sidelobe ratio of an Ipatov sequence with a length of 31 in a case in which no carrier frequency offset occurs, or the sixth preset value may be a value greater than the maximum value of the aperiodic peak sidelobe ratio of the Ipatov sequence with a length of 31 in a case in which no carrier frequency offset occurs. The sixth preset value is not limited in this embodiment of this application. For example, the sixth preset value may be an aperiodic peak sidelobe ratio of the 1st sequence in Table 6 at a carrier frequency offset of 40 ppm. To be specific, the sixth preset value is 18.06 dB.

Table 13 shows aperiodic peak sidelobe ratios of the sequence $\vec{C}_9$ and the sequence $\vec{C}_{10}$ without a carrier frequency offset and at a carrier frequency offset of 40 ppm, where $\vec{C}_9$ and $C_{10}$ are IDs of the sequence $\vec{C}_9$ and the sequence $\vec{C}_{10}$ respectively. Table 13 further shows aperiodic peak sidelobe ratios, defined in the 802.15 standard, of Ipatov sequences with a length of 31 in a case in which no carrier frequency offset occurs and at a carrier frequency offset of 40 ppm. It can be learned from Table 13 that a maximum value of aperiodic peak sidelobe ratios of the Ipatov sequences with a length of 31 at a carrier frequency offset of 40 ppm is 15.6 dB. To be specific, the second preset value may be 15.6 dB. In addition, aperiodic peak sidelobe ratios of the sequence $\vec{C}_9$ and the sequence $\vec{C}_{10}$ at a carrier frequency offset of 40 ppm are 17.3 dB and 17.2 dB respectively, and both are greater than 15.6 dB. This indicates that the sequence $\vec{C}_9$ and the sequence $\vec{C}_{10}$ have better anti-Doppler characteristics.

Further, it can be learned from Table 13 that the aperiodic peak sidelobe ratios of the Ipatov sequences with a length of 31 at a carrier frequency offset of 40 ppm are much lower than aperiodic peak sidelobe ratios without a carrier frequency offset, and the aperiodic peak sidelobe ratios of the sequence $\vec{C}_9$ and the sequence $\vec{C}_{10}$ at a carrier frequency offset of 40 ppm are slightly lower than aperiodic peak sidelobe ratios without a carrier frequency offset. This indicates that the sequence $\vec{C}_9$ and the sequence $\vec{C}_{10}$ have better anti-frequency-offset characteristics.

**Table 13 Aperiodic peak sidelobe ratios of sequences (unit:** dB)

| Sequence ID | 1 | 2 | 3 | 4 | 5 | 6 | 7 | 8 | $C_9$ | $C_{10}$ |
|---|---|---|---|---|---|---|---|---|---|---|
| Phase shift = 0 | 18.1 | 18.1 | 14.5 | 18.1 | 18.1 | 18.1 | 18.1 | 18.1 | 18.1 | 18.1 |
| Phase shift = 6.64e-4 | 15.0 | 15.0 | 13.4 | 15.6 | 15.0 | 15.0 | 11.6 | 13.7 | 17.3 | 17.2 |

According to the foregoing technical solution, because the aperiodic peak sidelobe ratios of the sequence $\vec{C}_9$ and the sequence $\vec{C}_{10}$ at the preset carrier frequency offset are greater than the second preset value, anti-Doppler characteristics of the sequence $\vec{C}_9$ and the sequence $\vec{C}_{10}$ are good. Therefore, when the transmit-end device generates a synchronization header field based on one of the sequence $\vec{C}_9$ and the sequence $\vec{C}_{10}$ and sends the synchronization header field, transmission performance and communication performance of the system can be improved. For example, even if a large frequency offset occurs between carriers, after receiving the synchronization header field generated based on the sequence $\vec{C}_9$ or the sequence $\vec{C}_{10}$, the receive-end device may also perform correlation detection on the sequence $\vec{C}_9$ or the sequence $\vec{C}_{10}$ and the synchronization header field, to implement synchronization between the receive-end device and the transmit-end device.

In addition, because the aperiodic peak sidelobe ratios of the sequence $\vec{C}_9$ and the sequence $\vec{C}_{10}$ without a carrier frequency offset are greater than or equal to the sixth preset value, aperiodic autocorrelation characteristics of the sequence $\vec{C}_9$ and the sequence $\vec{C}_{10}$ are low. This can reduce a rate of false detection performed by the receive-end device on a synchronization header field.

For example, the sequence set includes the sequence with a length of 91. The sequence with a length of 91 includes at least one of a sequence $\vec{C}_{11}$ and a sequence $\vec{C}_{12}$. The sequence $\vec{C}_{11}$ and the sequence $\vec{C}_{12}$ are shown in Table 11.

For example, aperiodic peak sidelobe ratios of the sequence $\vec{C}_{11}$ and the sequence $\vec{C}_{12}$ at the preset carrier frequency offset are greater than a third preset value. The third preset value may be a maximum value of an aperiodic peak sidelobe ratio of an Ipatov sequence with a length of 91 at the preset carrier frequency offset, or the third preset value may be a value greater than the maximum value of the aperiodic peak sidelobe ratio of the Ipatov sequence with a length of 91 at the preset carrier frequency offset. The third preset value is not limited in this embodiment of this application. For example, the third preset value may be an aperiodic peak sidelobe ratio of the 29th sequence in Table 6 at a carrier frequency offset of 40 ppm. To be specific, the third preset value is 28.76 dB.

For example, a maximum value of aperiodic peak sidelobe ratios of the sequence $\vec{C}_{11}$ and the sequence $\vec{C}_{12}$ without a carrier frequency offset is greater than or equal to a seventh preset value. The seventh preset value may be a maximum value of an aperiodic peak sidelobe ratio of an Ipatov sequence with a length of 91 in a case in which no carrier frequency offset occurs, or the seventh preset value may be a value greater than the maximum value of the aperiodic peak sidelobe ratio of the Ipatov sequence with a length of 91 in a case in which no carrier frequency offset occurs. The seventh preset value is not limited in this embodiment of this application. For example, the seventh preset value may be an aperiodic peak sidelobe ratio of the 29th sequence in Table 6 in a case in which no carrier frequency offset occurs. To be specific, the seventh preset value is 22.61 dB.

According to the foregoing technical solution, because the aperiodic peak sidelobe ratios of the sequence $\vec{C}_{11}$ and the sequence $\vec{C}_{12}$ at the preset carrier frequency offset are greater than the third preset value, anti-Doppler characteristics of the sequence $\vec{C}_{11}$ and the sequence $\vec{C}_{12}$ are good. Therefore, when the transmit-end device generates a synchronization header field based on one of the sequence $\vec{C}_{11}$ and the sequence $\vec{C}_{12}$ and sends the synchronization header field, transmission performance and communication performance of the system can be improved. For example, even if a large frequency offset occurs between carriers, after receiving the synchronization header field generated based on the sequence $\vec{C}_{11}$ or the sequence $\vec{C}_{12}$, the receive-end device may also perform correlation detection on the sequence $\vec{C}_{11}$ or the sequence $\vec{C}_{12}$ and the synchronization header field, to implement synchronization between the receive-end device and the transmit-end device.

In addition, because the aperiodic peak sidelobe ratios of the sequence $\vec{C}_{11}$ and the sequence $\vec{C}_{12}$ without a carrier frequency offset are greater than or equal to the seventh preset value, aperiodic autocorrelation characteristics of the sequence $\vec{C}_{11}$ and the sequence $\vec{C}_{12}$ are low. This can reduce a rate of false detection performed by the receive-end device on a synchronization header field.

For example, the sequence set includes the sequence with a length of 127. The sequence with a length of 127 includes a sequence $\vec{C}_{13}$. The sequence $\vec{C}_{13}$ is shown in Table 11.

For example, an aperiodic peak sidelobe ratio of the sequence $\vec{C}_{13}$ at the preset carrier frequency offset is greater than a fourth preset value. The fourth preset value may be a maximum value of an aperiodic peak sidelobe ratio of an Ipatov sequence with a length of 127 at the preset carrier frequency offset, or the fourth preset value may be a value greater than the maximum value of the aperiodic peak sidelobe ratio of the Ipatov sequence with a length of 127 at the preset carrier frequency offset. The fourth preset value is not limited in this embodiment of this application. For example, the fourth preset value may be an aperiodic peak sidelobe ratio of the 9th sequence in Table 6 at a carrier frequency offset of 40 ppm. To be specific, the fourth preset value is 19.71 dB.

For example, an aperiodic peak sidelobe ratio of the sequence $\vec{C}_{13}$ without a carrier frequency offset is greater than or equal to an eighth preset value. The eighth preset value may be a maximum value of an aperiodic peak sidelobe ratio of an Ipatov sequence with a length of 127 in a case in which no carrier frequency offset occurs, or the eighth preset value may be a value greater than the maximum value of the aperiodic peak sidelobe ratio of the Ipatov sequence with a length of 127 in a case in which no carrier frequency offset occurs. The eighth preset value is not limited in this embodiment of this application. For example, the eighth preset value may be an aperiodic peak sidelobe ratio of the 9th sequence in Table 6 in a case in which no carrier frequency offset occurs. To be specific, the fourth preset value is 22.14 dB.

According to the foregoing technical solution, because the aperiodic peak sidelobe ratio of the sequence $\vec{C}_{13}$ at the preset carrier frequency offset is greater than the fourth preset value, an anti-Doppler characteristic of the sequence $\vec{C}_{13}$ is good. Therefore, when the transmit-end device generates a synchronization header field based on the sequence $\vec{C}_{13}$ and sends the synchronization header field, transmission performance and communication performance of the system can be improved. For example, even if a large frequency offset occurs between carriers, after receiving the synchronization header field generated based on the sequence $\vec{C}_{13}$, the receive-end device may also perform correlation detection on the sequence $\vec{C}_{13}$ and the synchronization header field, to implement synchronization between the receive-end device and the transmit-end device.

In addition, because the aperiodic peak sidelobe ratio of the sequence $\vec{C}_{13}$ without a carrier frequency offset is greater than or equal to the eighth preset value, an aperiodic autocorrelation characteristic of the sequence $\vec{C}_{13}$ is low. This can reduce a rate of false detection performed by the receive-end device on a synchronization header field.

For example, the sequence set includes the sequence with a length of 64. The sequence with a length of 64 includes a sequence $\vec{C}_{14}$. The sequence $\vec{C}_{14}$ is shown in Table 14.

**Table 14 Sequence with a length of 64**

| Sequence name | Sequence |
|---|---|
| $\vec{C}_{14}$ | {1, 1, 1, -1, 1, 1, -1, 1, 1, 1, 1, -1, -1, -1, 1, -1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1} |

For example, an element "1" in the sequence shown in Table 14 may be replaced with a symbol "+", and an element "-1" in the sequence may be replaced with a symbol "-". In other words, the sequence shown in Table 14 may be represented in a form shown in Table 15.

**Table 15 Sequence with a length of 64**

| Sequence name | Sequence |
|---|---|
| $\vec{C}_{14}$ | {+ + + - + + - + + + + - - - + - + + + - + + - + - - - + + + - + + + + - + + - + + + + - - - + - - - - + - - + - + + + - - - + -} |

For example, a length of a zero correlation zone of the sequence $\vec{C}_{14}$ is greater than or equal to a fifth preset value. The fifth preset value may be a maximum value of lengths of zero correlation zones of sequences included in a Golay (Golay) zero correlation zone (zero correlation zone, ZCZ) sequence set, or may be an average value of lengths of zero correlation zones of sequences included in a Golay ZCZ sequence set. It should be noted that the fifth preset value is not limited in this embodiment of this application.

For example, the sequence $\vec{C}_{14}$ is a sequence having a zero correlation zone with a largest length in the Golay ZCZ sequence set.

The Golay ZCZ sequence set may be expressed as a formula 14.

$$G = \left\{ f + \frac{q}{2} \sum_{\alpha=1}^{k} d_\alpha x_{\pi_\alpha(m_\alpha)}, d_\alpha \in Z_2 \right\}$$

Formula 14

$$f = \frac{q}{2} \sum_{\alpha=1}^{k} \sum_{\beta=1}^{m_{\alpha-1}} x_{\pi_\alpha(\beta)} x_{\pi_\alpha(\beta+1)} + \sum_{i=1}^{m} c_i x_i + c_0$$

, $q$ is an even number, $m$ is an integer, $m \geq 2$, and $k \leq m$-1. $l_1, l_2, \cdots, l_k$ are obtained by dividing a set $\{1, 2, ..., m\}$, $\pi_\alpha$ is a bijection from $\{1, 2, \cdots, m_\alpha$ to $l_\alpha$, $m_\alpha = |l_\alpha| \geq 1, \alpha = 2, \cdots, k$, and $m_1 = |l_1| \geq 2$. $c_i \in Z_q$, $i =$

$$c_m \in \left\{ 0, \frac{q}{2} \right\},$$

$0, 1, \cdots, m$-1, and $\pi_a(1) = m - \alpha + 1, \alpha = 1, 2, \cdots, k$.

According to the foregoing technical solution, because the length of the zero correlation zone of the sequence $\vec{C}_{14}$ is greater than or equal to the fifth preset value, the sequence $\vec{C}_{14}$ has a good local correlation characteristic and anti-frequency-offset characteristic. This can ensure that the receive-end device implements synchronization between the receive-end device and the transmit-end device based on the sequence $\vec{C}_{14}$ and a synchronization header field generated based on the sequence $\vec{C}_{14}$, and avoid a false alarm problem caused by a device. In addition, because the sequence $\vec{C}_{14}$ is a binary sequence, structures of the transmit-end device and the receive-end device can be further simplified.

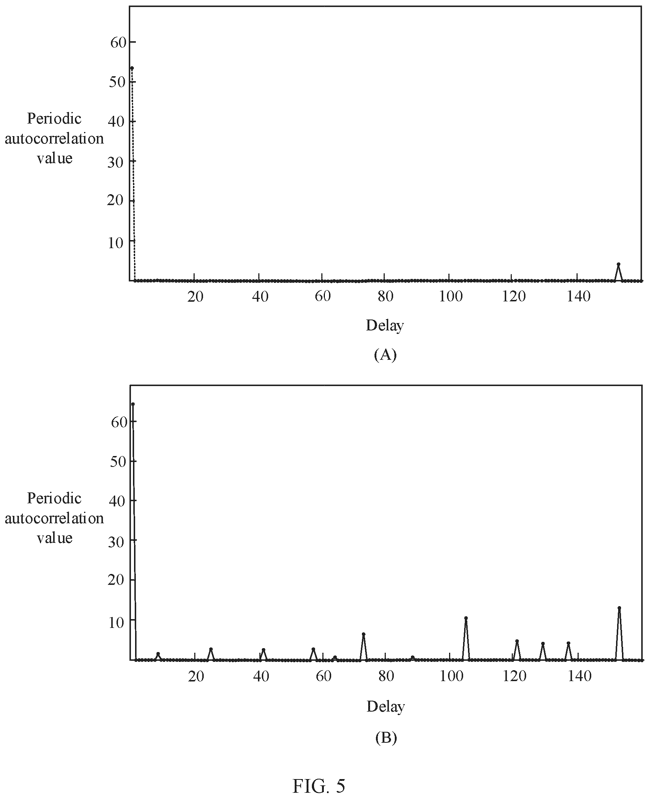

FIG. 5 is a diagram of a periodic autocorrelation function of the sequence $\vec{C}_{14}$. In FIG. 5, a horizontal coordinate indicates a delay, and a vertical coordinate indicates a periodic autocorrelation value of the sequence $\vec{C}_{14}$. It can be learned from (A) in FIG. 5 that, when no carrier frequency offset occurs and a delay is less than 152, a value of the periodic autocorrelation function of the sequence $\vec{C}_{14}$ is 0. Therefore, it can be learned that the sequence $\vec{C}_{14}$ has a good local correlation characteristic. It can be learned from (B) in FIG. 5 that, at a carrier frequency offset of 40 ppm, a maximum sidelobe of the sequence $\vec{C}_{14}$ within an area of (0, 72) is 2.66. Therefore, it can be learned that the sequence $\vec{C}_{14}$ has a good anti-frequency-offset characteristic.

In this embodiment of this application, the sequence set for generating the synchronization header field may include any one of the sequence with a length of 127, the sequence with a length of 31, the sequence with a length of 91, and the sequence with a length of 64. Alternatively, the sequence set includes a combination of a plurality of sequences with different lengths among the sequence with a length of 127, the sequence with a length of 31, the sequence with a length of 91, and the sequence with a length of 64, for example, a combination of the sequence with a length of 127, the sequence with a length of 31, and the sequence with a length of 91. Alternatively, the sequence set includes the sequence with a length of 127, the sequence with a length of 31, the sequence with a length of 91, and the sequence with a length of 64.

The synchronization header field generated by the transmit-end device based on the sequence set is, for example, the SHR field shown in FIG. 2, and may include a SYNC field and an SFD field. The SYNC field includes a plurality of repeated basic symbols $s_i$. The SFD field may be obtained through extension based on a basic symbol and a preset sequence (or a specified sequence).

It can be understood that $s_i$ is generated based on the sequence set. $s_i$ may be directly generated based on a sequence in the sequence set; or equivalent transformation is first performed on a sequence in the sequence set, and $s_i$ is generated based on a transformed sequence. For example, the equivalent transformation may be performing a cyclic shift operation on a sequence in the sequence set, or may be performing an order reversing operation on a sequence in the sequence set, or performing a cyclic shift operation and an order reversing operation on a sequence in the sequence set to form a new sequence. The order reversing operation may also be understood as a head-to-tail reversing operation or an inversion operation. For example, a result of an order reversing operation on a sequence {a, b, c, d, e} is {e, d, c, b, a}.

It can be further understood that the "generating a synchronization header field based on a sequence set" may also be understood as generating a basic symbol based on a sequence in the sequence set, where the synchronization header field includes the basic symbol; or may be understood as generating a PPDU based on a sequence in the sequence set, where the PPDU includes the synchronization header field.

A sequence $\vec{a}$ is used as an example to describe an implementation of generating a synchronization header field based on a sequence. In a possible implementation, generating a synchronization header field based on the sequence $\vec{a}$ may include the following steps.

(1) The sequence $\vec{a}$ is extended to generate a basic symbol $S_i$ to adapt to a corresponding average pulse repetition frequency (pulse repetition frequency, PRF). The pulse repetition frequency is a quantity of pulses transmitted per second, and is a reciprocal of a pulse repetition interval (pulse repetition interval, PRI). The pulse repetition interval is a time interval between a pulse and a next pulse.

For example, a process of generating $S_i$ is expressed by using a mathematical formula as follows: $S_i = \vec{a} \otimes \delta_L(n)$. $\otimes$ indicates a Kronecker product (Kronecker product). $\delta_L(n)$ is a Delta function, and may also be referred to as a unit

$$\delta_L(n) = \begin{cases} 1 & n = 0 \\ 0 & n = 1, 2, \cdots, N-1 \end{cases}$$

pulse function. , where $N$ is a length of the Delta function.

(2) According to a specification in a standard, the basic symbol is repeated for a specified quantity K of times to obtain a synchronization field SYNC, where SYNC=$\{S_i, S_i, \cdots, S_i\}$, and K is a positive integer.

(3) An SFD field is added, where the SFD field may be obtained by extending the basic symbol $S_i$ by using a preset sequence. For example, the preset sequence may be {0, 1, 0, 1, 1, 0, 0, 1}. In this case, SFD = $S_i \otimes$ {0, 1, 0, 1, 1, 0, 0, 1}.

A synchronization header field SHR may be obtained based on the foregoing steps: SHR = [SYNC, SFD]=[$S_i$, $S_i$, $\cdots$, $S_i$, SFD].

It can be understood that, in step (1), when the basic symbol $s_i$ is generated based on the sequence $\vec{a}$, equivalent transformation may be first performed on the sequence $\vec{a}$ to obtain an equivalently transformed sequence of the sequence $\vec{a}$, and then $s_i$ is generated based on the equivalently transformed sequence. The equivalent transformation includes performing a cyclic shift operation and/or an order reversing operation on the sequence $\vec{a}$.

It can be further understood that the SFD may have many different designs, and the SFD in step (3) is merely an example. This is not limited in this embodiment of this application.

S420: The transmit-end device sends the synchronization header field.

Correspondingly, a receive end receives the synchronization header field.

For example, that the transmit-end device sends the synchronization header field includes: The transmit-end device sends a PPDU based on UWB, where the PPDU includes the synchronization header field. Correspondingly, the receive-end device receives the PPDU.

A structure of the PPDU may be similar to the structure shown in FIG. 2, and includes an SHR field, a PHR field, and a PHY payload field. Details are not described herein again.

For example, the PPDU is a PPDU used for ranging or a PPDU used for sensing.

S430: The receive-end device performs correlation detection based on the sequence set and the synchronization header field.

For example, the correlation detection in S430 may be autocorrelation detection or crosscorrelation detection. A specific method for correlation detection is not limited in this embodiment of this application. When the synchronization header field is included in the PPDU, the receive-end device may determine, based on a correlation detection result, whether a PPDU is detected and a position of the PPDU. A specific method for determining, based on the correlation detection result, to perform synchronization may be a technology known to a person skilled in the art or a newly developed technology. This is not limited in this application.

In this embodiment of this application, the sequence set may include sequences with different lengths, to meet requirements in different scenarios. To be specific, the transmit-end device may select, according to a requirement, sequences with different lengths to generate a synchronization header field, and send the synchronization header field, to implement synchronization between the receive-end device and the transmit-end device.

In addition, a sequence included in the sequence set has at least one of the following characteristics: a good anti-frequency-offset characteristic, a good anti-Doppler characteristic, a good aperiodic autocorrelation characteristic, or a large length of a zero correlation zone. Therefore, when the synchronization header field is transmitted based on the sequence set provided in this embodiment of this application, system transmission performance can be improved, a rate of false detection performed by the receive-end device on the synchronization header field can be reduced, and so on. In addition, if the synchronization header field generated based on the sequence set provided in this embodiment of this application is included in a PPDU and the PPDU is a PPDU used for ranging or sensing, performance of ranging or sensing performed by the receive-end device based on the PPDU is not affected by a change in a transmission environment of the PPDU. For example, if a sequence used to generate the synchronization header field has a good anti-frequency-offset characteristic, for example, the sequence used to generate the synchronization header field is a sequence in Table 7, even in a transmission environment with a large carrier offset, performance of ranging or sensing performed by the receive-end device based on the PPDU is not greatly affected by the carrier frequency offset. For another example, if a sequence used to generate the synchronization header field has a good aperiodic autocorrelation characteristic and a good anti-Doppler characteristic, for example, the sequence used to generate the synchronization header field is a sequence in Table 11, performance of synchronization, ranging, or sensing in a case in which no carrier frequency offset occurs can be determined, and a false detection problem caused by a device can be avoided. For another example, if a sequence used to generate the header field has a zero correlation zone with a large length, the PPDU including the synchronization header field has a longer detection distance and a larger delay tolerance range, to ensure performance of ranging or sensing performed based on the PPDU and avoid a false alarm problem caused by a device.

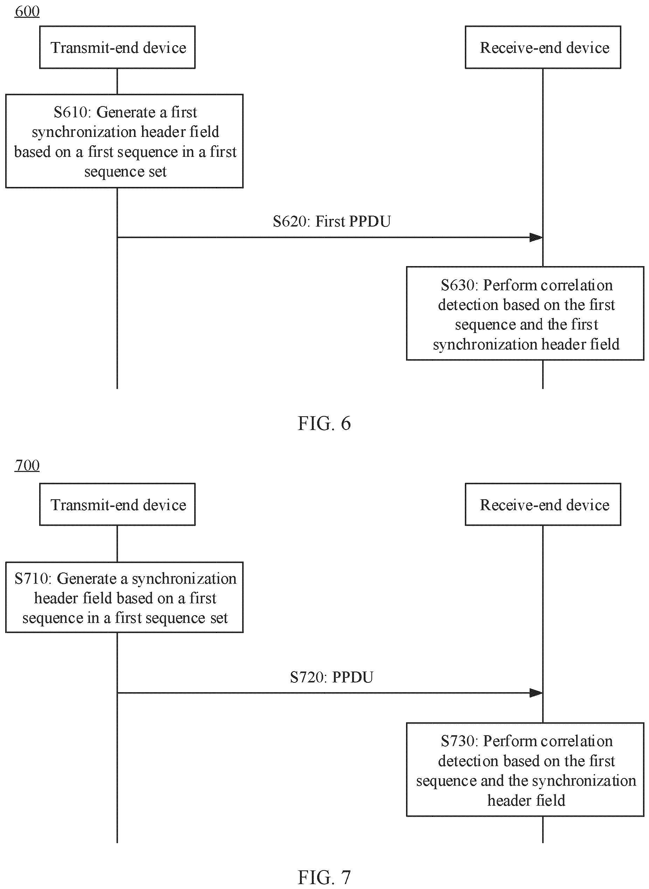

FIG. 6 is a schematic flowchart of a communication method 600 according to an embodiment of this application. The method 600 may include the following steps.

S610: A transmit-end device generates a first synchronization header field based on a first sequence in a first sequence set.

The first sequence is any sequence in the first sequence set. Each sequence in the first sequence set is obtained by shifting and/or sampling a sequence in a second sequence set, and the first sequence set and the second sequence set meet one or more of the following relationships: Relationship #1: A minimum value of M periodic peak sidelobe ratios of the first sequence set at a preset carrier frequency offset is greater than a minimum value of N periodic peak sidelobe ratios of the second sequence set at the preset carrier frequency offset. Relationship #2: An average value of the M periodic peak sidelobe ratios is greater than an average value of the N periodic peak sidelobe ratios. The M periodic peak sidelobe ratios are in a one-to-one correspondence with M sequences included in the first sequence set. The N periodic peak sidelobe ratios are in a one-to-one correspondence with N sequences included in the second sequence set. Both M and N are positive integers.

For example, the second sequence set is a sequence set including Ipatov sequences. For example, the second sequence set is a sequence set including Ipatov sequences with a length of 127, or the second sequence set is a sequence set including Ipatov sequences with a length of 91, or the second sequence set is a sequence set including Ipatov sequences with a length of 31.

Optionally, the first sequence set and the second sequence set further meet one or more of the following relationships: Relationship #3: A maximum value of cross correlation values of the first sequence set is less than a maximum value of crosscorrelation values of the second sequence set. Relationship #4: An average value of the crosscorrelation values of the first sequence set is less than an average value of the crosscorrelation values of the second sequence set.

Assuming that lengths of all sequences included in the first sequence set are L, the maximum value $\delta_{\max}^1$ of the crosscorrelation values of the first sequence set is defined as follows:

$$\delta_{\max}^1 = \max\{|R_{\vec{a},\vec{b}}(\tau) = \sum_{l=0}^{L-1} a_l \times b_{l+\tau}^H|\}$$

, where $\tau \in$ [0, $L$ - 1], and $\vec{a}$ and $\vec{b}$ are any two sequences in the first sequence set. The average value $\delta_{avg}^1$ of the crosscorrelation values of the first sequence set is defined as follows:

$$\delta_{avg}^1 = \frac{\sum_{j=1}^{N}\sum_{i=1}^{N}\sum_{l=0}^{L-1} a_{i,l} \times b_{j,(l+\tau)}^H}{N \cdot N \cdot L}$$

, where $a_{i,l}$ indicates an $l$th element of an $i$th sequence in the first sequence set, $b_{j,(l+\tau)}$ indicates an $l$th element of a $j$th sequence in the first sequence set, and when $l + \tau \geq L$, $b_{l+\tau} = b_{l+\tau-L}$.

Assuming that lengths of all sequences included in the second sequence set are L, the maximum value $\delta_{\max}^2$ of the cross correlation values of the second sequence set is defined as follows:

$$\delta_{\max}^1 = \max\{|R_{\vec{c},\vec{d}}(\tau) = \sum_{l=0}^{L-1} c_l \times d_{l+\tau}^H|\}$$

, where $\tau \in$ [0, $L$ - 1], and $\vec{a}$ and $\vec{b}$ are any two sequences in the first sequence set. The average value $\delta_{avg}^2$ of the crosscorrelation values of the second sequence set is defined as follows:

$$\delta_{avg}^2 = \frac{\sum_{j=1}^{M}\sum_{i=1}^{M}\sum_{l=0}^{L-1} c_{i,l} \times d_{j,(l+\tau)}^H}{M \cdot M \cdot L}$$

, where $c_{i,l}$ indicates an $l$th element of an $i$th sequence in the second sequence set, $d_{j,(l+\tau)}$ indicates an $l$th element of a $j$th sequence in the first sequence set, and when $l + \tau \geq L$, $d_{l+\tau} = d_{l+\tau-L}$.

Optionally, the first sequence set includes four sequences or eight sequences.

In a possible implementation, each sequence in the first sequence set is obtained by shifting a sequence in the second sequence set. In other words, each sequence in the first sequence set is obtained by moving a sequence in the second sequence set rightward by *k* bits, or each sequence in the first sequence set is obtained by moving a sequence in the second sequence set leftward by *k* bits, where *k* is a positive integer. If lengths of sequences included in the second sequence set are *L*, $1 \leq k \leq L\text{-}1$. For example, if a sequence #1 in the second sequence set is denoted as $\vec{s}$ = ($s_0,s_1,$ $s_2,...,s_{L-1}$), a sequence obtained by moving the sequence #1 rightward by *k* bits may be expressed as $\vec{s}'$=($s_{L-k},s_{L-k+1},...,s_{L-1},s_0,s_1,...,s_{L-k-1}$), and a sequence obtained by moving the sequence #1 leftward by *k* bits may be expressed as $\vec{s}''$ = ($s_k,s_{k+1},...,s_{L-1},s_0,s_1,...,s_{L-k-1}$). It should be noted that a length of the sequence obtained by shifting the sequence #1 is the same as a length of the sequence #1.

For example, a sequence #A in the first sequence set is obtained by moving the sequence #1 in the second sequence set rightward by 1 bit, and a sequence #B in the first sequence set is obtained by moving a sequence #2 in the second sequence set rightward by 2 bits.

In another possible implementation, each sequence in the first sequence set is obtained by sampling a sequence in the second sequence set, a sampling multiple e and a length L of the sequence in the second sequence set are co-prime to each other, and e is a positive integer. For example, if the sequence #1 in the second sequence set is denoted as $\vec{s}$ = ($s_0,s_1,s_2,...,s_{L-1}$), a sequence obtained by sampling the sequence #1 at the sampling multiple e may be expressed as $\vec{s}'$ = ($s_{e\cdot e'},s_{2e\cdot e'},s_{3e\cdot e'},...,s_{L\cdot e\cdot e'}$), where $1 \leq e' \leq e$, and when ($l\cdot e\text{-}e'$) > (L-1), $s_{l\cdot e\text{-}e'}$ = $s_{(l\cdot e\text{-}e')\bmod L}$, where $1 \leq l \leq L$, and mod indicates a modulo operation. It should be noted that a length of the sequence obtained by sampling the sequence #1 is the same as a length of the sequence #1.

For example, a sequence #A in the first sequence set is obtained by performing 4× sampling on the sequence #1 in the second sequence set, and a sequence #B in the first sequence set is obtained by performing 2× sampling on a sequence #2 in the second sequence set.

In a possible implementation, each sequence in the first sequence set is obtained by shifting and sampling a sequence in the second sequence set.

For example, a sequence #A in the first sequence set is obtained by performing 4× sampling on a sequence #1 in the second sequence set and then moving a sampled sequence rightward by 1 bit, and a sequence #B in the first sequence set is obtained by moving a sequence #2 in the second sequence set leftward by 1 bit and then performing 3× sampling on a shifted sequence. It should be noted that a length of the sequence obtained by sampling and shifting the sequence #1 is the same as a length of the sequence #1, and a length of the sequence obtained by shifting and sampling the sequence #2 is the same as the length of the sequence #2.

In a possible implementation, different sequences in the first sequence set are obtained by performing different processing on sequences in the second sequence set. For example, some sequences in the first sequence set are obtained by shifting sequences in the second sequence set, and other sequences in the first sequence set are obtained by sampling sequences in the second sequence set. For another example, some sequences in the first sequence set are obtained by sampling sequences in the second sequence set, and other sequences in the first sequence set are obtained by shifting and sampling sequences in the second sequence set.

A manner of generating the first sequence set is not limited in this embodiment of this application.

In a possible implementation, the first sequence set is obtained by shifting and/or sampling one or more sequences in the second sequence set. To be specific, if a sequence set #1 obtained by shifting and/or sampling one or more sequences in the second sequence set and the second sequence set meet the relationship #1 and/or the relationship #2, the sequence set #1 is used as the first sequence set.

For example, the sequence set #1 is obtained by shifting a sequence #1 in the second sequence set rightward by 1 bit, 2 bits, 3 bits, ..., and *L*-1 bits separately. For example, if *L* = 5 and the sequence #1 is expressed as $\vec{s}$ = ($s_0,s_1,s_2,s_3,s_4$), the sequence set #1 obtained by shifting the sequence #1 includes four sequences that are expressed as $\vec{s}_1$ = ($s_4,s_0,s_1,s_2,s_3$), $\vec{s}_2$ = ($s_3,s_4,s_0,s_1,s_2$), $\vec{s}_3$ = ($s_2,s_3,s_4,s_0,s_1$), and $\vec{s}_4$ = ($s_1,s_2,s_3,s_4,s_0$) respectively. Further, if the sequence set #1 and the second sequence set meet the relationship #1 and/or the relationship #2, the sequence set #1 is used as the first sequence set.

In another possible implementation, the first sequence set is obtained by filtering a sequence set #1, where the sequence set #1 is obtained by shifting and/or sampling one or more sequences in the second sequence set.

For example, steps of obtaining the first sequence set by filtering the sequence set #1 include: S1: Calculate a periodic peak sidelobe ratio of each sequence in the sequence set #1 at the preset carrier frequency offset. S2: Select M sequences based on the periodic peak sidelobe ratio of each sequence at the preset carrier frequency offset to form the first sequence set, where a periodic peak sidelobe ratio of each of the M sequences is greater than the minimum value of the N periodic peak sidelobe ratios. It can be understood that the first sequence set obtained by filtering the sequence set #1 according to the foregoing steps and the second sequence set meet the relationship #1 and/or the relationship #2.

For another example, steps of obtaining the first sequence set by filtering the sequence set #1 include: S1: Randomly select one or more sequences from the sequence set #1 to form a sequence set #2. S2: If the sequence set #2 and the second sequence set meet the relationship #1 and/or the relationship #2, use the sequence set #2 as the first sequence set. If the sequence set #2 and the second sequence set do not meet the relationship #1 or the relationship #2, continue to filter the sequence set #1 until a sequence set #2 including one or more sequences selected from the sequence set #1 and the second sequence set meet the relationship #1 and/or the relationship #2.

In still another possible implementation, if the first sequence set and the second sequence set further meet the relationship #3 and/or the relationship #4, the first sequence set is the same as a third sequence set, or the first sequence set is a subset of the third sequence set. Each sequence in the third sequence set is obtained by shifting and/or sampling a sequence in the second sequence set, and the third sequence set and the second sequence set meet one or more of the following relationships: Relationship #5: A minimum value of L periodic peak sidelobe ratios of the third sequence set at the preset carrier frequency offset is greater than the minimum value of the N periodic peak sidelobe ratios. Relationship #6: An average value of the L periodic peak sidelobe ratios is greater than the average value of the N periodic peak sidelobe ratios. The L periodic peak sidelobe ratios are in a one-to-one correspondence with L sequences included in the third sequence set. For a manner of generating the third sequence set, refer to the manner of generating the first sequence set that meets the relationship #1 and/or the relationship #2 with the second sequence set.

For example, after the third sequence set is obtained based on the second sequence set, the third sequence set and the second sequence set meet one or more of the following relationships: Relationship #7: A maximum value of crosscorrelation values of the third sequence set is less than the maximum value of the crosscorrelation values of the second sequence set. Relationship #8: An average value of the crosscorrelation values of the third sequence set is less than the average value of the crosscorrelation values of the second sequence set. In this case, the third sequence set is used as the first sequence set. In other words, the first sequence set is the same as the third sequence set. For definitions of the maximum value and the average value of the crosscorrelation values of the third sequence set, refer to the foregoing definitions of the maximum value and the average value of the crosscorrelation values of the first sequence set.

For another example, after the third sequence set is obtained based on the second sequence set, the first sequence set is obtained by searching the third sequence set. For example, the first sequence set is obtained by searching the third sequence set by using a dynamic programming algorithm and/or a pruning algorithm. It can be understood that the first sequence set obtained by searching the third sequence set is a subset of the third sequence set.

For example, a manner of obtaining the first sequence set by searching the third sequence set by using the dynamic programming algorithm is as follows: "M sequences selected from the third sequence set" are used as an independent variable of the dynamic programming algorithm. "A maximum value and/or an average value of crosscorrelation values of a sequence set including the M sequences" are used as a dependent variable of the dynamic programming algorithm. That "the maximum value of the crosscorrelation values of the sequence set including the M sequences is less than the maximum value of the crosscorrelation values of the second sequence set, and/or the average value of the crosscorrelation values of the sequence set including the M sequences is less than the average value of the crosscorrelation values of the second sequence set" is used as a principle that the dynamic programming algorithm needs to conform. In this way, the first sequence set is obtained by searching the third sequence set.

An example of the first sequence set provided in this embodiment of this application is shown in Table 7. Periodic peak sidelobe ratios of the first sequence set shown in Table 7 at a carrier frequency offset of 40 ppm are shown in Table 9. Table 9 further shows periodic peak sidelobe ratios of the second sequence set at a carrier frequency offset of 40 ppm, and the second sequence set is a sequence set including Ipatov sequences with a length of 127. It can be learned from Table 9 that a minimum value of eight periodic peak sidelobe ratios of the first sequence set at a carrier frequency offset of 40 ppm is 16.35 dB, and a minimum value of eight periodic peak sidelobe ratios of the second sequence set at a carrier frequency offset of 40 ppm is 14.37 dB. Therefore, the first sequence set shown in Table 7 and the second sequence set meet the relationship #1. In addition, an average value of the eight periodic peak sidelobe ratios of the first sequence set at a carrier frequency offset of 40 ppm is 16.9 dB, and an average value of the eight periodic peak sidelobe ratios of the second sequence set at a carrier frequency offset of 40 ppm is 16.61 dB. Therefore, the first sequence set shown in Table 7 and the second sequence set further meet the relationship #2.

Cross correlation values of the first sequence set shown in Table 7 are shown in Table 10. Based on comparison with crosscorrelation values of a second sequence set including Ipatov sequences with a length of 127 in Table 4, a maximum value of the crosscorrelation values of the first sequence set is 12, and a maximum value of the crosscorrelation values of the second sequence set is 16. Therefore, the first sequence set shown in Table 7 and the second sequence set further meet the relationship #3. In addition, an average value of the crosscorrelation values of the first sequence set is 8.75, and an average value of the crosscorrelation values of the second sequence set is 9.4375. Therefore, the first sequence set shown in Table 7 and the second sequence set further meet the relationship #4.

For a manner of generating, by the transmit-end device, the first synchronization header field based on the first sequence in the first sequence set, refer to S410 in FIG. 4.

For example, the method 600 further includes: The transmit-end device generates a second synchronization header field based on a second sequence in the first sequence set.

The second sequence is any sequence different from the first sequence in the first sequence set. For a manner of generating, by the transmit-end device, the second synchronization header field based on the second sequence, refer to S410 in the method 400.

S620: The transmit-end device sends a first PPDU.

The first PPDU includes the first synchronization header field. Correspondingly, a receive-end device receives the first PPDU.

For example, if the transmit-end device generates the second synchronization header field based on the second sequence, in S620, the transmit-end device further sends a second PPDU, where the second PPDU includes the second synchronization header field.

A structure of the PPDU may be similar to the structure shown in FIG. 2, and includes an SHR field, a PHR field, and a PHY payload field. Details are not described herein again.

For example, in S620, the receive-end device receives the first PPDU and the second PPDU; or a first receive-end device receives the first PPDU, and a second receive-end device receives the second PPDU; or a first receive-end device receives the first PPDU and the second PPDU, and a second receive-end device receives the first PPDU and the second PPDU. This is not limited.

S630: The receive-end device performs correlation detection based on the first sequence and the first synchronization header field.

For example, the correlation detection in S630 may be autocorrelation detection or crosscorrelation detection. A specific method for correlation detection is not limited in this embodiment of this application.

For example, if the receive-end device further receives the second PPDU, in S630, the receive-end device performs correlation detection based on the second sequence and the second synchronization header field.

In this embodiment of this application, because the first sequence set and the second sequence set meet the relationship #1 and/or the relationship #2, a sequence in the first sequence set has a better anti-frequency-offset characteristic than a sequence in the second sequence set, and even if a large frequency offset occurs between carriers, a periodic peak sidelobe ratio of the first sequence in the first sequence set is also high. Therefore, after the transmit-end device generates the first synchronization header field based on the first sequence and sends the first PPDU including the first synchronization header field, a probability that the receive-end device performs false detection on the first PPDU is low, so that system performance can be improved. For example, when the first PPDU is a PPDU used for ranging or sensing, performance of ranging or sensing performed by the receive-end device based on the first PPDU is not greatly affected by a carrier frequency offset.

In addition, if the first sequence set and the second sequence set further meet the relationship #3 and/or the relationship #4, a sequence in the first sequence set has better anti-interference performance than a sequence in the second sequence set. When the transmit-end device generates the first synchronization header field based on the first sequence in the first sequence set and generates the second synchronization header field based on the second sequence in the first sequence set, and when the transmit-end device simultaneously sends, in one channel, the first PPDU including the first synchronization header field and the second PPDU including the second synchronization header field, a crosscorrelation value between the second sequence and the first sequence is small. Therefore, interference between the first PPDU and the second PPDU is small, so that transmission performance can be improved.

FIG. 7 is a schematic flowchart of a communication method 700 according to an embodiment of this application. The method 700 may include the following steps.

S710: A transmit-end device generates a synchronization header field based on a first sequence in a first sequence set.

The first sequence is any sequence in the first sequence set. The first sequence set and a second sequence set meet one or more of the following relationships: Relationship #A: A minimum value of M aperiodic peak sidelobe ratios of the first sequence set at a preset carrier frequency offset is greater than a minimum value of N aperiodic peak sidelobe ratios of the second sequence set at the preset carrier frequency offset. Relationship #B: An average value of the M aperiodic peak sidelobe ratios is greater than an average value of the N aperiodic peak sidelobe ratios. The M aperiodic peak sidelobe ratios are in a one-to-one correspondence with M sequences included in the first sequence set. The N aperiodic peak sidelobe ratios are in a one-to-one correspondence with N sequences included in the second sequence set.

For descriptions of the second sequence set, refer to S610 in the method 600.

A manner of generating the first sequence set is not limited in this embodiment of this application.

In a possible implementation, the first sequence set is obtained by filtering a sequence set #A, where the sequence set #A is a randomly generated sequence set.

For example, steps of obtaining the first sequence set by filtering the sequence set #2 include: S1: Calculate an aperiodic peak sidelobe ratio of each sequence in the sequence set #A at the preset carrier frequency offset. S2: Select M sequences based on the aperiodic peak sidelobe ratio of each sequence at the preset carrier frequency offset to form the first sequence set, where an aperiodic peak sidelobe ratio of each of the M sequences is greater than the minimum value of the N aperiodic peak sidelobe ratios, or an aperiodic peak sidelobe ratio of each of the M sequences is greater than a maximum value of the N aperiodic peak sidelobe ratios. It can be understood that the first sequence set obtained by filtering the sequence set #1 according to the foregoing steps and the second sequence set meet the relationship #A and/or the relationship #B.

For another example, steps of obtaining the first sequence set by filtering the sequence set #A include: S1: Randomly select one or more sequences from the sequence set #A to form a sequence set #B. S2: If the sequence set #B and the second sequence set meet the relationship #A and/or the relationship #B, use the sequence set #B as the first sequence set. If the sequence set #B and the second sequence set do not meet the relationship #A or the relationship #B, continue to filter the sequence set #A until a sequence set #B including one or more sequences selected from the sequence set #A and the second sequence set meet the relationship #A and/or the relationship #B.

In another possible implementation, each sequence in the first sequence set is obtained through searching by using a coordinate descent algorithm and/or a genetic algorithm.

For example, a manner of obtaining a sequence in the first sequence set through searching by using the coordinate descent algorithm is as follows: A sequence set #A including Z (Z is a positive integer) sequences is randomly generated, where a length of each sequence in the sequence set #A is L. The $1^{st}$ elements of all sequences in the sequence set #A are flipped to form a sequence set #B, where if the $1^{st}$ element of a sequence is "-1", the $1^{st}$ element is flipped to "1"; if the $1^{st}$ element of a sequence is "1", the $1^{st}$ element is flipped to "-1"; and if the $1^{st}$ element of a sequence is "0", the $1^{st}$ element remains unchanged. An aperiodic peak sidelobe ratio of each sequence in the sequence set #B at a preset carrier frequency offset is calculated, and a sequence #A with a largest aperiodic peak sidelobe ratio is selected. If the aperiodic peak sidelobe ratio of the sequence #A at the preset carrier frequency offset is greater than the maximum value of the N aperiodic peak sidelobe ratios, the sequence #A is used as a sequence in the first sequence set. If the aperiodic peak sidelobe ratio of the sequence #A at the preset carrier frequency offset is less than the maximum value of the N aperiodic peak sidelobe ratios, the $2^{nd}$ element of each sequence in the sequence set #B continues to be flipped until a sequence meeting a requirement is selected.

For another example, a manner of obtaining a sequence in the first sequence set through searching by using the genetic algorithm is as follows: A sequence set #A including Z sequences is randomly generated. Selection, crossover, and mutation operations are performed on the sequence set #A to obtain a sequence set #B. For example, after Z' sequences are selected from the sequence set, pairwise exclusive OR is performed on the Z' sequences to obtain $Z'^2$ sequences, and then the $1^{st}$ elements of all the $Z'^2$ sequences are flipped to obtain the sequence set #B. An aperiodic peak sidelobe ratio of each sequence in the sequence set #B at a preset carrier frequency offset is calculated, and a sequence #A with a largest aperiodic peak sidelobe ratio is selected. If the aperiodic peak sidelobe ratio of the sequence #A at the preset carrier frequency offset is greater than the maximum value of the N aperiodic peak sidelobe ratios, the sequence #A is used as a sequence in the first sequence set. If the aperiodic peak sidelobe ratio of the sequence #A at the preset carrier frequency offset is less than the maximum value of the N aperiodic peak sidelobe ratios, selection, crossover, and mutation operations continue to be performed on the sequence set #B until a sequence meeting a requirement is selected.

An example of the first sequence set provided in this embodiment of this application includes the sequence $\vec{C}_9$ and the sequence $\vec{C}_{10}$ in Table 11. Aperiodic peak sidelobe ratios of the sequence $\vec{C}_9$ and the sequence $\vec{C}_{10}$ are shown in Table 13. Table 13 further shows aperiodic peak sidelobe ratios of the second sequence set. The second sequence set is a sequence set including Ipatov sequences with a length of 31. It can be learned from Table 13 that a minimum value of two periodic peak sidelobe ratios of the first sequence set at a carrier frequency offset of 40 ppm is 17.2 dB, and a minimum value of eight periodic peak sidelobe ratios of the second sequence set at a carrier frequency offset of 40 ppm is 11.6 dB. Therefore, the first sequence set and the second sequence set meet the relationship #A. In addition, an average value of the two periodic peak sidelobe ratios of the first sequence set at a carrier frequency offset of 40 ppm is 17.25 dB, and an average value of the eight periodic peak sidelobe ratios of the second sequence set at a carrier frequency offset of 40 ppm is 14.29 dB. Therefore, the first sequence set and the second sequence set further meet the relationship #B.

Further, it can be learned from Table 13 that an aperiodic peak sidelobe ratio of a sequence in the second sequence set at a carrier frequency offset of 40 ppm is much lower than an aperiodic peak sidelobe ratio without a carrier frequency offset, and the aperiodic peak sidelobe ratios of the sequence $\vec{C}_9$ and the sequence $\vec{C}_{10}$ at a carrier frequency offset of 40 ppm are slightly lower than aperiodic peak sidelobe ratios without a carrier frequency offset. This indicates that the first sequence set has a better anti-frequency-offset characteristic.

It should be noted that the first sequence set provided in this embodiment of this application may include one or more sequences in Table 11, to be specific, include one or more of the sequence $\vec{C}_9$ to the sequence $\vec{C}_{13}$. This is not limited in this embodiment of this application.

For a manner of generating, by the transmit-end device, the synchronization header field based on the first sequence in the first sequence set, refer to S410 in FIG. 4.

S720: The transmit-end device sends a PPDU.

The PPDU includes the synchronization header field. Correspondingly, a receive-end device receives the PPDU.

S730: The receive-end device performs correlation detection based on the first sequence and the synchronization header field.

For example, the correlation detection in S730 may be autocorrelation detection or crosscorrelation detection. A specific method for correlation detection is not limited in this embodiment of this application.

In this embodiment of this application, because the first sequence set and the second sequence set meet the relationship #A and/or the relationship #B, a sequence in the first sequence set has a better anti-Doppler characteristic than a sequence in the second sequence set, and even if a large frequency offset occurs between carriers, an aperiodic peak sidelobe ratio of the first sequence in the first sequence set is also high. Therefore, after the transmit-end device generates the synchronization header field based on the first sequence and sends the PPDU including the synchronization header field, a probability that the receive-end device performs false detection on the PPDU is low, so that system performance can be improved. For example, when the PPDU is a PPDU used for ranging or sensing, performance of ranging or sensing performed by the receive-end device based on the PPDU is not greatly affected by a carrier frequency offset.

It should be understood that, in embodiments of this application, FIG. 4, FIG. 6, and FIG. 7 are merely used as examples to describe the methods provided in embodiments of this application. Sequence numbers of the foregoing processes do not mean execution sequences. Execution sequences of the processes should be determined based on functions and internal logic of the processes, and should not constitute any limitation on implementation processes of embodiments of this application.

It should be further understood that, in some of the foregoing embodiments, a device (for example, the transmit-end device or the receive-end device) in an existing network architecture is mainly used as an example for description. It should be understood that a specific form of the device is not limited in embodiments of this application. For example, embodiments of this application are applicable to all future devices that can implement a same function.

It can be understood that the methods and the operations implemented by a device (for example, the transmit-end device or the receive-end device) in the foregoing method embodiments may alternatively be implemented by a component (for example, a chip or a circuit) of the device.

It can be further understood that, to implement the foregoing functions, the transmit-end device and the receive-end device include corresponding hardware structures and/or software modules for performing the functions.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that the implementation goes beyond the scope of this application.

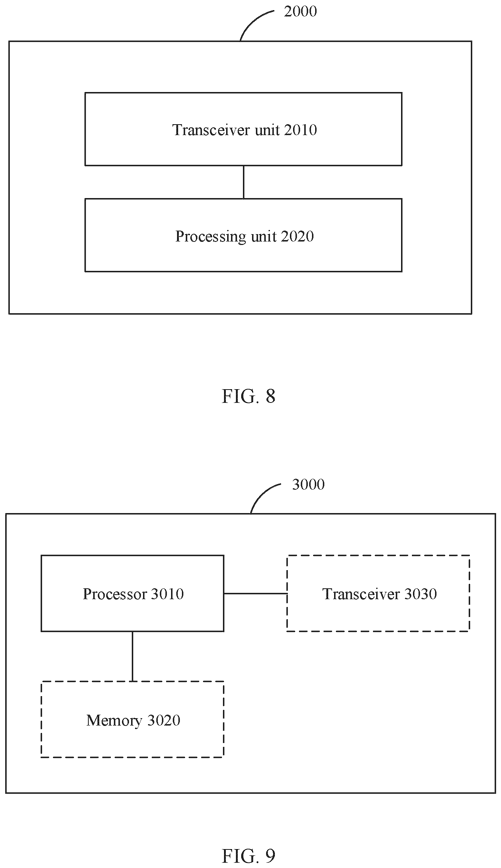

The following describes in detail apparatuses provided in embodiments of this application with reference to FIG. 8 to FIG. 10. It should be understood that descriptions of apparatus embodiments correspond to the descriptions of the method embodiments. Therefore, for content that is not described in detail, refer to the foregoing method embodiments. For brevity, some content is not described again.

In embodiments of this application, the transmit-end device or the receive-end device may be divided into functional modules based on the foregoing method embodiments. For example, the functional modules may be divided based on functions, or two or more functions may be integrated into one processing module. The integrated module may be implemented in a form of hardware, or may be implemented in a form of a software functional module. It should be noted that, in embodiments of this application, division into the modules is an example and is merely logical function division. In actual implementation, another division manner may be used. An example in which the functional modules are divided based on the functions is used below for description.

FIG. 8 is a block diagram of an apparatus according to an embodiment of this application. As shown in FIG. 8, the apparatus 2000 may include a transceiver unit 2010 and a processing unit 2020. The transceiver unit 2010 may communicate with the outside, and the processing unit 2020 is configured to process data. The transceiver unit 2010 may also be referred to as a communication interface or a communication unit.

Optionally, the apparatus 2000 may further include a storage unit. The storage unit may be configured to store instructions and/or data. The processing unit 2020 may read the instructions and/or the data in the storage unit, so that the apparatus implements the foregoing method embodiments.

In a first design, the apparatus 2000 may be the transmit-end device in the foregoing embodiments, or may be a component (for example, a chip) of the transmit-end device. The apparatus 2000 may implement the steps or the processes performed by the transmit-end device in the foregoing method embodiments. The transceiver unit 2010 may be configured to perform a sending/receiving-related operation performed by the transmit-end device in the foregoing method embodiments. The processing unit 2020 may be configured to perform a processing-related operation performed by the transmit-end device in the foregoing method embodiments.

In a possible implementation, the processing unit 2020 is configured to generate a synchronization header field based on a sequence set, where the sequence set includes at least one of the following sequences: a sequence with a length of 127, a sequence with a length of 31, a sequence with a length of 91, or a sequence with a length of 64; and the transceiver unit 2010 is configured to send the synchronization header field.

In another possible implementation, the processing unit 2020 is configured to generate a synchronization header field based on a first sequence in a first sequence set, where each sequence in the first sequence set is obtained by shifting and/or sampling a sequence in a second sequence set, and the first sequence set and the second sequence set meet one or more of the following relationships: a minimum value of M periodic peak sidelobe ratios of the first sequence set at a preset carrier frequency offset is greater than a minimum value of N periodic peak sidelobe ratios of the second sequence set at the preset carrier frequency offset, and an average value of the M periodic peak sidelobe ratios is greater than an average value of the N periodic peak sidelobe ratios, where the M periodic peak sidelobe ratios are in a one-to-one correspondence with M sequences included in the first sequence set, and the N periodic peak sidelobe ratios are in a one-to-one correspondence with N sequences included in the second sequence set; and the transceiver unit 2010 is configured to send a PPDU, where the PPDU includes the synchronization header field.

In still another possible implementation, the processing unit 2020 is configured to generate a synchronization header field based on a first sequence in a first sequence set, where the first sequence set and a second sequence set meet one or more of the following relationships: A minimum value of M aperiodic peak sidelobe ratios of the first sequence set at a preset carrier frequency offset is greater than a minimum value of N aperiodic peak sidelobe ratios of the second sequence set at the preset carrier frequency offset, and an average value of the M aperiodic peak sidelobe ratios is greater than an average value of the N aperiodic peak sidelobe ratios, where the M aperiodic peak sidelobe ratios are in a one-to-one correspondence with M sequences included in the first sequence set, and the N aperiodic peak sidelobe ratios are in a one-to-one correspondence with N sequences included in the second sequence set; and the transceiver unit 2010 is configured to send a PPDU, where the PPDU includes the synchronization header field.

In still another possible implementation, the processing unit 2020 is configured to generate a synchronization header field based on a first sequence, where the first sequence is a sequence with a largest zero correlation zone in a sequence set that meets the formula 14; and the transceiver unit 2010 is configured to send a PPDU, where the PPDU includes the synchronization header field.

In a second design, the apparatus 2000 may be the receive-end device in the foregoing embodiments, or may be a component (for example, a chip) of the receive-end device. The apparatus 2000 may implement the steps or the processes performed by the receive-end device in the foregoing method embodiments. The transceiver unit 2010 may be configured to perform the sending/receiving-related operations performed by the receive-end device in the foregoing method embodiments. The processing unit 2020 may be configured to perform the processing-related operations performed by the receive-end device in the foregoing method embodiments.

In a possible implementation, the transceiver unit 2010 is configured to receive a synchronization header field; and the processing unit 2000 is configured to perform correlation detection based on a sequence set and the synchronization header field, where the sequence set includes at least one of the following sequences: a sequence with a length of 127, a sequence with a length of 31, a sequence with a length of 91, or a sequence with a length of 64.

In another possible implementation, the transceiver unit 2010 is configured to receive a PPDU, where the PPDU includes a synchronization header field; and the processing unit 2020 is configured to perform correlation detection based on a first sequence in a first sequence set and the synchronization header field, where the first sequence set and a second sequence set meet one or more of the following relationships: a minimum value of M aperiodic peak sidelobe ratios of the first sequence set at a preset carrier frequency offset is greater than a minimum value of N aperiodic peak sidelobe ratios of the second sequence set at the preset carrier frequency offset, and an average value of the M aperiodic peak sidelobe ratios is greater than an average value of the N aperiodic peak sidelobe ratios, where the M aperiodic peak sidelobe ratios are in a one-to-one correspondence with M sequences included in the first sequence set, and the N aperiodic peak sidelobe ratios are in a one-to-one correspondence with N sequences included in the second sequence set.

In still another possible implementation, the transceiver unit 2010 is configured to receive a PPDU, where the PPDU includes a synchronization header field; and the processing unit 2020 is configured to perform correlation detection based on a first sequence in a first sequence set and the synchronization header field, where the first sequence set and a second sequence set meet one or more of the following relationships: a minimum value of M aperiodic peak sidelobe ratios of the first sequence set at a preset carrier frequency offset is greater than a minimum value of N aperiodic peak sidelobe ratios of the second sequence set at the preset carrier frequency offset, and an average value of the M aperiodic peak sidelobe ratios is greater than an average value of the N aperiodic peak sidelobe ratios, where the M aperiodic peak sidelobe ratios are in a one-to-one correspondence with M sequences included in the first sequence set, and the N aperiodic peak sidelobe ratios are in a one-to-one correspondence with N sequences included in the second sequence set.

In still another possible implementation, the transceiver unit 2010 is configured to receive a PPDU, where the PPDU includes a synchronization header field; and the processing unit 2020 is configured to perform correlation detection on the synchronization header field based on a first sequence, where the first sequence is a sequence with a largest zero correlation zone in a sequence set that meets the formula 14.

It should be understood that specific processes of performing the foregoing corresponding steps by the units are described in detail in the foregoing method embodiments. For brevity, details are not described herein again.

It should be further understood that the apparatus 2000 herein is embodied in a form of a functional unit. The term "unit" herein may indicate an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 2000 may be specifically the transmit-end device in the foregoing embodiments, and may be configured to perform the processes and/or the steps corresponding to the transmit-end device in the foregoing method embodiments; or the apparatus 2000 may be specifically the receive-end device in the foregoing embodiments, and may be configured to perform the processes and/or the steps corresponding to the receive-end device in the foregoing method embodiments. To avoid repetition, details are not described herein again. The transceiver unit 2010 may alternatively be a transceiver circuit (for example, may include a receiver circuit and a transmitter circuit), and the processing unit 2020 may be a processing circuit. The apparatus in FIG. 8 may be a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit that is integrated on the chip. This is not limited herein.

The apparatus 2000 in the foregoing solutions has a function of implementing corresponding steps performed by the transmit-end device or the receive-end device in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform sending and receiving operations and a related processing operation in the method embodiments.

FIG. 9 is a diagram of an apparatus 3000 according to an embodiment of this application. The apparatus 3000 includes a processor 3010. The processor 3010 is configured to execute a computer program or instructions stored in a memory 3020, or read data or signaling stored in the memory 3020, to perform the methods in the foregoing method embodiments. Optionally, there is one or more processors 3010.

Optionally, as shown in FIG. 9, the apparatus 3000 further includes the memory 3020, and the memory 3020 is configured to store a computer program or instructions and/or data. The memory 3020 may be integrated with the processor 3010, or may be disposed separately. Optionally, there is one or more memories 3020.

Optionally, as shown in FIG. 9, the apparatus 3000 further includes a transceiver 3030, and the transceiver 3030 is configured to send and/or receive a signal. For example, the processor 3010 is configured to control the transceiver 3030 to send and/or receive a signal.

In a solution, the apparatus 3000 is configured to implement the operations performed by the transmit-end device in the foregoing method embodiments.

For example, the processor 3010 is configured to execute the computer program or instructions stored in the memory 3020, to implement the operations related to the transmit-end device in the foregoing method embodiments, for example, the method performed by the transmit-end device in the embodiment shown in FIG. 4, FIG. 6, or FIG. 7.

In another solution, the apparatus 3000 is configured to implement the operations performed by the receive-end device in the foregoing method embodiments.

For example, the processor 3010 is configured to execute the computer program or instructions stored in the memory 3020, to implement the operations related to the receive-end device in the foregoing method embodiments, for example, the method performed by the receive-end device in the embodiment shown in FIG. 4, FIG. 6, or FIG. 7.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any other appropriate type of memory.

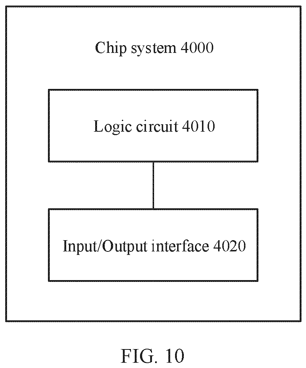

FIG. 10 is a diagram of a chip system 4000 according to an embodiment of this application. The chip system 4000 (also referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, so that the chip system 4000 can implement the methods and the functions in embodiments of this application. The input/output interface 4020 may be an input/output circuit in the chip system 4000, and outputs information processed by the chip system 4000, or inputs to-be-processed data or signaling information to the chip system 4000 for processing.

Specifically, for example, if the chip system 4000 is installed on a transmit-end device, the logic circuit 4010 is coupled to the input/output interface 4020, and the logic circuit 4010 may send a PPDU through the input/output interface 4020, where the PPDU may be generated by the logic circuit 1010. For another example, if the chip system 4000 is installed on a receive-end device, the logic circuit 4010 is coupled to the input/output interface 4020, the logic circuit 4010 may receive a PPDU through the input/output interface 4020, and the logic circuit 4010 parses the PPDU.

In a solution, the chip system 4000 is configured to implement the operations performed by the transmit-end device in the foregoing method embodiments.

For example, the logic circuit 4010 is configured to implement a processing-related operation performed by the transmit-end device in the foregoing method embodiments, for example, a processing-related operation performed by the transmit-end device in the embodiment shown in FIG. 4, FIG. 6, or FIG. 7; and the input/output interface 4020 is configured to implement a sending-related operation and/or a receiving-related operation performed by the transmit-end device in the foregoing method embodiments, for example, a sending-related operation and/or a receiving-related operation performed by the transmit-end device in the embodiment shown in FIG. 4, FIG. 6, or FIG. 7.

In another solution, the chip system 4000 is configured to implement the operations performed by the receive-end device in the foregoing method embodiments.

For example, the logic circuit 4010 is configured to implement a processing-related operation performed by the receive-end device in the foregoing method embodiments, for example, a processing-related operation performed by the receive-end device in the embodiment shown in FIG. 4, FIG. 6, or FIG. 7; and the input/output interface 4020 is configured to implement a sending-related operation and/or a receiving-related operation performed by the receive-end device in the foregoing method embodiments, for example, a sending-related operation and/or a receiving-related operation performed by the receive-end device in the embodiment shown in FIG. 4, FIG. 6, or FIG. 7.

An embodiment of this application further provides a computer-readable storage medium. The computer-readable storage medium stores computer instructions for implementing a method performed by a device in the foregoing method embodiments.

For example, when the computer program is executed by a computer, the computer is enabled to implement the method performed by the transmit-end device in the foregoing method embodiments.

For another example, when the computer program is executed by a computer, the computer is enabled to implement the method performed by the receive-end device in the foregoing method embodiments.

An embodiment of this application further provides a computer program product, including instructions. When the instructions are executed by a computer, a method performed by a device (for example, the transmit-end device, or for another example, the receive-end device) in the foregoing method embodiments is implemented.

An embodiment of this application further provides a communication system, including the foregoing transmit-end device and receive-end device.

For descriptions and beneficial effect of related content of any one of the apparatuses provided above, refer to a corresponding method embodiment provided above. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer program instructions are loaded and executed on a computer, all or some of processes or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   generating a synchronization header field based on a sequence set, wherein the sequence set comprises at least one of the following sequences: a sequence with a length of 127, a sequence with a length of 31, a sequence with a length of 91, or a sequence with a length of 64; and
   sending the synchronization header field.

2. The method according to claim 1, wherein the sequence set comprises the sequence with a length of 127, and the sequence with a length of 127 comprises at least one of a sequence $\vec{C}_1$ to a sequence $\vec{C}_8$, wherein

   $\overline{C}_1$ = {0, 0, 1, 0, 0, -1, -1, -1, 0, 0, -1, 0, -1, -1, 0, 0, 0, -1, 0, 1, 0, 0, 0, 1, -1, 0, 0, 0, 1, 0, -1, 0, -1, -1, 0, 0, 0, 0, 0, -1, 0, 1, -1, -1, 0, 0, 0, 0, -1, 0, 0, -1, 0, 0, -1, 1, 1, 1, 1, -1, 1,-1, 1, 1, -1, 0, 1, 0, -1, 0, 1, 1, 1, 0, -1, 0, 0, 1, 1, 0, 0, 0, -1, -1, 0, -1, 1, -1, 1, 0, 1, 0, 0, -1, -1, 0, 0, -1, 0, -1, 1, 0, 1, 0, 0, 0, 0, -1, 0, 0, -1, 1, -1, 0, 0, 0, -1, 0, 1, 1, -1, -1, 1, 0, 0, 0, 1};

   $\overline{C}_2$ = {-1, 0, 0, 0, 0, -1, -1, -1, 0, 0, 0, 1, 0, 1, 0, 0, 1, -1, 0, 0, 0, 0, 0, 0, 1, -1, 0, 1, 0, 1, -1, -1, 0, -1, 0, 0, 1, 0, 1, 0, -1, 0, 1, -1, 0, -1, 1, -1, 0, 0, -1, 0, 0, 0, 0, 1, 0, 0, 0, 1, 0, 0, -1, 0, 0, 1, 1, -1, 1, 0, 1, 0, -1, 0, 0, 0, 0, 0, -1, 0, 1, 1, 1, -1, 0, 0, -1, 1, 1, 0, -1, 1, -1, -1, -1, -1, -1, 0, -1, -1, 0, 0, -1, 0, -1, 1, 0, 0, 0, 1, -1, 0, 0, -1, -1, 0, 1, 1, 0, -1, 0, 0, 0, -1, 1, 1, -1};

   $\overline{C}_3$ = {-1, 0, 1, -1, -1, 0, 0, -1, 1, -1, 0, 0, 0, -1, 1, 0, 1, 1, 0, 0, -1, -1, 0, 0, 0, 0, 0, 0, 1, 0, 0, 0, -1, 1, -1, 1, -1, 0, 1, 0, 0, 1, 1, 0, -1, 0, 0, 0, 1, 0, -1, -1, -1, 1, 0, 1, -1, 0, 1, -1, -1, 0, -1, 1, -1, -1, -1, -1, -1, 0, 0, 0, 0, -1, 0, 1, 0, -1, -1, 0, 0, 0, 1, 0, 0, -1, -1, 1, -1, 0, 0, 1, 0, 1, 0, 0, 1, 0, 0, -1, 0, -1, -1, 0, -1, 0, 1, 0, -1, 0, 0, 0, 0, 0, 1, 1, 0, 0, 1, 0, 0, 0, 0, -1, 1, 1, 0};

   $\overline{C}_4$ = {1, -1, 1, 0, 0, -1, 0, -1, 0, -1, 1, 1, 0, 0, 1, 1, 0, 1, 0, 0, 0, -1, 0, 0, -1, -1, 1, 1, 0, 0, 0, 1, 0, 1, 0, 0, 0, 0, -1, 1, 0, 0, 0, 0, 0, -1, 0, 0, 0, 0, 0, 0, -1, 1, 1, 1, -1, 1, -1, -1, 0, 1, 0, -1, 0, -1, 0, 0, -1, 1, 0, 0, -1, -1, -1, 0, 1, -1, -1, 0, 1, 0, 0, 0, -1, 0, 1, -1, 0, 0, 0, -1, -1, 0, -1, -1, -1, 1, 0, 1, 1, 0, -1, 0, -1, 1, 0, 1, 1, 0, 0, 1, 0, 0, -1, 0, 0, 0, 1, -1, -1, 0, 0, 0, 0, -1, 0, -1, -1};

   $\overline{C}_5$ = {1, 0, 0, 0, 0, -1, 0, 0, 0, 1, 0, 0, 1, 1, 1, 0, -1, 1, -1, -1, 0, -1, 0, 0, 0, 1, -1, 0, 0, -1, -1, 0, 1, 0, 0, 1, -1, 0, 0, 0, 1, -1, 1, 0, 0, -1, 0, 1, 0, 1, 0, 1, -1, -1, 0, 1, 0, -1, 0, 0, 1, 0, 0, -1, 0, -1, 1, 1, 1, -1, 1, -1, 0, 0, -1, -1, 1, -1, -1, 0, -1, -1, 0, -1, -1, -1, 0, 0, 0, 0, 0, 1, 0, -1, 0, 0, 0, 0, 1, -1, 0, -1, -1, 0, 0, 1, 0, 0, 0, 0, 0, 1, 1, -1, -1, 0, 0, 0, -1, 0, -1, 1, 0, -1, 0, 1};

$\overline{C}_6$ = {-1, 0, 0, 1, -1, -1, -1, -1, -1, 1, 0, 1, -1, 0, -1, 0, 1, 0, 0, 0, 0, 0, 0, -1, 1, 0, 1, -1, -1, 1, 1, 0, 0, 0, 0, 0, -1, 0, -1, 1, 0, 0, 0, 0, 1, 0, 0, 0, 0, -1, 1, 1, 0, 1, 0, 0, 0, 1, -1, 0, 0, 0, 1, 0, 0, 1,-1, -1, 0, 0, -1, 0, -1, 0, 0, 1, 1, 0, -1, 0, 0, 1, 0, -1, 1,-1,-1,0,-1,0,-1,-1,-1,0,-1,-1, 1, 0, --> 0, 0, 1, 1, -1, 1, 0, 0, -1, -1, 0, 0, 1, 0, 0, 1, 0, 0, 0, -1, 0, 1, 0, -1, 0, -1, -1, 0, 1};

$\overline{C}_7$ = {-1, -1, 0, 1, -1, 0, 0, -1, 1, 0, 0, 0, 0, 0, 0, 1, 0, 0, 0, 1, 1, 1, 1, -1, 0, -1, 0, 0, -1, 1, 0, -1, 0, 0, 0, 1, 0, 1, 1,-1,-1,0, 1,-1,0, 1, 1, -1, 0, -1, 1, -1, -1, -1, -1, -1, 0, 0, 0, 0, 1, 0, -1, 0, -1, 1, 0, 0, 0, -1, 0, 0, -1, -1, -1, 1, 0, 0, 1, 0, -1, 0, 0, -1, 0, 0, -1, 0, 1, -1, 0, -1, 0, -1, 0, 1, 0, 0, 0, 0, 0, 1, 1, 0, 0, -1, 0, 0, 0, 0, 1, -1, 1, 0, 1, 0, 1, -1, -1, 0, 0, 1, -1, -1, 0, 0, 0};

and

$\overline{C}_8$ = {-1, -1, 0, 0, 1, 1, 0, 1, -1, 0, 1, 0, -1, 1, -1, -1, -1, 0, 0, 0, 0, -1, 0, -1, 0, -1, -1, 0, 0, 0, -1, 0, 0, -1, -1, 1, -1, 0, 0, 0, 0, 1, 0, 0, -1, 1, 0, 1, 0, -1, -1, 0, -1, 0, 1, 1, -1, 0, 0, -1, 0, -1, 0, 0, 0, 0, 1, 0, 0, -1, 0, 1, -1, 0, 1, 1, 0, 0, 1, -1, 0, 0, -1, -1, -1, 0, 0, 0, -1, 1, 0, 0, 1, 0, 1, 1, -1, 0, 0, 1, 0, -1, -1, 0, 0, 0, -1, 1, 0, 1, 0, -1, 0, -1, 0, 0, 1, 0, 0, 1, 0, 1, -1, 0, 0, 1, 1}.

3. The method according to claim 2, wherein a minimum value of periodic peak sidelobe ratios of the sequence $\vec{C}_1$ to the sequence $\vec{C}_8$ at a preset carrier frequency offset is greater than a first preset value.

4. The method according to any one of claims 1 to 3, wherein the sequence set comprises the sequence with a length of 31, and the sequence with a length of 31 comprises at least one of a sequence $\vec{C}_9$ and a sequence $\vec{C}_{10}$, wherein

$$\vec{C}_9 = \{0, -1, 0, 0, 0, 0, 0, 0, 1, 0, 0, 1, -1, 0, -1, 0, 1, -1, 1, 1, 1, -1, 1, 1, 1, 1, 0, -1, 0, 0, 0\};$$

and

$\overline{C}_{10}$ = {-1, 0, 1, 0, 0, 1, 0, -1, 1, -1, 0, -1, 1, 1, -1, -1, -1, -1, 0, -1, 0, 0, 0, 0, 0, 1, 0, 0, -1, 0, 0}.

5. The method according to claim 4, wherein aperiodic peak sidelobe ratios of the sequence $\vec{C}_9$ and the sequence $\vec{C}_{10}$ at the preset carrier frequency offset are greater than a second preset value.

6. The method according to any one of claims 1 to 5, wherein the sequence set comprises the sequence with a length of 91, and the sequence with a length of 91 comprises at least one of a sequence $\vec{C}_{11}$ and a sequence $\vec{C}_{12}$, wherein

$\overline{C}_{11}$ = {-1, -1, 1, -1, 1, -1, 1, 0, -1, 0, 0, -1, 1, 1, -1, 1, 1, 1, 1, 0, -1, 1, 1, -1, 0, 0, -1, -1, 1, 1, -1, -1, 1, 1, -1, 1, -1, -1, -1, 1, 1, -1, 1, 1, 1, 1, -1, -1, -1, 1, -1, -1, 1, -1, 1, -1, -1, 1, -1, 0, 1, 1, 1, 1, -1, 1, -1, 1, 1, 1, -1, -1, -1, 1, 1, 1, 1, 1, -1, 0, 1, 1, 1, 0, -1, 1, 0, 1, -1, -1};

and

$\overline{C}_{12}$ = {-1, -1, -1, 1, -1, -1, 0, -1, 1, -1, 1, 1, -1, -1, 1, -1, -1, 1, -1, 1, 0, -1, -1, 1, -1, -1, 0, 1, -1, -1, 1, 0, -1, -1, -1, -1, 1, 0, 1, 1, 1, 1, -1, -1, -1, 0, -1, -1, 1, -1, -1, 1, -1, 1, -1, 1, 1, 1, --> -1, 0, -1, 1, 1, 1, -1, -1, 1, 1, 1, 1, 0, 1, -1, 1, 0, 1, 1, 1, -1, -1, 1, -1, -1, -1, -1, 0, -1, -1, -1, 1, -1}.

7. The method according to claim 6, wherein aperiodic peak sidelobe ratios of the sequence $\vec{C}_{11}$ and the sequence $\vec{C}_{12}$ at the preset carrier frequency offset are greater than a third preset value.

8. The method according to any one of claims 1 to 7, wherein the sequence set comprises a sequence $\vec{C}_{13}$ with a length of 127, and $\vec{C}_{13}$ = {0, 0, 0, 0, 0, -1, -1, 0, 0, -1, -1, -1, -1, 0, 0, 1, 0, 1, 1, -1, -1, 0, 0, 0, -1, 0, 0, 0, 0, 0, 0, 0, 1, 0, -1, 0, 0, 1, 0, 0, 0, -1, -1, 1, 0, 1, -1, 0, 0, 1, -1, 1, -1, -1, 1, 1, 1, 0, 1, 0, -1, 1, 0, 0, 1, 0, 0, 0, 0, 0, 1, 0, 1, -1, 1, -1, 1, 0, 0, 0, 1, 0, 0, 0, -1, 1, -1, -1,

0, 1, 1, 0, 0, -1, 0, -1, -1, 0, -1, -1, 1, 0, -1, 0, 0, 0, 1, 0, 1, 1, 1, 0, -1, 1, 1, 1, -1, 0, 0, -1, 0, -1, 0, 0, -1, 0, 0}.

9. The method according to claim 8, wherein an aperiodic peak sidelobe ratio of the sequence $\vec{C}_{13}$ at the preset carrier frequency offset is greater than a fourth preset value.

10. The method according to any one of claims 1 to 9, wherein the sequence set comprises a sequence $\vec{C}_{14}$ with a length of 64, and $\vec{C}_{14}$ = {1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, 1, -1, -1, -1, -1, 1, -1, -1, 1, -1, 1, 1, 1, -1, -1, -1, 1, -1}.

11. The method according to claim 10, wherein a length of a zero correlation zone of the sequence $\vec{C}_{14}$ is greater than or equal to a fifth preset value.

12. The method according to any one of claims 1 to 11, wherein the sending the synchronization header field comprises: sending a physical layer protocol data unit PPDU based on ultra-wideband UWB, wherein the PPDU comprises the synchronization header field.

13. A communication method, comprising:

receiving a synchronization header field; and
performing correlation detection based on a sequence set and the synchronization header field, wherein the sequence set comprises at least one of the following sequences: a sequence with a length of 127, a sequence with a length of 31, a sequence with a length of 91, or a sequence with a length of 64.

14. The method according to claim 13, wherein the sequence set comprises the sequence with a length of 127, and the sequence with a length of 127 comprises at least one of a sequence $\vec{C}_1$ to a sequence $\vec{C}_8$, wherein

$\overline{C}_1$ = {0, 0, 1, 0, 0, -1, -1, -1, 0, 0, -1, 0, -1, -1, 0, 0, 0, -1, 0, 1, 0, 0, 0, 1, -1, 0, 0, 0, 1, 0, --> -1, 0, -1, -1, 0, 0, 0, 0, 0, -1, 0, 1, -1, -1, 0, 0, 0, 0, -1, 0, 0, -1, 0, 0, -1, 1, 1, 1, 1, -1, 1,-1, 1, 1, -1, 0, 1, 0, -1, 0, 1, 1, 1, 0, -1, 0, 0, 1, 1, 0, 0, 0, -1, -1, 0, -1, 1, -1, 1, 0, 1, 0, 0, -1, -1, 0, 0, -1, 0, -1, 1, 0, 1, 0, 0, 0, 0, -1, 0, 0, -1, 1, -1, 0, 0, 0, -1, 0, 1, 1, -1, -1, 1, 0, 0, 0, 1};

$\overline{C}_2$ = {-1, 0, 0, 0, 0, -1, -1, -1, 0, 0, 0, 1, 0, 1, 0, 0, 1, -1, 0, 0, 0, 0, 0, 0, 1, -1, 0, 1, 0, 1, -1, -1, 0, -1, 0, 0, 1, 0, 1, 0, -1, 0, 1, -1, 0, -1, 1, -1, 0, 0, -1, 0, 0, 0, 0, 1, 0, 0, 0, 1, 0, 0, -1, 0, 0, 1, 1, -1, 1, 0, 1, 0, -1, 0, 0, 0, 0, 0, -1, 0, 1, 1, 1, -1, 0, 0, -1, 1, 1, 0, -1, 1, -1, -1, -1, -1, -1, 0, -1, -1, 0, 0, -1, 0, -1, 1, 0, 0, 0, 1, -1, 0, 0, -1, -1, 0, 1, 1, 0, -1, 0, 0, 0, -1, 1, 1, -1};

$\overline{C}_3$ = {-1, 0, 1, -1, -1, 0, 0, -1, 1, -1, 0, 0, 0, -1, 1, 0, 1, 1, 0, 0, -1, -1, 0, 0, 0, 0, 0, 0, 1, 0, 0, 0, -1, 1, -1, 1, -1, 0, 1, 0, 0, 1, 1, 0, -1, 0, 0, 0, 1, 0, -1, -1, -1, 1, 0, 1, -1, 0, 1, -1, -1, 0, -1, 1, -1, -1, -1, -1, -1, 0, 0, 0, 0, -1, 0, 1, 0, -1, -1, 0, 0, 0, 1, 0, 0, -1, -1, 1, -1, 0, 0, 1, 0, 1, 0, 0, 1, 0, 0, -1, 0, -1, -1, 0, -1, 0, 1, 0, -1, 0, 0, 0, 0, 0, 1, 1, 0, 0, 1, 0, 0, 0, 0, -1, 1, 1, 0};

$\overline{C}_4$ = {1, -1, 1, 0, 0, -1, 0, -1, 0, -1, 1, 1, 0, 0, 1, 1, 0, 1, 0, 0, 0, -1, 0, 0, -1, -1, 1, 1, 0, 0, 0, 1, 0, 1, 0, 0, 0, 0, -1, 1, 0, 0, 0, 0, 0, -1, 0, 0, 0, 0, 0, 0, -1, 1, 1, 1, -1, 1, -1, -1, 0, 1, 0, -1, 0, -1, 0, 0, -1, 1, 0, 0, -1, -1, -1, 0, 1, -1, -1, 0, 1, 0, 0, 0, -1, 0, 1, -1, 0, 0, 0, -1, -1, 0, -1, -1, -1, 1, 0, 1, 1, 0, -1, 0, -1, 1, 0, 1, 1, 0, 0, 1, 0, 0, -1, 0, 0, 0, 1, -1, -1, 0, 0, 0, 0, -1, 0, -1, -1};

$\overline{C}_5$ = {1, 0, 0, 0, 0, -1, 0, 0, 0, 1, 0, 0, 1, 1, 1, 0, -1, 1, -1, -1, 0, -1, 0, 0, 0, 1, -1, 0, 0, -1, -1, 0, 1, 0, 0, 1, -1, 0, 0, 0, 1, -1, 1, 0, 0, -1, 0, 1, 0, 1, 0, 1, -1, -1, 0, 1, 0, -1, 0, 0, 1, 0, 0, -1, 0, -1, 1, 1, 1, -1, 1, -1, 0, 0, -1, -1, 1, -1, -1, 0, -1, -1, 0, -1, -1, -1, 0, 0, 0, 0, 0, 1, 0, -1, 0, 0, 0, 0, 1, -1, 0, -1, -1, 0, 0, 1, 0, 0, 0, 0, 0, 1, 1, -1, -1, 0, 0, 0, -1, 0, -1, 1, 0, -1, 0, 1};

$\overline{C}_6$ = {-1, 0, 0, 1, -1, -1, -1, -1, -1, 1, 0, 1, -1, 0, -1, 0, 1, 0, 0, 0, 0, 0, 0, -1, 1, 0, 1, -1, -1, 1, 1, 0, 0, 0, 0, 0, -1, 0, -1, 1, 0, 0, 0, 0, 1, 0, 0, 0, 0, -1, 1, 1, 0, 1, 0, 0, 0, 1, -1, 0, 0, 0, 1, 0, 0, 1, -1, -1, 0, 0, -1, 0, -1, 0, 0, 1, 1, 0, -1, 0, 0, 1, 0, -1, 1, -1, -1, 0, -1, 0, -1, -1, -1, 0, -1, -1, 1, 0, 0, 0, 1, 1, -1, 1, 0, 0, -1, -1, 0, 0, 1, 0, 0, 1, 0, 0, 0, -1, 0, 1, 0, -1, 0, -1, -1, 0, 1};

$\overline{C}_7$ = {-1, -1, 0, 1, -1, 0, 0, -1, 1, 0, 0, 0, 0, 0, 0, 1, 0, 0, 0, 1, 1, 1, 1, -1, 0, -1, 0, 0, -1, 1, 0, -1, 0, 0, 0, 1, 0, 1, 1, -1, -1, 0, 1, -1, 0, 1, 1, -1, 0, -1, 1, -1, -1, -1, -1, -1, 0, 0, 0, 0, 1, 0, -1, 0, -1, 1, 0, 0, 0, -1, 0, 0, -1, -1, -1, 1, 0, 0, 1, 0, -1, 0, 0, -1, 0, 0, -1, 0, 1, -1, 0, -1, 0, -1, 0, 1, 0, 0, 0, 0, 0, 1, 1, 0, 0, -1, 0, 0, 0, 0, 1, -1, 1, 0, 1, 0, 1, -1, -1, 0, 0, 1, -1, -1, 0, 0, 0};

and

$\overline{C}_8$ = {-1, -1, 0, 0, 1, 1, 0, 1, -1, 0, 1, 0, -1, 1, -1, -1, -1, 0, 0, 0, 0, -1, 0, -1, 0, -1, -1, 0, 0, 0, -1, 0, 0, -1, -1, 1, -1, 0, 0, 0, 0, 1, 0, 0, -1, 1, 0, 1, 0, -1, -1, 0, -1, 0, 1, 1, -1, 0, 0, -1, 0, -1, 0, 0, 0, 0, 1, 0, 0, -1, 0, 1, -1, 0, 1, 1, 0, 0, 1, -1, 0, 0, -1, -1, -1, 0, 0, 0, -1, 1, 0, 0, 1, 0, 1, 1, -1, 0, 0, 1, 0, -1, -1, 0, 0, 0, -1, 1, 0, 1, 0, -1, 0, -1, 0, 0, 1, 0, 0, 1, 0, 1, -1, 0, 0, 1, 1}.

15. The method according to claim 14, wherein a minimum value of periodic peak sidelobe ratios of the sequence $\vec{C}_1$ to the sequence $\vec{C}_8$ at a preset carrier frequency offset is greater than a first preset value.

16. The method according to any one of claims 13 to 15, wherein the sequence set comprises the sequence with a length of 31, and the sequence with a length of 31 comprises at least one of a sequence $\vec{C}_9$ and a sequence $\vec{C}_{10}$, wherein

$$\vec{C}_9 = \{0, -1, 0, 0, 0, 0, 0, 0, 1, 0, 0, 1, -1, 0, -1, 0, 1, -1, 1, 1, 1, -1, 1, 1, 1, 1, 0, -1, 0, 0, 0\};$$

and

$\overline{C}_{10}$ = {-1, 0, 1, 0, 0, 1, 0, -1, 1, -1, 0, -1, 1, 1, -1, -1, -1, -1, 0, -1, 0, 0, 0, 0, 0, 1, 0, 0, -1, 0, 0}.

17. The method according to claim 16, wherein aperiodic peak sidelobe ratios of the sequence $\vec{C}_9$ and the sequence $\vec{C}_{10}$ at the preset carrier frequency offset are greater than a second preset value.

18. The method according to any one of claims 13 to 17, wherein the sequence set comprises the sequence with a length of 91, and the sequence with a length of 91 comprises at least one of a sequence $\vec{C}_{11}$ and a sequence $\vec{C}_{12}$, wherein

$\overline{C}_{11}$ = {-1, -1, 1, -1, 1, -1, 1, 0, -1, 0, 0, -1, 1, 1, -1, 1, 1, 1, 1, 0, -1, 1, 1, -1, 0, 0, -1, -1, 1, 1, -1, -1, 1, 1, -1, 1, -1, -1, -1, 1, 1, -1, 1, 1, 1, 1, -1, -1, -1, 1, -1, -1, 1, -1, 1, -1, -1, 1, -1, 0, 1, 1, 1, 1, -1, 1, -1, 1, 1, 1, -1, -1, -1, 1, 1, 1, 1, 1, 1, -1, 0, 1, 1, 1, 0, -1, 1, 0, 1, -1, -1};

and

$\overline{C}_{12}$ = {-1, -1, -1, 1, -1, -1, 0, -1, 1, -1, 1, 1, -1, -1, 1, -1, -1, 1, -1, 1, 0, -1, -1, 1, -1, -1, 0, 1, -1, -1, 1, 0, -1, -1, -1, -1, 1, 0, 1, 1, 1, 1, -1, -1, -1, 0, -1, -1, 1, -1, -1, 1, -1, 1, -1, 1, 1, 1, -1, 0, -1, 1, 1, 1, -1, -1, 1, 1, 1, 1, 0, 1, -1, 1, 0, 1, 1, 1, -1, -1, 1, -1, -1, -1, -1, 0, -1, -1, -1, 1, -1}.

19. The method according to claim 18, wherein aperiodic peak sidelobe ratios of the sequence $\vec{C}_{11}$ and the sequence $\vec{C}_{12}$ at the preset carrier frequency offset are greater than a third preset value.

20. The method according to any one of claims 13 to 19, wherein the sequence set comprises a sequence $\vec{C}_{13}$ with a length of 127, and $\vec{C}_{13}$ = {0, 0, 0, 0, 0, -1, -1, 0, 0, -1, -1, -1, -1, 0, 0, 1, 0, 1, 1, -1, -1, 0, 0, 0, -1, 0, 0, 0, 0, 0, 0, 0, 1, 0, -1, 0, 0, 1, 0, 0, 0, -1, -1, 1, 0, 1, -1, 0, 0, 1, -1, 1, -1, -1, 1, 1, 1, 0, 1, 0, -1, 1, 0, 0, 1, 0, 0, 0, 0, 0, 1, 0, 1, -1, 1, 1, -1, 1, 0, 0, 0, 1, 0, 0, 0, -1, 1, -1, -1, 0, 1, 1, 0, 0, -1, 0, -1, -1, 0, -1, -1, 1, 0, -1, 0, 0, 0, 1, 0, 1, 1, 1, 0, -1, 1, 1, 1, -1, 0, 0, -1, 0, -1, 0, 0, -1, 0, 0}.

21. The method according to claim 20, wherein an aperiodic peak sidelobe ratio of the sequence $\vec{C}_{13}$ at the preset carrier frequency offset is greater than a fourth preset value.

22. The method according to any one of claims 13 to 21, wherein the sequence set comprises a sequence $\vec{C}_{14}$ with a

length of 64, and $\vec{C}_{14}$ = {1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1}.

23. The method according to claim 22, wherein a length of a zero correlation zone of the sequence $\vec{C}_{14}$ is greater than a fifth preset value.

24. The method according to any one of claims 13 to 23, wherein the receiving a synchronization header field comprises: receiving a physical layer protocol data unit PPDU based on ultra-wideband UWB, wherein the PPDU comprises the synchronization header field.

25. A communication method, comprising:

generating a synchronization header field based on a first sequence in a first sequence set, wherein each sequence in the first sequence set is obtained by shifting and/or sampling a sequence in a second sequence set, and the first sequence set and the second sequence set meet one or more of the following relationships: a minimum value of M periodic peak sidelobe ratios of the first sequence set at a preset carrier frequency offset is greater than a minimum value of N periodic peak sidelobe ratios of the second sequence set at the preset carrier frequency offset, and an average value of the M periodic peak sidelobe ratios is greater than an average value of the N periodic peak sidelobe ratios, wherein the M periodic peak sidelobe ratios are in a one-to-one correspondence with M sequences comprised in the first sequence set, and the N periodic peak sidelobe ratios are in a one-to-one correspondence with N sequences comprised in the second sequence set; and
sending a physical layer protocol data unit PPDU, wherein the PPDU comprises the synchronization header field.

26. An apparatus, comprising:
a processor, configured to execute computer instructions stored in a memory, so that the apparatus performs the method according to any one of claims 1 to 12, or the apparatus performs the method according to any one of claims 13 to 24, or the apparatus performs the method according to claim 25.

27. The apparatus according to claim 26, wherein the apparatus further comprises the memory.

28. The apparatus according to claim 26 or 27, wherein the apparatus further comprises a communication interface, and the communication interface is coupled to the processor; and
the communication interface is configured to input and/or output information.

29. A computer-readable storage medium, configured to store a computer program, wherein the computer program comprises instructions for implementing the method according to any one of claims 1 to 12, or comprises instructions for implementing the method according to any one of claims 13 to 24, or comprises instructions for implementing the method according to claim 25.

101

102

PAN coordinator

PAN coordinator

(A)

● FFD

(B)

○ RFD

◄──► Communication stream

FIG. 1

◄─────────────── PPDU ───────────────►

| SHR | PHR | PHY payload |
|---|---|---|

| SYNC | SFD |
|---|---|

| $S_i$ | $S_i$ | $S_i$ | ... | $S_i$ |
|---|---|---|---|---|

FIG. 2

FIG. 3

400

FIG. 4

(A)

(B)

FIG. 5

600

| Transmit-end device | | Receive-end device |

S610: Generate a first synchronization header field based on a first sequence in a first sequence set

S620: First PPDU

S630: Perform correlation detection based on the first sequence and the first synchronization header field

FIG. 6

700

| Transmit-end device | | Receive-end device |

S710: Generate a synchronization header field based on a first sequence in a first sequence set

S720: PPDU

S730: Perform correlation detection based on the first sequence and the synchronization header field

FIG. 7

2000

Transceiver unit 2010

Processing unit 2020

FIG. 8

3000

Processor 3010

Transceiver 3030

Memory 3020

FIG. 9

Chip system 4000

Logic circuit 4010

Input/Output interface 4020

FIG. 10

## INTERNATIONAL SEARCH REPORT

| International application No. |
|---|
| **PCT/CN2023/104587** |

| | |
|---|---|
| **A. CLASSIFICATION OF SUBJECT MATTER** | |
| H04L 5/00(2006.01)i | |
| According to International Patent Classification (IPC) or to both national classification and IPC | |

| | |
|---|---|
| **B. FIELDS SEARCHED** | |

Minimum documentation searched (classification system followed by classification symbols)

IPC: H04L H04W H04Q

Documentation searched other than minimum documentation to the extent that such documents are included in the fields searched

Electronic data base consulted during the international search (name of data base and, where practicable, search terms used)

CNTXT, DWPI, ENTXTC, CNKI, CJFD, IEEE: 序列, 集, 同步, 头, 报头, 字段, 长度, 相关, 频率, 偏移, 频偏, 旁瓣, 值, 超宽带, UWB, PPDU, 移位, 采样, sequence, set, sync, header, field, length, correlation, frequency, offset, value, shift, sample

**C. DOCUMENTS CONSIDERED TO BE RELEVANT**

| Category* | Citation of document, with indication, where appropriate, of the relevant passages | Relevant to claim No. |
|---|---|---|
| X | JIN, Yanliang et al. "a synchronization algorithm based on Kasami sequence in IEEE 802.15.6 IR-UWB Body Area Networks" *2017 IEEE International Conference on Electro Information Technology (EIT)*, 31 December 2017 (2017-12-31), abstract, and text, sections I to IV | 1, 12, 13, 24, 26-29 |
| A | JIN, Yanliang et al. "a synchronization algorithm based on Kasami sequence in IEEE 802.15.6 IR-UWB Body Area Networks" *2017 IEEE International Conference on Electro Information Technology (EIT)*, 31 December 2017 (2017-12-31), abstract, and text, sections I to IV | 2-11, 14-23, 25 |
| X | US 2020288396 A1 (LG ELECTRONICS INC.) 10 September 2020 (2020-09-10) abstract, and description, paragraphs 0020-0034 and 0343-0587, and figures 1-18 | 1, 12, 13, 24, 26-29 |
| A | US 2020288396 A1 (LG ELECTRONICS INC.) 10 September 2020 (2020-09-10) abstract, and description, paragraphs 0020-0034 and 0343-0587, and figures 1-18 | 2-11, 14-23, 25 |

| ☑ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 October 2023** | **24 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 542 909 A1**

**INTERNATIONAL SEARCH REPORT**

| | International application No. |
| --- | --- |
| | **PCT/CN2023/104587** |

### C. DOCUMENTS CONSIDERED TO BE RELEVANT

| Category* | Citation of document, with indication, where appropriate, of the relevant passages | Relevant to claim No. |
| --- | --- | --- |
| A | 邵堃 等 (SHAO, Kun et al.). "基于离散度分析的帧同步快速盲识别算法 (Fast Blind Recognition Algorithm of Frame Synchronization Based on Dispersion Analysis)" 信号处理 (*Journal of Signal Processing*), Vol. 36, No. 3, 31 March 2020 (2020-03-31), entire document | 1-29 |
| A | CN 111435934 A (NXP B.V.) 21 July 2020 (2020-07-21) entire document | 1-29 |
| A | CN 110226342 A (HUAWEI TECHNOLOGIES CO., LTD.) 10 September 2019 (2019-09-10) entire document | 1-29 |

**INTERNATIONAL SEARCH REPORT**
**Information on patent family members**

International application No.

**PCT/CN2023/104587**

| Patent document cited in search report | | | Publication date (day/month/year) | Patent family member(s) | | | Publication date (day/month/year) |
|---|---|---|---|---|---|---|---|
| US | 2020288396 | A1 | 10 September 2020 | WO | 2019050191 | A1 | 14 March 2019 |
| CN | 111435934 | A | 21 July 2020 | US | 2020228331 | A1 | 16 July 2020 |
| | | | | EP | 3681046 | A1 | 15 July 2020 |
| CN | 110226342 | A | 10 September 2019 | US | 2019349163 | A1 | 14 November 2019 |
| | | | | EP | 3567913 | A1 | 13 November 2019 |
| | | | | WO | 2018137222 | A1 | 02 August 2018 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210834563